Europäisches Patentamt

European Patent Office

Office européen des brevets

(19)

(11) **EP 0 764 584 A2**

(12) **EUROPÄISCHE PATENTANMELDUNG**

(43) Veröffentlichungstag:
26.03.1997  Patentblatt 1997/13

(51) Int. Cl.⁶: **B65B 65/02**

(21) Anmeldenummer: 96109481.0

(22) Anmeldetag: 13.06.1996

(84) Benannte Vertragsstaaten:
DE ES FR GB IT

(30) Priorität: 25.09.1995 DE 19535509
25.09.1995 DE 19535510
25.09.1995 DE 19535511
25.09.1995 DE 19535512
25.09.1995 DE 19535514
23.09.1995 DE 19535438
23.09.1995 DE 19535439
25.09.1995 DE 19535515

(71) Anmelder: Rovema Verpackungsmaschinen
GmbH
35463 Fernwald (DE)

(72) Erfinder:
• Kammler, Roman, Dr.
67547 Worms (DE)
• Kundt, Dieter
35315 Homberg/Ohm (DE)
• Junker, Bernd
35746 Sinn-Edingen (DE)
• Hofmann, Rudolf
35452 Heuchelheim OT Kinzenbach (DE)
• Keim, Dieter
35428 Langgöns (DE)
• Lohr, Herbert
35447 Reiskirchen (DE)
• Baur, Walter, Dr.
63584 Gründau (DE)

(54)     **Vorrichtung zur Verpackung**

(57)     Bei einer Vorrichtung 1 zur Verpackung mit einer Einrichtung 100 zur Wirkung gegen das zu verpackende Produkt 8, die Verpackung oder einen Teil der Verpackung ist ein elektromagnetischer Linearantrieb 63 mit einem beweglichen Teil 4 und einem antreibenden Teil 5 vorgesehen. Das bewegliche Teil 5 ist mit der Einrichtung 100 verbunden.

Der elektromagnetische Linearantrieb 63 erlaubt Beschleunigungen bis zum Zwangzigfachen der Erdbeschleunigung und dient der Realisierung extremer Verpackungsgeschwindigkeiten.

Fig. 8

EP 0 764 584 A2

# Beschreibung

Die Erfindung betrifft eine Vorrichtung zur Verpackung mit einer Einrichtung zur Wirkung gegen das zu verpackende Produkt, die Verpackung oder einen Teil der Verpackung.

Es sind Vorrichtungen zur Verpackung bekannt, die gegen das zu verpackende Produkt wirken, an denen ein zu verpackendes Produkt mittels eines elektromotorisch angetriebenen Transportbandes taktweise beschleunigt und derart einer Verpackungsmaschine zugeführt wird. Des weiteren sind als Vorrichtungen vertikale Schlauchbeutelmaschinen bekannt, bei denen das zu verpackende Produkt dadurch beschleunigt wird, daß es in einem Füllrohr dem freien Fall ausgesetzt wird. Als Einrichtung zur Führung des bewegten Produkts dienen beim Transportband das Transportband selbst bzw. Teile des Transportbandes und dient bei der vertikalen Schlauchbeutelmaschine das Füllrohr.

Es sind Vorrichtungen bekannt, an denen ein zu verpackendes Produkt mittels eines elektromotorisch angetriebenen Transportbandes einer Verpackungsmaschine zugeführt wird. Des weiteren sind als Vorrichtung vertikale Schlauchbeutelmaschinen bekannt, bei denen das zu verpackende Produkt dadurch bewegt wird, daß es in einem Füllrohr dem freien Fall ausgesetzt wird. Als Einrichtung zur Führung des bewegten Produkts dienen beim Transportband das Transportband selbst bzw. Teile des Transportbandes und dient bei der vertikalen Schlauchbeutelmaschine das Füllrohr.

Auch wird ein fließfähiges Produkt, wie z.B. Pulver oder Granulat von einem Vorratsgefäß der Volumendosierung zugeführt und in der Regel bodenseitig aus der Volumendosiereinrichtung portionsweise abgegeben. Die Abgabe kann z.B. in das Füllrohr einer vertikalen Schlauchbeutelmaschine erfolgen. Dann wird das Produkt portionsweise in Schlauchbeutel verpackt.

Vorrichtungen zur Verpackung, die gegen die Verpackung oder einen Teil davon wirken, sind ebenso hinlänglich bekannt. An Schlauchbeutelmaschinen werden die Beutelnähte mittels Verschließvorrichtungen verschweißt. Bei Kartonierern werden die Laschen von Faltschachteln umgelegt und miteinander verklebt. Als Antrieb für den Verschließmechanismus einer Verschließvorrichtung werden Elektromotore eingesetzt.

Vorrichtungen mit Trennvorrichtungen für Verpackungsmaterial sind ebenso bekannt. Es handelt sich hierbei zum Beispiel um elektromotorisch angetriebene Stechmesser oder Schneideinrichtungen zur Durchtrennung einer ebenen Folienbahn, zur Abtrennung eines fertigen Beutels von einer Folienbahn oder zum Ausstanzen eines Aufhängelochs aus dem Hüllmaterial eines Beutels. Derartige Einrichtungen kommen an Schlauchbeutelmaschinen zum Einsatz.

Bei bekannten Vorrichtungen zum Zuführen von Verpackungsmaterial ist die Einrichtung zum Mitnehmen des Verpackungsmaterials ein Folienabzug, ein Kartonzuschnittvereinzelner, ein Becherband, ein Sauggreifer oder ein Etikettenspender. Als Einrichtung zum Bewegen des mitgenommenen Verpackungsmaterials werden Elektromotoren eingesetzt.

Die bekannten Vorrichtungen haben den Nachteil, daß sie für die Beschleunigung des zu verpackenden Produkts, der Verpackung eines Teils der Verpackung, oder für die Behandlung von Verpackung oder Produkt für den Einsatz in Hochleistungsverpackungsmaschinen zu langsam ist. Zudem wären viele der bekannten mechanischen Verbindungen für die Übertragung extrem großer Beschleunigungen ungeeignet, da sie relativ große Massenträgheitsmomente haben. Und schließlich wären große Geschwindigkeiten, die aus großen Beschleunigungen resultieren, mit den bekannten Elektromotoren nicht in ausreichendem Maße verzögerbar.

Der Erfindung liegt die Aufgabe zu Grunde, eine Vorrichtung der eingangs beschriebenen Art derart auszugestalten, so daß einerseits extrem hohe Beschleunigungswerte und andererseits entsprechend hohe Verzögerungswerte der Vorrichtung erzielt werden können. Dabei sollen die mechanischen Verbindungen der Übertragung der hohen Beschleunigungs- und Verzögerungskräfte angepaßt werden.

Gelöst ist die Aufgabe gemäß dem kennzeichnenden Teil des Anspruchs 1. Danach ist ein elektromagnetischer Linearantrieb (Linearmotor) mit einem beweglichen Teil und einem das bewegliche Teil antreibendem Teil vorgesehen, und das bewegliche Teil ist mit der Einrichtung zur Wirkung gegen das zu verpackende Produkt, die Verpackung oder einen Teil der Verpackung verbunden.

Die erfindungsgemäße Vorrichtung hat den Vorteil, daß Beschleunigungs- und Verzögerungswerte bis zum Zwanzigfachen der Erdbeschleunigung realisiert werden können. Diese Beschleunigung erfährt das bewegliche Teil an einem elektromagnetischen Linearantrieb gegenüber einem antreibenden Teil des Linearantriebs bzw. ein angetriebenes Teil gegenüber dem Linearantrieb. Das bewegliche Teil bewegt die Einrichtung und diese wiederum wirkt auf das zu verpackende Produkt oder die Verpackung indirekt oder durch direkten Kontakt mit dem Produkt. In jedem Fall wird aber die Einrichtung vom Linearantrieb beschleunigt und die Einrichtung beschleunigt das Produkt, die Verpackung oder ein Werkzeug, welches auf das Produkt oder die Verpackung wirkt. Der Linearantrieb wird ortsgenau zum Beschleunigungszweck angesetzt und wieder zurückgestellt. Beim direkten Kontakt der Einrichtung mit dem Produkt entfällt eine träge mechanische Verbindung gänzlich, und die Bewegung ist somit ohne großes Massenträgsheitsmoment realisiert. Mit der erfindungsgemäßen Vorrichtung können Hochleistungsverpackungsmaschinen realisiert werden.

Weitere vorteilhafte Ausgestaltungen der erfindungsgemäßen Vorrichtung sind in den Ansprüchen 2 bis 37 näher beschrieben.

Ist das bewegliche Teil des elektromagnetischen Linearantriebs mit einem Stempel verbunden (Anspruch 2), so ist eine maximale Produktbeschleunigung erreichbar, da die zu beschleunigende Masse minimiert ist. Wirkt der Stempel indirekt über die Einrichtung zur Führung des bewegten Produkts auf das Produkt (Anspruch 3), so kann eine Gesamtheit von Produkten, die sich auf oder an der Einrichtung befinden, die Beschleunigung erfahren. Eine derartige Einrichtung kann ein Transportband sein. Das Transportband kann z.B. eine Reihe von offenen Leerbeuteln an eine Füllstation und weiter zu einer Beutelverschließstation transportieren. Der gesamte getaktete Transportvorgang kann hierbei mittels eines elektromagnetischen Linearantriebs erfolgen.

Eine Kombination zweier senkrecht zueinander verlaufender Beschleunigungen ist bei einer Kombination zweier elektromagnetischer Linearantriebe erreicht. Hierbei ist das antreibende Teil des einen Linearantriebs mit dem beweglichen Teil des anderen Linearantriebs verbunden, und die beweglichen Teile der Linearantriebe werden in Richtungen verschoben, die in einer Ebene und senkrecht zueinander verlaufen. Somit kann bei einer Auslenkung durch den einen Linearantrieb der andere Linearantrieb komplett um diesen Auslenkungsbetrag parallel verschoben werden. Die Gesamtheit der beiden Linearantriebe kann somit einen Stempel entlang eines durch die maximalen Verschiebungswege der Linearantriebe begrenzten, ansonsten beliebigen Weges verschoben werden, z.B. entlang eines Parallelogramms, einer Kreisbahn oder einer Ellipsenbahn.

Ist die Einrichtung zur Führung des bewegten Produkts das Füllrohr einer vertikalen Schlauchbeutelmaschine, so können dem freien Fall im Füllrohr preisgegebenes Füllgut, Füllgutportionen oder Beuteleinlagen in ihrer Bewegung nach unten zusätzlich zur Erdbeschleunigung weiter beschleunigt werden.

Es können Kartonzuschnitte, die als Einsatz in Beutel eingelegt werden, um den Beuteln eine verbesserte Stabilität oder Standfestigkeit zu geben, durch das Füllrohr einer Schlauchbeutelmaschine in die zu erzeugenden Beutel mittels eines Stempels eingeführt werden, wenn der Stempel von oben axial in das Füllrohr bewegbar ist, und direkt oberhalb des Füllrohres eine Ablegestation für einzelne Kartonzuschnitte vorgesehen ist. Die Kartonzuschnitte können vorgefaltet sein und durch den Widerstand des oberen Füllrohrendes umgefaltet werden.

Es ist möglich, daß der Stempel an einer Produkt zum freien Fall abgebenden Einrichtung vorgesehen ist, und daß der Stempel nach unten im vom Produkt durchfallenen Raum wirkt. Diese Einrichtung kann z.B. eine Klappe sein, die eine abgemessene Produktportion nach unten freigibt. Der Stempel eilt dann z.B. der fallenden Produktportion nach und beschleunigt sie weiter entlang eines Wegs nach unten. Der Stempel kann aber auch von oben in eine Dosiereinrichtung wirken und die in der Dosiereinrichtung bereitgestellte Produktportion aus dieser herausstoßen und bei bereits geöffneter Dosiereinrichtung die Produktportion weiter bis zum unteren Ende des Füllrohres bringen. Ist der Stempelquerschnitt dem lichten Querschnitt des Füllrohres passgenau und dicht angepaßt, so können auch Produktschwärme vollständig vom Stempel erfaßt werden.

Eine Alternative zu einem von oben in das Füllrohr eingeführten und wieder herausgezogenen Stempel ist ein Stempel, der radial in ein Füllrohr eingeführt und aus diesem wieder entfernt wird. Das Füllrohr ist kein Füllrohr einer herkömmlichen vertikalen Schlauchbeutelmaschine, da bei einem derartigen Füllrohr die Schlauchführung auf dem Füllrohr erfolgt. Das Füllrohr, in das der Stempel radial eingeführt werden kann, ist ein Füllrohr zur Befüllung vorgefertigter Behälter. Ein Linearantrieb ist parallel zum Füllrohr ausgerichtet, und der andere Linearantrieb ist radial zum Füllrohr ausgerichtet. Das Füllrohr weist einen axial verlaufenden Schlitz auf. An den Enden des Schlitzes ist jeweils eine tangentiale Aussparung im Füllrohr vorgesehen. Durch die obere Aussparung wird der Stempel in das Füllrohr eingeführt, beschleunigt dann das Produkt nach unten, wobei eine Stange, mit welcher der Stempel mit dem beweglichen Teil des Linearantriebs verbunden ist, im Schlitz nach unten bewegt wird, und schließlich wird der Stempel durch die untere Aussparung wieder aus dem Füllrohr entfernt. Eine diesbezügliche Realisierung an einer vertikalen Schlauchbeutelmaschine wäre möglich, wenn unterhalb der unteren Aussparung die Formschulter für die Schlauchbeutelformung vorgesehen wäre. Ist der Stempel als Sieb ausgestaltet, so wird ein Luftstau unterhalb des Stempels vermieden und die Luft kann durch die Sieböffnung nach oben ausströmen.

Ist als Einrichtung zur Führung des bewegten Produkts die Oberfläche eines horizontal verlaufenden Transportbandes vorgesehen, ist der Stempel in horizontaler Richtung quer zum Transportband vorgesehen, und wirkt der Stempel in Richtung einer vertikal ausgerichteten Begrenzung des Transportbandes, so kann z.B. bei stillstehendem Transportband jeweils ein Beute in eine Schachtel geschoben werden, wenn die Schachteln an der Begrenzung anlegen, und sich die Beutel jeweils vor einer Öffnung einer Schachtel befinden. Ein derartiger Beuteleinschub kann auch bei einem kontinuierlich bewegten Förderband erfolgen. Da der Beuteleinschub extrem schnell abläuft, ist hierbei ein ortsfester antreibender Teil des Linearantriebs möglich. Ist die Geschwindigkeit des Förderbandes relativ groß, so kann der die Beutel einschiebende Linearantrieb auf einem zweiten Linearantrieb befestigt werden, wobei der zweite Linearantrieb stets den ersten Linearantrieb parallel zur Transporteinrichtung und in Transportrichtung eine gewisse Strecke verschiebt und wieder zurückstellt. Während einer Verschiebung des ersten Linearantriebs in Transportrichtung erfolgt stets ein Beuteleinschub. Nach einer Zurückstellung wird der nächste Beutel eingeschoben.

Der Stempel kann auch fehlerhafte Produkte von einem Transportband schieben. Die fehlerhaften Produkte werden von einem Sensor erkannt. Die Meßwerte des Sensors dienen sodann der Ansteuerung des Linearantriebs, der den Stempel auslenkt.

Ist ein in horizontaler Richtung verschiebbarer Stempel in eine Produktfallstrecke bewegbar, und ist an der Produktfallstrecke ein Sensor zur Erkennung von fehlerhaftem Produkt vorgesehen, so können fehlerhafte Produkte im freien Fall erkannt und aus dem Produktstrom herausgeworfen werden.

Der Stempel kann auch dazu genutzt werden, Prospekte oder andere stabile Beigaben in Faltschachteln einzuschießen. Dazu ist der Stempel als Kopf eines Prospekteinschießers ausgestaltet und quer zum Transportband und gegen eine Prospektablegestelle bewegbar.

Ist das bewegliche Teil mit einem Verschließmechanismus verbunden (Anspruch 6), so können Verschließvorgänge extrem schnell realisiert werden.

Ist der Verschließmechanismus eine Querbackenverschließeinrichtung mit zwei gegeneinander bewegbaren Querbacken einer vertikalen Schlauchbeutelmaschine (Anspruch 7), so ist eine extrem schnelle Backenbewegung für die Kopf- und die Bodennaherzeugung realisierbar. Die genaue Verschiebungsstrecke ist zudem von Vorteil, da die Querbacken einerseits passgenau in eine Verschließstellung gestellt werden können, andererseits die Querbacken noch andere Funktionen mittels an ihnen befestigter Einrichtungen ausüben können. Die beiden Querbacken können mittels eines einfachen Verschließmechanismus gegeneinander bewegt werden, wenn die eine Querbacke mit dem beweglichen Teil und die andere Querbacke mit dem antreibenden Teil des elektromagnetischen Linearantriebs verbunden ist. Der Verschließmechanismus besteht dabei lediglich aus den mechanischen Verbindungen zwischen dem Linearantrieb und den Querbacken.

Lediglich ein elektromagnetischer Linearantrieb ist ausreichend, um mehrere Bewegungen in gleiche oder unterschiedliche Richtungen synchron zueinander ablaufen zu lassen, wenn die Bewegungen über Kolben einer Druckübertragungseinrichtung übertragen werden. Eine Querschweißeinrichtung kann dabei derart realisiert werden, daß das bewegliche Teil des elektromagnetischen Linearantriebs mit einem in der Druckübertragungseinrichtung gleitendem Kolben verbunden ist, daß jede Querbacke mit jeweils einem Kolben verbunden ist, und daß die Kolben in die Druckübertragungseinrichtung ragen. Das Medium im Innern der Druckübertragungseinrichtung überträgt den vom Linearantrieb ausgeübten Druck über die Kolben auf die Querbacken. Enthält die Druckübertragungseinrichtung eine Flüssigkeit, so geschieht die Druckübertragung ungedämpft, enthält sie ein Gas, so geschieht die Druckübertragung gedämpft.

Es können mit einer als Quersiegelstation mit Querbacken ausgestalteten Verschließvorrichtung sehr schnell Seitenfaltbeutel erzeugt werden, wenn gemäß Anspruch 8 an der Querbackenverschließstation zwei Seitenfaltenstecher vorgesehen sind, und der Antrieb für die Seitenfaltenstecher mindestens einen elektromagnetischen Linearantrieb enthält. Die Seitenfaltenstecher können mittels eines gemeinsamen Linearantriebs oder mittels separater Linearantriebe angetrieben werden. Die Seitenfaltenstecher legen die Seitenfalten in das Beutelmaterial ein bevor eine Querverschweißung erfolgt.

Die Umlegung einer Kopfnaht oder einer Bodennaht, einer sogenannten Fahne eines Schlauchbeutels, passiert schnell und zuverlässig, wenn gemäß Anspruch 9 das bewegliche Teil des elektromagnetischen Linearantriebs als Beutelfahnenumleger ausgestaltet ist, und ein Becherband zur Zuführung von Beuteln mit endseitiger Fahne an den Beutelfahnenumleger vorgesehen ist. Die Stabilität der Beutel während der Fahnenumlegung ist durch die Ausgestaltung des Transportbandes als Becherband gewährleistet.

Eine Bodennahtansiegelung an Schlauchbeuteln ist bei einer Ausgestaltung einer Verschließvorrichtung nach Anspruch 10 möglich. Hierbei ist das bewegliche Teil des elektromagnetischen Linearantriebs mit einem Stempel verbunden, der Stempel ist vertikal in einem Füllrohr einer vertikalen Schlauchbeutelmaschine verschiebbar, und unterhalb des Füllrohres sind Querbacken vorgesehen, die einen mechanischen Widerstand gegen den Stempel bilden. Der Stempel drückt das verschweißte Schlauchende gegen die Querbacken, so daß dadurch die Bodennahtansiegelung erfolgt. Infolge der extrem großen Geschwindigkeit bei der Zuführung und Entfernung des Stempels durch das Füllrohr wird der Füllvorgang kaum beeinflußt.

Die Laschen von offenen Faltschachteln können umgebogen und in beleimten Zustand geschlossen und somit verleimt werden, wenn das bewegliche Teil des elektromagnetischen Linearantriebs mit einem Laschenschließer verbunden ist, und ein Transportband zur Zuführung von offenen Faltschachteln zum Laschenschließer vorgesehen ist (Anspruch 11). Je nach Anordnung des Laschenschließers ist ein Decklaschenschließer oder ein Seitenlaschenschließer erreicht. Für den Einsatz an flach liegenden Faltschachteln eignen sich besonders ein vertikal gegen das Transportband wirkender Decklaschenschließer und ein parallel zur Oberfläche des Transportbandes wirkender Seitenfaltenschließer.

Insbesondere Zuschnitte für Deckel von Schachteln, aber auch andere Verpackungsteile können zwecks ihres Verschließens bewegt werden, wenn das bewegliche Teil eines elektromagnetischen Linearantriebs mit einem Greifer verbunden ist.

Die Bewegung eines Greifers, einer Quersiegelbacke oder eines sonstigen Bauteils ist frei bestimmbar, wenn gemäß Anspruch 12 das bewegliche Teil eines elektromagnetischen Linearantriebs mit dem antreibenden Teil eines weiteren Linearantriebs verbunden ist, und die beweglichen Teile der Linearantriebe in Richtungen verschiebbar sind, die in einer Ebene und senkrecht zueinander verlaufen. Durch diese Kombination zweier Linearantriebe können senkrecht zueinander verlaufende Beschleunigungen oder Bewegungen miteinander addiert werden. Bei einer Auslenkung durch den einen Linearantrieb wird der andere Linearantrieb komplett um diesen Auslenkungsbetrag parallel verschoben. Die Gesamtheit der beiden Linearantriebe kann somit einen Verschließmechanismus entlang eines durch die maximalen Verschiebungswege der Linearantriebe begrenzten und ansonsten beliebigen Weges verschoben werden. Für eine Querbacke ist z.B. eine Bewegung entlang eines Parallelogramms, einer Kreisbahn oder einer Ellipsenbahn von Interesse.

Die schnelle Beleimung und Verpressung der beleimten Laschen eines Deckels gegen eine Schachtel ist bei einer Ausgestaltung einer Verschließvorrichtung nach Anspruch 13 erreicht. Danach ist mindestens eine Leimauftragsdüse entlang eines Transportbandes vorgesehen, ist der Leimauftragsdüse in Transportrichtung nachgeordnet eine Verdecklungsstation vorgesehen, und ist an der Verdecklungsstation mindestens ein vertikal beweglicher, von einem elektromagnetischen Linearantrieb angetriebener Laschenumleger vorgesehen. Diese Verschließvorrichtung verschließt oben offene Schachteln mit einem Deckel. Der Deckel wird aus einem Zuschnitt auf der Schachtel geformt. Der Deckel wird mit der Schachtel verleimt.

Als Einrichtung ist eine Trenneinrichtung vorzusehen (Anspruch 14), daß die Trenneinrichtung bis zum Zwanzigfachen der Erdbeschleunigung beschleunigt werden kann. Diese Beschleunigung erfährt das bewegliche Teil an einem elektromagnetischen Linearantrieb gegenüber einem antreibenden Teil des Linearantriebs bzw. ein angetriebenes Teil gegenüber dem Linearantrieb. Das bewegliche Teil bewegt die Trenneinrichtung. Die Trenneinrichtung und ihre Mechanik können einfach ausgestaltet sein. Die Trenneinrichtung wird ortsgenau und zeitgenau bewegt. Eine Durchtrennung des Verpackungsmaterials erfolgt so schnell, daß sie auch bei bewegtem Verpackungsmaterial erfolgen kann. Mit der erfindungsgemäßen Trennvorrichtung können Hochleistungsverpackungsmaschinen realisiert werden.

Ist die Trenneinrichtung ein tangential zu einer Folienbahn beweglicher Bahnschneider, und ist der Bahnschneider entlang einer geraden Führung geführt (Anspruch 15), so kann eine Folienbahn geradlinig quer zu ihrer Transporteinrichtung durchtrennt werden. Da die Durchtrennung extrem schnell erfolgt, kann sie auch bei bewegter Folienbahn erfolgen. Der Abschnitt erfolgt infolge der hohen Trenngeschwindigkeit auch bei bewegter Folienbahn quasi senkrecht zur Transporteinrichtung der Folienbahn. Eine schnelle Bahntrennung und das Anheften einer neuen Folienbahn an die Trennstelle der alten Folienbahn ist insbesondere an der Folienzuführung einer Schlauchbeutelmaschine von Bedeutung.

Ist parallel zu der Führung eine Knickkante zum Abknicken der Folienbahn vorgesehen, und ist eine Klinge des Bahnschneiders entlang der Knickkante verschiebbar, so wird an der Knickkante die Folienbahn etwas gespannt, und die Folienbahn kann von der Klinge dadurch sicherer geradlinig durchtrennt werden.

Erzeugte, befüllte und verschlossene Beutel können an einer Schlauchbeutelmaschine von der Folienbahn extrem schnell abgetrennt werden, wenn analog Anspruch 16 die Trenneinrichtung ein Stechmesser ist, und das Stechmesser in einer Querbacke einer Schlauchbeutelmaschine in einer Aussparung verschiebbar ist.

Zur Ausstanzung eines Lochs aus einer Kopfnaht eines Schlauchbeutels kann die Trenneinrichtung als Lochstanze (Anspruch 17) in einer Querbacke einer Schlauchbeutelmaschine ausgestaltet sein. Dazu sind an der Querbacke eine Kopfnaht und eine Bodennaht erzeugende Schweißfläche vorgesehen. Die Lochstanze ist senkrecht zur Schweißfläche für die Kopfnaht und normal durch diese mittels einer Führung geführt. Die Führung kann eine Aussparung sein, durch den ein als Bolzen ausgestaltetes, stanzendes Teil bewegt wird. Die Lochstanze sollte zudem mittig bezüglich der Länge der Querbacke angeordnet sein. Damit ist erreicht, daß bei mittig zwischen den Querbacken vertaufendem Folienschlauch das Loch jeweils mittig entlang der Kopfnaht angeordnet wird.

Ist ein Teil des elektromagnetischen Linearantriebs starr über eine Verbindung mit einem Träger einer Querbacke verbunden, und ist das andere Teil gegenüber dem ersten Teil beweglich und starr mit der Lochstanze verbunden, so können die Querbacken unabhängig vom Betrieb des Linearantriebs aufeinander zu bzw. voneinander weg bewegt werden.

Der Eingriff einer Trenneinrichtung in das Verpackungsmaterial ist genauer, wenn an der Trenneinrichtung eine Zahnung vorgesehen ist, und die Zahnung in Trennrichtung ausgerichtet ist. Eine Folie wird von der Zahnung ergriffen und für den Trennvorgang festgehalten.

Ist die Einrichtung eine Einrichtung zum Mitnehmen von Verpackungsmaterial (Anspruch 18), so kann das Verpackungsmaterial sehr schnell bewegt werden.

Eine Kombination zweier senkrecht zueinander vertaufender Beschleunigungen ist bei einer Kombination zweier elektromagnetischer Linearantriebe gemäß Anspruch 19 erreicht. Hierbei ist das antreibende Teil des einen Linearantriebs mit dem beweglichen Teil des anderen Linearantriebs verbunden, und die beweglichen Teile der Linearantriebe werden in Richtungen verschoben, die in einer Ebene und senkrecht zueinander verlaufen. Somit kann bei einer Auslenkung durch den einen Linearantrieb der andere Linearantrieb komplett um diesen Auslenkungsbetrag parallel verschoben werden. Die Gesamtheit der beiden Linearantriebe kann somit eine Einrichtung zum Mitnehmen des Verpackungsmaterials entlang eines durch die maximalen Verschiebungswege der Linearantriebe begrenzten, ansonsten beliebigen Weges verschoben werden.

Als Einrichtung zum Mitnehmen des Verpackungsmaterials kann gemäß Anspruch 20 ein Transportband vorgesehen sein, wobei am Transportband Mitnahmeflächen vorgesehen sind, und wobei das bewegliche Teil des Linearantriebs gegen eine Mitnahmefläche und in Transportrichtung des Transportbandes wirkt.

Das Transportband kann z. B. umlaufend sein und eine Reihe von offenen Leerbeuteln an eine Füllstation und weiter zu einer Beutelverschließstation transportieren. Der gesamte getaktete Transportvorgang kann hierbei mittels Linearantrieb erfolgen. Ist zudem der Linearantrieb, der das Transportband schrittweise vorwärts bewegt, über eine elektrische Leitung mit einem Rüttelfrequenzgeber verbunden (Anspruch 21), so kann das bewegliche Teil des Linearantriebs stotternd vorwärts bewegt werden. Dies hat den Vorteil, daß z.B. transportierte Beutel mit Produkt, welches verdichtbar ist, derart gerüttelt werden können, um eine höhere Produktdichte zu erzielen.

Ist die Einrichtung zum Mitnehmen des Verpackungsmaterials ein Folienabzug einer vertikalen Schlauchbeutelmaschine, der gegen das Füllrohr der Schlauchbeutelmaschine wirkt, und wobei das bewegliche Teil des Linearantriebs parallel zur Mittelachse des Füllrohrs bewegbar ist (Anspruch 22), so kann der Folienschlauch und mit diesem die Folienbahn an der Schlauchbeutelmaschine extrem schnell abgezogen werden. Der Folientransport erfolgt hierbei getaktet. Die Einrichtung zum Mitnehmen ergreift den Folienschlauch, sodann bewegt der Linearantrieb diese Einrichtung in Folientransportrichtung, worauf diese Einrichtung den Folienschlauch wieder freigibt, und der Linearantrieb diese Einrichtung zurückstellt. Bei einer (wie bereits oben beschrieben) Kombination von zwei senkrecht zueinander antreibenden Linearantrieben kann das Greifen reibschlüssig durch Anpressen der Einrichtung gegen das Füllrohr und damit gegen den Folienschlauch auf dem Füllrohr erfolgen, wenn der zweite Linearantrieb radial gegen das Füllrohr wirkt. Bei dieser Version des Folienabzugs und auch bei der vorgenannten Version des Folienabzugs ist das Greifen und wieder Loslassen des Folienschlauchs in vorteilhafter Weise durchführbar, wenn die Einrichtung zum Mitnehmen des Verpackungsmaterials eine Ansaugdüse einer Vakuumpumpe ist. Die Folie wird dann mittels Unterdruck ergriffen und kann z.B. mittels Atmosphärendruck oder sogar Überdruck wieder freigegeben werden. Hierzu dient eine Klappe, die Luft mit Atmosphärendruck bzw. Überdruck oder wahlweise Luft mit Unterdruck der Ansaugdüse zuführt.

Kartonzuschnitte können bei einer Ausgestaltung der erfindungsmäßen Vorrichtung nach Anspruch 23 vereinzelt werden. Danach ist als Einrichtung zum Mitnehmen des Verpackungsmaterials die Spitze eines Zuschnittvereinzelners vorgesehen, wobei die Spitze mit dem beweglichen Teil mechanisch starr verbunden ist, und die Spitze gegen einen Stapel von ebenen Kartonzuschnitten beweglich ist. Der Stapel wird z.B. in einem Magazin gehalten. Bei jeder Vorwärtsbewegung des beweglichen Teils des elektromagnetischen Linearantriebs stößt die Spitze einen Kartonzuschnitt aus dem Magazin heraus.

Ist das bewegliche Teil des Linearantriebs identisch mit dessen antreibendem Teil, so kann bei ortsfestem Linearantrieb ein bewegliches Maschinenbauteil, z.B. eine Stange, relativ zum Linearantrieb bewegt werden. Der gesamte Linearantrieb kann aber auch gegenüber einer Führung verschoben werden. Als Führung kann hierbei z.B. eine ortsfeste Stange dienen. Wird eine Vielzahl an beweglichen und antreibenden Teilen, d.h. eine Vielzahl von Linearantrieben, entlang einer ortsfesten Führung verschoben, so entsteht eine extrem schnelle Transporteinrichtung mit der Funktion eines Becherbandes. Haben die antreibenden Teile bzw. Linearantriebe zudem jeweils gleichen Abstand zueinander, so wird mit jedem Arbeitstakt ein Linearantrieb ortsgenau einer nächsten Bearbeitungsstation zugeführt. Auf dem beweglichen und antreibenden Teil bzw. auf dem verschiebbaren Linearantrieb kann eine Plattform zur Aufnahme des zu transportierenden Verpackungsmaterials vorgesehen sein. Quer zur Bewegungsrichtung und senkrecht zur Plattform sind an der Plattform Stützen vorgesehen, um bei dem extrem schnellen Abbremsen und Beschleunigen zu verhindern, daß Verpackungsmaterialien von den Plattformen fallen.

Ist als Einrichtung zum Mitnehmen des Verpackungsmaterials ein mit dem beweglichen Teil verbundener Stempel mit einer Ansaugdüse vorgesehen, wobei der Stempel gegen einen Formschacht und in den Formschacht hinein bewegbar ist, so kann extrem schnell eine Schachtelformung aus einem flachen Zuschnitt erfolgen, indem der Stempel den Zuschnitt durch den Formschacht drückt. Ist der Zuschnitt bereits mit Leim versehen, so wird derart eine verleimte Schachtel erreicht. Die Ansaugdüse am Stempel dient in bereits zuvor beschriebener Weise dazu, jeweils einen Zuschnitt zu greifen, am Stempel festzuhalten und nach der Schachtelformung wieder freizugeben. Der Stempel kann mitsamt des Linearantriebs mittels eines zweiten Linearantriebs zwischen dem Formschacht und einem Magazin für Zuschnitte zwecks Heranführung von Zuschnitten an den Formschacht verschoben werden.

Etiketten können mitgenommen werden, wenn gemäß Anspruch 24 als Vorrichtung zum Mitnehmen des Verpackungsmaterials ein Etikettenmitnehmer vorgesehen ist. Ist der Etikettenmitnehmer etikettenseitig linienförmig ausgestaltet, so können Etiketten von der Linienform einzeln ergriffen und aus einem Magazin ausgebracht werden. Ist der Etikettenmitnehmer dagegen etikettenseitig eben, und mit einer Anlagefläche für Etiketten ausgestaltet, so können die Etiketten mit der Anlagefläche ergriffen und parallel verschoben werden. Durch eine Ansaugdüse einer Vakuumpumpe im Etikettenmitnehmer, wobei die Ansaugdüse in die Anlagefläche mündet, kann ein Etikett an der Anlagefläche mittels Unterdruck festgehalten werden, um z.B. an einer Leimauftragsdüse vorbeibewegt zu werden, und schließlich gegen einen zu verpackenden Gegenstand gedrückt zu werden.

Ist als Einrichtung zum Mitnehmen des Verpak-

kungsmaterials eine horizontal verschiebbare Platte vorgesehen, wobei über der Platte eine Produktabgabestelle vorgesehen ist, so können von oben gespendete Produkte in einen auf der Platte befindlichen Sammelbehälter gespendet werden. Dabei verfährt der Linearantrieb die Platte bei jedem ortsfest abgeworfenen Produkt um eine Produktbreite, so daß eine Reihe von Produkt im Sammelbehälter erzeugt wird. Ist die Platte mitsamt dem Linearantrieb mittels eines weiteren Linearantriebs horizontal und senkrecht zur erzeugten Reihe verschiebbar, so können mehrere Reihen parallel zueinander im Sammelbehälter erzeugt werden. Bei liegenden, flachen Produkten, z.B. Schlauchbeuteln können diese in geschuppter Weise im Sammelbehälter abgelegt werden, wenn bei der Erzeugung einer Reihe von Produkten der Sammelbehälter um weniger als eine Produktbreite pro Produkt verschoben wird. Analoges gilt für die Erzeugung einer geschuppten Produktreihe auf einem Transportband.

Ist als Einrichtung eine Einrichtung zur Führung des zu verpackenden Produkts vorgesehen (Anspruch 25), so kann das Produkt extrem schnell dem Verpackungsprozess zugeführt werden.

Ist das bewegliche Teil mit einem Stempel verbunden, und wirkt der Stempel direkt gegen das Produkt (Anspruch 26), so kann das Produkt entlang der Einrichtung zur Führung verschoben werden, ohne daß für diese Bewegung aufwendige Bauelemente realisiert werden müssen. Es genügt hierbei eine einfache starre Verbindung zwischen dem Stempel und dem beweglichen Teil.

Ist die Einrichtung zur Führung des bewegten Produkts ein Transportband (Anspruch 27), so kann die Zuführung eines Produkts zu einer Verpackungsstation und die Führung des Produkts durch das Transportband mittels dieser Einrichtung erfolgen.

Eine Umleitung von bewegtem Produkt in eine um 90 Grad geänderte Richtung wird mittels einer Transporteinrichtung erreicht. Danach sind zwei rechtwinklig zueinander angeordnete Transportbänder vorgesehen, wobei das eine Transportband dem anderen Transportband zufördert, und ein Stempel quer zum zufördernden Transportband und auf das abfördernde Transportband zu bewegbar ist. Auf dem zufördernden Transportband ankommendes Produkt wird vom Stempel auf das abfördernde Transportband geschoben. Infolge des extrem schnellen Verschiebens kann dieses auf bei kontinuierlich bewegtem Förderband erfolgen.

Ein sogenannter Linienverteiler ist bei einer Ausgestaltung der Transporteinrichtung gemäß Anspruch 28 erreicht. Hierbei ist der Stempel quer zum Transportband und einer Reihe von parallel zueinander verlaufenden weiteren Transportbändern bewegbar. Der Stempel verschiebt Produkt von einem Förderband auf ein anderes Förderband. Es kann sämtliches Produkt oder nur eine gewisse Teilmenge, z.B. jedes zweite oder dritte Produkt, auf ein Förderband oder mehrere Förderbänder verschoben werden.

Ist der Stempel parallel zum Förderband und am Förderband bewegbar und relativ zum Förderband seiten- oder höhenverstellbar, so kann ein Produktsynchronisator realisiert werden. Der Stempel wird dabei gegen jeweils ein einzelnes Produkt einer Reihe von Produkten, bei denen kein konstanter Produktabstand eingehalten ist, bewegt, und schiebt das Produkt auf stets gleichen Produktabstand gegeneinander oder voneinander weg. Die zu korrigierende Position wird mittels eines Sensors zur Erkennung der Positionen der Produkte erkannt. Nach einem Verschiebevorgang wird der Stempel durch eine Seiten- oder Höhenverstellung vom verschobenen Produkt genommen und in eine Position für das nächste Verschieben gesetzt.

In einen vertikal ausgerichteten Füllschacht abgeworfene Produkte können auf einen höhenverstellbaren Stempel und stets auf die gleiche Höhe abgeworfen werden, wenn analog Anspruch 29 der Stempel im Füllschacht höhenverstellbar ist, eine Höhenmeßeinrichtung zur Messung der Füllhöhe im Füllschacht vorgesehen ist, und eine Produktzuführeinrichtung oberhalb des Füllschachtes und am Füllschacht mündet. Die Höhenmeßeinrichtung, z.B. ein Infrarot- oder Ultraschallsensor, mißt die Höhe des Produkts im Füllschacht und dient der Verschiebung des Stempels um jeweils eine Produktdicke nach unten nach jedem in den Füllschacht abgeworfenen Produkt.

Ist als Einrichtung zur Führung des bewegten Produkts eine Förderrinne vorgesehen, und ist das bewegliche Teil senkrecht zur Förderrichtung bewegbar und mit der Einrichtung zur Führung des bewegten Produkts verbunden, so kann die Förderrinne vom elektromagnetischen Linearantrieb gerüttelt werden. Die Rüttelfrequenz ist bei vorgegebener Auslenkung relativ hoch, so daß ein besonders konstanter Produktstrom in der Förderrinne entsteht.

Insbesondere große Produktteile können durch ein vertikales Füllrohr, insbesondere einer vertikalen Schlauchbeutelmaschine frei fallen, wenn während des Falls der Querschnitt des Füllrohrs erweitert ist. Zur korrekten Beutelerzeugung muß aber während der Beutelverschweißung, währenddessen kein Produkt fällt, der Querschnitt wieder reduziert werden. Eine derartige Querschnittsverstellung ist dadurch erreicht, daß das Füllrohr in vertikaler Richtung zweigeteilt ist, und daß zumindest ein Füllrohrteil der beiden Füllrohrteile horizontal beweglich und mit einem horizontal beweglichen Teil eines elektromagnetischen Linearantriebs verbunden ist. Unmittelbar vor dem freien Fall werden die Füllrohrteile voneinander wegbewegt und direkt danach wieder zusammengeführt.

Ist das bewegliche Teil gleich dem antreibenden Teil, ist als Einrichtung zur Führung eine umlaufende Bahn vorgesehen, und ist der obere Bereich des beweglichen Teils als Plattform ausgestaltet, so sind umlaufende Transportwägen realisiert. Die Transportwägen schweben auf der Bahn und können auf ihrer Plattform Produkte transportieren.

Der Antrieb eines umlaufenden Transportbandes kann auf unterschiedliche Art und Weise realisiert werden. Zum Beispiel läuft das Transportband um zwei Räder, wobei ein Rad über ein am Radrand vorgesehenes Gelenk und einen Gelenkmechanismus mit dem beweglichen Teil verbunden ist. Das antreibende Teil treibt das bewegliche Teil, dieses den Gelenkmechanismus und dieser das Rad und somit das Förderband an. Ein geringerer technischer Aufwand ist beim Antrieb eines Förderbandes nach notwendig, ist das bewegliche Teil ein Teil eines umlaufenden Transportbandes. Das antreibende Teil ist ortsfest und treibt das Transportband direkt und linear an.

Ein Schuppband zur Erzeugung einer schuppenartig bzw. dachziegelartig angeordneten Produktreihe ist bei einer Transportvorrichtung realisierbar. Hier ist als Einrichtung zur Führung des bewegten Produkts ein umlaufendes Transportband vorgesehen. Oberhalb des Transportbandes befindet sich ein weiteres umlaufendes Transportband. Das obere Transportband gibt an einer Übergabestelle Produkt auf das untere Transportband. Dadurch, daß die Umlaufgeschwindigkeit des oberen Transportbandes größer als die Umlaufgeschwindigkeit des unteren Transportbandes ist, ist der Produktabstand auf dem unteren Transportband kleiner, und es kommt bei einem entsprechenden Betrieb zu einer Schuppung der Produkte auf dem unteren Förderband.

Zur Verhinderung einer Tropfenform eines Beutels kann ein Beutel mittels eines Stempels gegen einer Wandung gehalten und derart entlang der Wandung gleitend bewegt werden, wenn das bewegliche Teil parallel zur Wandung und entlang einer Führung verschiebbar ist und einen gegen die Wandung gerichteten Stempel aufweist. Das bewegliche Teil ist hierbei gleichzeitig das antreibende Teil und treibt den Linearantrieb gegenüber der Führung an. Zwischen dem Stempel und der Wandung verbleibt der eingeklemmte Beutel in flacher Form. Diese flache Form ist bzgl. der transportierten Beutel konstant, wenn quer zur Verschieberichtung am beweglichen Teil eine Druckeinrichtung vorgesehen ist, und die Druckeinrichtung in Richtung der Wandung gegen die Wandung wirkt. Somit übt der Stempel stets einen konstanten Druck auf einen eingeklemmten Beutel aus. Zur Realisierung eines schnellen Druckaufbaus bzw. einen schnellen Druckabfalls zur Aufnahme bzw. Freigabe eines Beutels kann die Druckeinrichtung ein elektromagnetischer Linearantrieb sein. Ist die Führung umlaufend, so ist eine umlaufende Zuführung eines beweglichen Teils an einen nachfolgenden Beutel ohne eine Beschleunigung und ohne eine Abbremsung des beweglichen Teils möglich. Entlang der Wandung bewegte Beutel können direkt in einen Sammelbehälter gespendet werden, wenn das Ende der Wandung an einer Zuführeinrichtung für Sammelbehälter vorgesehen ist. Mit jedem ankommenden Beutel wird ein Sammelbehälter um eine Beutelbreite weiterbewegt, so daß die Beutel nebeneinander im Sammelbehälter angeordnet werden.

Ist als Einrichtung zur Führung des bewegten Produkts das Ende eines Folienschlauches an einer vertikalen Schlauchbeutelmaschine vorgesehen, ist ein Produktabstreifer mit dem beweglichen Teil verbunden, und verläuft die Bewegungsrichtung des Produktabstreifers zumindest teilweise oder entlang einer Geschwindigkeitskomponente am zusammengedrückten Folienschlauch entlang nach unten (Anspruch 30), so können Produkte während ihres freien Falls mit dem Produktabstreifer zusätzlich nach unten beschleunigt werden. Der Produktabstreifer drückt hinter dem fallenden Produkt den Folienschlauch zumindest teilweise zusammen und folgt und beschleunigt derart das Produkt. Dabei wird das Produkt auch aus den quer zu verschweißenden Bereichen des Folienschlauchs gestreift.

Ist als Einrichtung eine Volumendosierung mit einem Verschiebemechanismus vorgesehen (Anspruch 31), so kann durch Verschiebung des Verschiebemechanismusses eine schnelle Volumendosierung erfolgen.

Enthält die Volumendosiereinrichtung mindestens eine Dosierkammer, die unterhalb mindestens eines Auslasses des Vorratsgefäßes mittels eines Verschiebemechanismusses verschiebbar ist, und ist die Dosierkammer in Verschieberichtung durch mindestens einen verschiebbaren Verschließkörper begrenzt, wobei der Verschließkörper verschiebbar den Auslaß verschließt oder freigibt (Anspruch 32), so kann Produkt aus dem Vorratsgefäß bei einer Stellung der Verschiebeeinrichtung, bei der die Dosierkammer mit dem Auslaß verbunden ist, in die Dosierkammer fließen und kann bei einer Verschiebung des Verschiebemechanismusses durch einen in Verschieberichtung zum Auslaß versetzten Durchlaß eines unter dem Verschiebemechanismus vorgesehen Verschlußteils nach unten gespendet werden. Bei zwei Dosierkammern kann derart eine Dosierkammer gefüllt werden, während die andere Dosierkammer am Durchlaß geleert wird.

Bilden die Dosierkammern und der Verschließkörper ein Bauteil, so können die Dosierkammerfüllung und -entleerung lediglich durch die Verschiebung dieses Bauteils erfolgen. Bilden die Dosierkammern und ein Verschlußteil übereinander angeordnete Bauteile, wobei das Bauteil mit den Dosierkammern oberhalb des Bauteils des Verschließteils angeordnet ist, so muß lediglich das obere Bauteil für eine Produktabgabe verschoben werden, wobei die Massenträgheit des Verschließkörpers für die extrem schnelle Verschiebung irrelevant ist.

Für die Verschiebung eines Verschiebemechanismusses mitsamt darin angeordneten Dosierkammern ist ein geradliniger oder ein kreisförmiger Verschiebeweg sinnvoll. Eine geradlinige Verschiebung ist in einfacher Weise ohne großes Massenträgheitsmoment realisierbar, wenn das bewegliche Teil des elektromagnetischen Linearantriebs lediglich starr mit dem Verschiebemechanismus verbunden ist. Ein als drehbares Rondell ausgestalteter Verschiebemechanismus kann mittels eines beweglichen Teils um jeweils einen bestimmten, eher spitzen Winkel gedreht werden, wenn radial nach außen weisende Nocken vorgesehen sind, und das bewegliche Teil gegen einen Nocken stößt. Dabei kann z.B. ein Einrastmechanismus dafür sorgen, daß ein bewegtes Rondell stets nach einem festgelegten Winkel in einer Haltposition einrastet.

Aus dem Durchlaß oder direkt aus einer Dosierkammer gespendetes Produkt kann direkt in einen zu fertigenden Schlauchbeutel gespendet werden, wenn unterhalb des Verschiebemechanismusses mindestens ein vertikales Füllrohr einer Schlauchbeutelmaschine vorgesehen ist. Es können auch zwei parallel zueinander angeordnete Füllrohre einer sogenannten Twinmaschine oder zweier oder noch mehr separater Verpackungsmaschinen vorgesehen sein. Infolge einer extrem schnellen, abwechselnden Produktabgabe in mehrere Füllrohre kann eine erfingungsgemäße Vorrichtung mehrere Verpackungsmaschinen versorgen.

Ein Stempel kann von oben in eine Dosierkammer hinein mittels eines beweglichen Teils bewegt werden (Anspruch 33) und die in der Dosierkammer bereitgestellte Produktportion aus der Dosierkammer herausstoßen. Der Stempel kann des weiteren die fallende Produktportion bis zum unteren Ende des Füllrohres beschleunigen. Der Vorgang des Einbringens von dosierten Produktmengen in Verpackungen wird derart verkürzt.

Ist direkt unterhalb des Füllrohres mindestens eine Rückhalteklappe vorgesehen, die gegen die bodenseitige Öffnung des Füllrohres klappbar ist, und ist die Rückhalteklappe mit dem beweglichen Teil eines elektromagnetischen Linearantriebs verbunden, so kann diese Rückhalteklappe extrem schnell das Füllrohr verschließen und es wieder freigeben. Wird derart direkt nach einer Produktabgabe das Füllrohr verschlossen, so wird von der Rückhalteklappe durch das Füllrohr nachrieselndes Produkt aufgefangen und erst mit dem nächsten Produktspendevorgang wieder freigeben. Nachrieselndes Produkt ist insbesondere bei der Erzeugung der Kopfnähte von Schlauchbeuteln bei vertikalen Schlauchbeutelmaschinen störend, da dieses Produkt in der Kopfnaht eingeschweißt und dadurch Undichtigkeiten in den Kopfnähten erzeugen könnte.

Nach Anspruch 34 ist mindestens eine Führung für das bewegliche Teil mit dem beweglichen Teil verbunden, und als Führung ist ein Gleitlager mit mindestens einer abriebsmindernd beschichteten oder besonders behandelten Gleitfläche an der Führung und/oder des entlang der Führung gleitenden Elements vorgesehen.

Dies hat den Vorteil, daß das bewegliche Teil senkrecht zu seiner Verschiebungsrichtung eine größere Ortsgenauigkeit aufweist. Das Gleitlager zeigt infolge seiner abriebsmindernd beschichteten oder besonders behandelten Gleitfläche bzw. Gleitflächen kaum Abrieb und kann somit über einen lagen Zeitraum betrieben werden. Die wesentlichen massiven Bauteile können in Stahl ausgeführt werden, wodurch die Eigenschaften des Stahls als Bauteil oder als zusammenwirkende Bauteile erhalten bleiben. Die Gleitfläche kann dem jeweiligen Fall angepaßt gewählt werden.

Bestehen die Führung und das Element aus Stahl, und besteht die Gleitfläche aus ionenimplantiertem Stahl, so sind neben einer kostengünstigen Herstellung für die Führung und das Element die bekannten technischen Eigenschaften von Stahl beibehalten, und die Gleitfläche zeigt eine besonders hohe Abriebsfestigkeit. Als Ionen für die Ionenimplantation in die Gleitfläche sind Aluminiumionen geeignet.

Als Gleitfläche eignet sich auch eine Schicht diamantartigen Kohlenstoffs. Die Schicht wird relativ dünn auf den Stahl aufgebracht. Eine Schichtdicke von einigen Nanometern ist ausreichend und kostengünstig. Die Schicht ist extrem abriebsfest und hat einen sehr geringen Reibungskoeffizienten.

Eine weitere Möglichkeit besteht darin, daß die Gleitfläche aus Polytetrafluorethylen mit metallischer Beimischung besteht. Polytetrafluorethylen sorgt für eine geringe Reibungskraft, die metallische Beimischung sorgt für einen verringerten Abrieb.

Ist parallel zur Bewegungsrichtung des beweglichen Teils und auf gegenüberliegenden Seiten des beweglichen Teils jeweils eine Führung mit einem verschiebbaren Element vorgesehen, und sind die Abstände zwischen einer Führung und dem beweglichen Teil jeweils gleich, so ist eine genaue Führung erreicht, bei der senkrecht zur Bewegungsrichtung wirkende Kräfte von den Führungen aufgenommen werden. Eine einfache und zuverlässige Konstruktion ist gegeben, wenn die Führungen Stangen, und die Elemente über einen Steg miteinander und mit dem beweglichen Teil verbunden sind. Die Verbindung zwischen dem beweglichen Teil und dem Steg befindet sich mittig am Steg. Der Steg kann auch dazu genutzt werden, weitere Maschinenaggregate synchron mit den Elementen anzutreiben. Dazu werden diese Maschinenaggregate mit dem Steg verbunden.

Für ein relativ breites Element ist eine Ausgestaltung der erfindungsgemäßen Vorrichtung einfach und kostengünstig realisierbar, wenn parallel zur Bewegungsrichtung des beweglichen Teils und auf gegenüberliegenden Seiten des beweglichen Teils als Führung jeweils eine Stange vorgesehen ist. Die Stangen durchlaufen das zu führende Element. Die Führung ist sehr robust und kompakt. Bei dieser Ausgestaltung kann das bewegliche Teil des elektromagnetischen Linearantriebs gleich dem antreibenden Teil und dem zu verschiebenden Element sein, und das antreibende Teil kann gegen eine mittig zwischen den Führungen verlaufende, das Element durchlaufende Stange wirken. Der mittig im Element vorgesehene Antrieb hat den Vorteil, daß keine Kipp- oder Drehmomente vom Antrieb auf das Element ausgeübt werden.

Die Vorrichtung kann zum Transport über kleinere oder größere Strecken genutzt werden, wenn das bewegliche Teil horizontal verschiebbar ist und oben eine mit dem beweglichen Teil starr verbundene Plattform aufweist. Die Plattform kann direkt oder über einen auf der Plattform befestigten Behälter das zu transportierende Gut aufnehmen.

Bei einer Ausgestaltung nach Anspruch 35 wirkt der Linearantrieb über ein Untersetzungsgetriebe. Dies bedeutet, daß die Beschleunigung zwar um das Untersetzungsverhältnis, das z.B. einen Wert um Zwei haben kann, reduziert wird, die Beschleunigung ist aber immer noch extrem groß. Für eine bestimmte aufzuwendende Kraft kann wegen der Untersetzung ein Linearantrieb mit relativ kleiner Leistung eingesetzt werden. Da die Kosten für einen Linearantrieb bei höherer Leistung überproportional zunehmen, ist mittels eines Linearantriebs mit vergleichsweise geringer Leistung eine kostengünstige Lösung erreicht. Zudem hat ein derartiger Linearantrieb relativ geringe Abmessungen und ist somit kompakt in eine Maschine einbaubar.

Ist das antreibende Teil relativ zum Bauteil bzw. Gegenstand ortsfest, so können alle Bewegungen relativ zum antreibenden Teil, der starr und ortsfest oder ortsveränderbar mit dem Rahmen einer Maschinen verbunden ist, erfolgen.

Ein Getriebe analog Anspruch 36 hat den Vorteil, daß es einfach und kostengünstig realisierbar ist, sowie daß es für große Beschleunigungen sehr geeignet ist. Das Untersetzungsverhältnis wird durch das Verhältnis der unterschiedlichen Durchmesser der Scheiben bestimmt und kann durch Scheibenaustausch schnell und in einfacher Weise verändert werden.

Ein sehr einfaches und robustes Getriebe ist realisierbar, wenn das bewegliche Teil senkrecht zu einer Führung bewegbar ist, entlang der Führung ein Bauteil verschiebbar ist, und das bewegliche Teil über einen Gelenkmechanismus mit dem Bauteil verbunden ist. Das bewegliche Teil wird ortsgenau geführt, und die zu überwindenden Trägheitskräfte sind minimiert. Beträgt bei diesem Getriebe in einer Startposition für einen Beschleunigungsvorgang der Winkel zwischen dem Gelenkmechanismus und der Führung maximal 60 Grad, so erfolgt der Start des Beschleunigungsvorganges bei einem günstigen Winkel, bei dem eine relativ große Kraftkomponente in Richtung der Führung wirkt.

Das Getriebe nach Anspruch 36 ist mit minimierter Reibung ausgeführt, wenn gemäß Anspruch 37 die Mitnehmereinrichtung eine umlaufende Fläche ist, und wenn achsparallel versetzt identisch zwei weitere, miteinander verbundene Scheiben vorgesehen sind, wobei ein Riemen um die kleinen Scheiben und ein weiterer Riemen um die größeren Scheiben umläuft. Um einen Schlupf zwischen dem Riemen und einer umlaufenden Fläche zu verhindern, können die umlaufende Fläche eine gezahnte Fläche eines Zahnrades und der Riemen ein Zahnriemen sein.

Eine weitere, robuste Getriebeausgestaltung ist bei einem Scherengetriebe erreicht. Dieses Getriebe kann zwei eine Schere bildende Scherenbecks enthalten. Entlang einer Führung verschiebbare Bauteile sind über Gelenke mit den Scherenspitzen verbunden. Das bewegliche Teil des elektromagnetischen Linearantriebs wirkt gegen die Scherenenden und spreizt oder schließt derart die Schere. Beim Schließen der Schere werden die Bauteile aufeinander zu bewegt, beim Öffnen der Schere werden die Bauteile entlang der Führung voneinander weg bewegt. Je nach baulicher Gegebenheit kann das bewegliche Teil senkrecht oder parallel zur Führung bewegbar in der Vorrichtung eingebaut sein. Bei einem Einbau senkrecht zur Führung kann das bewegliche Teil über ein Gelenk und jeweils eine Strebe mit den Scherenenden verbunden werden. Bei dieser Lösung ist der Linearantrieb ortsfest. Die Streben und die Scherenbecks übertragen die Kraft des Linearantriebs auch über eine größere Strecke, sowohl senkrecht zur Führung, als auch entlang der Führung. Bei einem Einbau des beweglichen Teils bzw. des Linearantriebs parallel zur Führung können die Scherenbecks in etwa mittig über ein Gelenk miteinander verbunden sein, und ein Scherenbeck kann über ein Gelenk mit dem antreibenden Teil verbunden sein.

Dieser Mechanismus ist insbesondere für die Übertragung großer Kräfte für kleine Auslenkungen der Bauteile geeignet. Das Untersetzungsverhältnis wird hierbei durch die als Hebel fungierenden Scherenbecks bestimmt. Die genaue Lage des in etwa mittig angeordneten Gelenks bestimmt das Verhältnis von Lastarm zu Kraftarm eines Scherenbecks und damit das Untersetzungsverhältnis. Prinzipiell kann das Untersetzungsverhältnis an einem Scherenbeck durch eine Verstellung eines Gelenks entlang eines Scherenbecks erreicht werden.

Ist ein Stempel über eine Befestigung mit dem Getriebe verbunden, so kann mit Hilfe dieses Stempels ein Produkt entlang eines Weges verschoben werden. So können z.B. Beutel jeweils einzeln in Faltschachteln geschoben werden, um eine Bag-in-box-Verpackung zu erreichen.

Eine Querschweißeinrichtung einer Schlauchbeutelmaschine ist dadurch erreichbar, daß jeweils eine Schweißbacke über eine Befestigung mit dem Getriebe verbunden ist. Der Linearantrieb bewirkt durch eine Hin- und Herbewegung des beweglichen Teils eine Relativbewegung der Schweißbacken aufeinander zu und voneinander weg, wodurch eine Querverschweißung eines Folienschlauchs erfolgt.

Ist die Vorrichtung als Höhenverstellvorrichtung ausgeführt, so kann ein gesamter Querbackenstock einer Querschweißeinrichtung mitsamt dessen Linearantrieb vertikal mittels eines Linearantriebs der Höhenverstellvorrichtung verschoben werden. Durch aufeinander abgestimmte Bewegungen der beiden Linearantriebe ist eine quasi unendlich große Vielfalt an Bahnkurven der Schweißbacken erreichbar.

Im folgenden wird die Erfindung anhand von Ausführungsbeispiele darstellenden Figuren näher beschrieben. Es zeigt:

Figur 1    in einer Seitenansicht ein getaktet umlaufendes Transportband, welches mittels eines Stempels eines elektromagnetischen Linearantriebs angetrieben wird;

Figur 2    in einer Seitenansicht einen Teil einer Schlauchbeutelmaschine, darüber eine Ablegestation für Kartonzuschnitte und darüber einen mittels eines Linearantriebs in das Füllrohr der Schlauchbeutelmaschine beweglichen Stempel;

Figur 3     in einer Seitenansicht den Gegenstand der Figur 2, jedoch mit in das Füllrohr eingeschobenem Stempel, mit eingeschobenem Kartonzuschnitt im Folienschlauch, sowie mit einem produzierten Beutel;

Figur 4     in einer perspektivischen Ansicht einen Stempel, der von oben in eine Dosiereinrichtung geschoben werden kann, sowie mit einer Füllrohrverlängerung unterhalb der Dosiereinrichtung;

Figur 5     in einer Seitenansicht mit teilweisem Vertikalschnitt ein Füllrohr mit fallenden Produktportionen, sowie mit einem Stempel zur Beschleunigung der Produktportionen während des Falls, wobei der Stempel in einer unteren Position (unterbrochene Linien) dargestellt ist;

Figur 6     in einer Seitenansicht einen als Beuteleinschieber wirkenden Stempel, der von zwei um 90 Grad zueinander versetzten Linearantrieben angetrieben ist, und der einen Beutel in eine offene Faltschachtel einschiebt;

Figur 7     in einer Seitenansicht das Prinzip einer Erkennung von fehlerhaftem Produkt mittels eines Sensors, sowie der Auslenkung dieses Produktes aus einem Produktstrom mittels eines Stempels bei frei fallendem Produkt;

Figur 8     in einer Draufsicht das Prinzip einer Erkennung von fehlerhaftem Produkt mittels eines Sensors, sowie des Abwurfs dieses Produkts von einem Förderband mittels eines Stempels eines Ausscheiders;

Figur 9     in einer perspektivischen Ansicht das Prinzip einer Erkennung von offenen Faltschachteln mittels eines Sensors, einem Ausscheider für offene Faltschachteln, und einem Prospekteinschießer;

Figur 10     in einer Draufsicht eine Querbackenverschließeinrichtung einer Schlauchbeutelmaschine mit einem elektromagnetischen Linearantrieb;

Figur 11     in einer Seitenansicht das Füllrohr einer Schlauchbeutelmaschine mit Aggregaten zur Formung und Verschweißung eines Folienschlauches, sowie mit zwei von jeweils einem elektromagnetischen Linearantrieb angetriebenen Seitenfaltenstechern;

Figur 12     in einer Seitenansicht mit teilweisem Vertikalschnitt einen Beutelfahnenumleger, der von einem elektromagnetischen Linearantrieb angetrieben ist, und der gegen die Beutelfahne eines Beutels wirkt;

Figur 13     in einer Seitenansicht einen mittels eines elektromagnetischen Linearantriebs axial in einem Füllrohr einer Schlauchbeutelmaschine verschiebbaren Stempel, der gegen das Ende des Folienschlauchs und gegen die Querbacken wirkt;

Figur 14     in einer perspektivischen Darstellung eine offene Faltschachtel und einen Schlauchbeutel, sowie von jeweils einem elektromagnetischen Linearantrieb angetrieben zwei Seitenlaschenschließer, einen Decklaschenschließer und einen Beuteleinschieber;

Figur 15     in einer Draufsicht mit teilweisem Horizontalschnitt eine Querbackenverschließeinrichtung, die über eine von einem elektromagnetischen Linearantrieb beeinflußte Druckübertragungseinrichtung angetrieben wird;

Figur 16     in einer Seitenansicht einen von zwei senkrecht zueinander wirkenden elektromagnetischen Linearantrieben angetriebener Greifer an einer Verdecklungsstation;

Figur 17     in einer Seitenansicht gegen den Deckel einer Schachtel wirkende, von jeweils einem elektromagnetischen Linearantrieb angetriebene Laschenumleger an einer Verdecklungsstation;

Figur 18     in einer Seitenansicht eine Querbacke, die horizontal und vertikal mittels elektromagnetischer Linearantriebe bewegbar ist;

Figur 19     in einer perspektivischen Darstellung eine als Bahnschneider ausgestaltete Trenneinrichtung, die entlang einer Knickkante zum Abknicken einer Folienbahn mittels eines elektromagnetischen Linearantriebs verschiebbar ist;

Figur 20     in einer perspektivischen Darstellung eine als Stechmesser ausgestaltete Trenneinrichtung, die durch eine Querbacke einer vertikalen Schlauchbeutelmaschine beweglich ist, und die mittels eines elektromagnetischen Linearantriebs verschoben wird;

Figur 21    in einer Draufsicht eine als Lochstanze ausgestaltete Trenneinrichtung, wobei die Lochstanze senkrecht zur Schweißfläche einer Querbacke in einer Führung geführt ist;

Figur 22    in einer Seitenansicht ein Transportband, an dem bodenseitig Mitnahmeflächen vorgesehen sind, und wobei das bewegliche Teil eines elektromagnetischen Linearantriebs gegen eine Mitnahmefläche wirkt;

Figur 23    in einer Seitenansicht eine vertikale Schlauchbeutelmaschine mit einem Folienabzug, der mittels eines Linearantriebs zwischen einer oberen Position und einer unteren Position verschiebbar ist;

Figur 24    in einer Schnittdarstellung den Gegenstand der Figur 23, in einem Schnitt entlang $\overline{AA}$ der Figur 23;

Figur 25    in einer perspektivischen Darstellung ein Kartonzuschnittvereinzelner, der, von einem Linearantrieb angetrieben, gegen einen Zuschnitt eines Stapels von Zuschnitten wirkt;

Figur 26    in einer perspektivischen Darstellung entlang einer Führung verschiebbare Linearantriebe mit jeweils einer Plattform zur Aufnahme von Verpackungsmaterial;

Figur 27    in einer Seitenansicht einen mittels Linearantrieb angetriebenen Stempel mit Ansaugdüsen zum Mitnehmen von Schachtelzuschnitten, sowie darunter einen Formschacht zur Schachtelformung;

Figur 28    in einer Seitenansicht zwei von jeweils einem Linearantrieb bewegbare Etikettenmitnehmer, wobei der eine Etikettenmitnehmer etikettenseitig linienförmig und der andere Etikettenmitnehmer etikettenseitig eben und mit einer Ansaugdüse ausgestaltet ist;

Figur 29    in einer Seitenansicht eine mittels Linearantrieben horizontal verschiebbare Platte mit einem Sammelbehälter, über dem eine Produktabgabestelle vorgesehen ist;

Figur 30    in einer Draufsicht eine Transporteinrichtung mit zwei senkrecht zueinander verlaufenden, Produkt bewegenden Transportbändern und einem Stempel, der mittels eines elektromagnetischen Linearantriebs angetrieben ist und das Produkt von dem einen Transportband auf das andere Transportband schiebt;

Figur 31    in einer Draufsicht eine Transportvorrichtung mit drei parallelen, Produkt bewegenden Transportbändern und einem Stempel analog Figur 30;

Figur 32    in einer Draufsicht eine Transportvorrichtung mit einem Transportband und zwei in Transportrichtung beweglichen Stempeln zur Erzeugung gleicher Produktabstände;

Figur 33    in einer Seitenansicht einen Teil der Transportvorrichtung der Figur 32;

Figur 34    in einer Seitenansicht mit teilweisem Vertikalschnitt eine Transportvorrichtung mit einem höhenverstellbaren Stempel in einem Füllschacht, einer Höhenmeßeinrichtung und einer Beutelzuführeinrichtung;

Figur 35    in einer Seitenansicht eine mittels eines elektromagnetischen Linearantriebs gerüttelte, körniges Produkt transportierende Förderrinne;

Figur 36    in einem Schnitt entlang der Linie $\overline{AA}$ der Figur 35 den Gegenstand der Figur 35;

Figur 37    in einer Seitenansicht mit teilweisem Vertikalschnitt die wesentlichen Bauteile einer vertikalen Schlauchbeutelmaschine, wobei das Füllrohr in vertikaler Richtung zweigeteilt ist, und wobei ein Füllrohrteil mittels eines elektromagnetischen Linearantriebs horizontal verschiebbar ist;

Figur 38    in einer perspektivischen Darstellung eine umlaufende Bahn und darauf bewegliche Teile mit Plattform;

Figur 39    in einem Vertikalschnitt ein anders ausgestaltetes bewegliches Teil auf einer Bahn;

Figur 40    in einer Seitenansicht ein um zwei Räder umlaufendes Transportband, wobei ein Rad von einem elektromagnetischen Linearantrieb über einen Gelenkmechanismus angetrieben wird;

Figur 41    in einer Seitenansicht zwei mit unterschiedlicher Geschwindigkeit umlaufende Transportbänder zur Erzeugung einer geschuppten Produktreihe, wobei jedes Transportband direkt mittels jeweils eines elektromagnetischen Linearantriebs angetrieben wird;

Figur 42  in einer Seitenansicht eine Transportvorrichtung, bei der das bewegliche Teil eines elektromagnetischen Linearantriebs auf einer Führung parallel zu einer Wandung verschiebbar ist, wobei ein Beutel zwischen der Wandung und einem mit dem beweglichen Teil verbundenen Stempel eingeklemmt ist;

Figur 43  in einer Seitenansicht einen Teil des Gegenstandes der Figur 42, jedoch mit einer umlaufenden Führung;

Figur 44  in einer Seitenansicht eine Abwandlung des Gegenstandes der Figur 42 in einer Anlage zur Befüllung von Trays mit Schlauchbeuteln;

Figur 45  in einer Seitenansicht das verschweißte Ende eines Folienschlauchs einer vertikalen Schlauchbeutelmaschine mit einem Produktabstreifer, welcher mittels eines elektromagnetischen Linearantriebs angetrieben wird;

Figur 46  in einem Vertikalschnitt eine Vorrichtung zur Dosierung fließfähigen Produkts, bestehend aus einem Vorratsgefäß mit zwei bodenseitigen Auslässen, einer Volumendosiereinrichtung und einem mittels eines elektromagnetischen Linearantriebs verschiebbaren Verschiebemechanismus, zur Produktabgabe in ein Füllrohr;

Figur 47  in einem Vertikalschnitt eine Vorrichtung analog Figur 46, jedoch mit lediglich einem Auslaß und mit zwei Füllrohren;

Figur 48  in einer perspektivischen Darstellung eine Vorrichtung zur Dosierung fließfähigen Produkts, bei der der Verschiebemechanismus als verdrehbares Rondell ausgestaltet ist, mit einer Produktabgabe in das Füllrohr einer vertikalen Schlauchbeutelmaschine, einem von oben in eine Dosierkammer beweglichen Stempel, sowie Rückhalteklappen zum Verschließen der bodenseitigen Öffnung des Füllrohres;

Figur 49  in einer Seitenansicht eine als Höhenverstellvorrichtung ausgeführte Vorrichtung zum Verschieben eines Elements mit einem mittig angeordneten elektromagnetischen Linearantrieb, wobei beidseits des Linearantriebs Führungsstangen mit abriebsmindernden Gleitflächen vorgesehen sind;

Figur 50  in einer Schnittdarstellung eine Führungsstange mit einer äußeren, separaten Schicht, welche eine umlaufende Gleitfläche bildet;

Figur 51  in einer Schnittdarstellung eine Führungsstange, bei der die äußere Gleitfläche durch eine Ionenimplantation in Stahl erzeugt wurde;

Figur 52  in einer Draufsicht eine Vorrichtung, bei der ein zu verschiebendes Element gleich dem beweglichen Teil und dem antreibenden Teil eines elektromagnetischen Linearantriebs ist, wobei mittig durch das Element eine dem Antrieb dienende Stange und beidseitig dazu jeweils eine Stange als Führung vorgesehen sind;

Figur 53  in einer Schnittdarstellung das quer zu seiner Bewegungsrichtung geschnittene Element der Figur 52;

Figur 54  in einer Seitenansicht ein horizontal verschiebbares Element analog Figur 52, jedoch ohne die beiden äußeren Führungsstangen und mit einer starr mit dem Element verbundenen Plattform;

Figur 55  in einer Seitenansicht ein Getriebe für Schweißbacken mit einerseits einem elektromagnetischen Linearantrieb in einer eine Untersetzung realisierenden Position und andererseits als Alternative (gestrichelt gezeichnet) in einer Position, bei der keine Untersetzung erreicht ist, sowie mit zwei auf ein kleines Zahnrad wirkenden Zahnstangen und einer auf ein größeres Zahnrad wirkenden Zahnstange;

Figur 56  in einer Seitenansicht ein Getriebe für Schweißbacken mit zweimal zwei starr miteinander verbundenen, unterschiedlich großen Scheiben, wobei einerseits um die kleinen Scheiben und andererseits um die großen Scheiben jeweils ein Riemen umläuft;

Figur 57  in einer Seitenansicht einen Getriebeaufbau analog Figur 56, jedoch in einer Ausgestaltung als Höhenverstelleinrichtung;

Figur 58  in einer Seitenansicht ein senkrecht zu einer Führung bewegliches Teil eines elektromagnetischen Linearantriebs, das über einen Gelenkmechanismus zwei Bauteile entlang der Führung und gegeneinander verschiebt;

Figur 59 in einer Seitenansicht ein Getriebe mit einem Scherenmechanismus zur Verschiebung von zwei Bauteilen entlang einer Führung und mit einem senkrecht zur Führung beweglichen Teil des elektromagnetischen Linearantriebs;

Figur 60 in einer Seitenansicht ein weiteres Getriebe mit einem Scherenmechanismus, bei dem das bewegliche Teil parallel zur Führung ausgelenkt ist;

Figur 61 in einer Seitenansicht ein Getriebe analog Figur 56 zum Bewegen eines Stempels gegen einen Beutel und zum Einschieben des Beutels in eine Faltschachtel, sowie

Figur 62 in einer Seitenansicht zwei um eine Achse drehbare, starr miteinander verbundene Scheiben unterschiedlichen Durchmessers, wobei jede Scheibe einen glatten, umlaufenden (nicht dargestellten) Riemen aufnehmen kann.

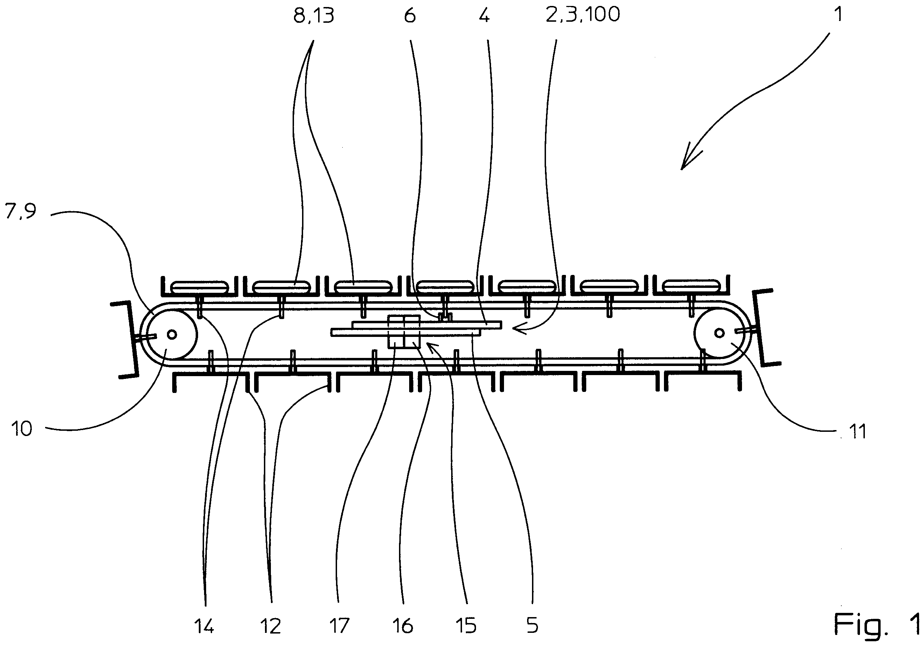

Bei einer Vorrichtung 1 zur Verpackung ist als Einrichtung 2 zur Beschleunigung eines zur verpackenden Produkts 8 ein elektromagnetischer Linearantrieb 3 vorgesehen (Figur 1). Der elektromagnetische Linearantrieb 3 besteht aus einem beweglichen Teil 4 und einem das bewegliche Teil 4 antreibendem Teil 5. Das bewegliche Teil 4, das von dem antreibenden Teil 5 in entgegengesetzte Richtung mittels elektromagnetischer Kräfte beschleunigt, gleichförmig bewegt und abgebremst werden kann, ist starr mit einem Stempel 6 verbunden. Bei der Vorrichtung 1 ist als Einrichtung 7 zur Führung des bewegten Produkts 8 ein Transportband 9 vorgesehen. Das Transportband 9 läuft um Räder 10, 11 um. Es trägt eine Vielzahl von Produktaufnehmern 12. Auf jedem Produktaufnehmer 12 wird ein Schlauchbeutel 13 transportiert. Die Produktaufnehmer haben bodenseitig jeweils einen Dorn 14. Der Stempel 6 ist geschlitzt ausgestaltet, ergreift jeweils einen Dorn 14 und schiebt das Transportband 9 um eine Taktlänge weiter. Neben dem einen elektromagnetischen Linearantrieb 3 ist noch ein zweiter elektromagnetischer Linearantrieb 15 vorgesehen. Der zweite Linearantrieb 15 besteht im wesentlichen aus dem beweglichen Teil 16 und dem antreibenden Teil 17. Die beiden Linearantriebe 3, 15 sind derart starr miteinander verbunden, daß der antreibende Teil 5 des ersten Linearantriebs 3 mit dem beweglichen Teil 16 des zweiten Linearantriebs 15 verbunden ist. Dadurch bewegt der zweite Linearantrieb 15 den ersten Linearantrieb 3 gegen das Transportband 9 bzw. von diesem wieder weg, so daß der Stempel 6 den Dorn 14 ergreift bzw. den Dorn 14 wieder freigibt. Der Stempel 6 am Linearantrieb 3 bewegt sich folglich entlang einer Bahnkurve, die ein Parallelogramm beschreibt. Hat der Linearantrieb 3 das Transportband 9 um einen Takt weiterbewegt, so wird der Linearantrieb 3 durch eine Bewegung des zweiten Linearantriebs 15 soweit vom Förderband 9 zurückgestellt, daß der Stempel 6 den Dorn 14 freigibt. Dann wird das bewegliche Teil 4 des Linearantriebs 3 unter den nächsten Dom 14 verschoben und vom zweiten Linearantrieb 15 in Eingriff mit diesem Dorn 14 gebracht, worauf die nächste Taktbewegung des Transportbandes 9 erfolgt. Bei dieser Ausgestaltung wirkt der Stempel 6 indirekt über die Einrichtung 7 zur Führung des bewegten Produkts 8 auf das Produkt 8.

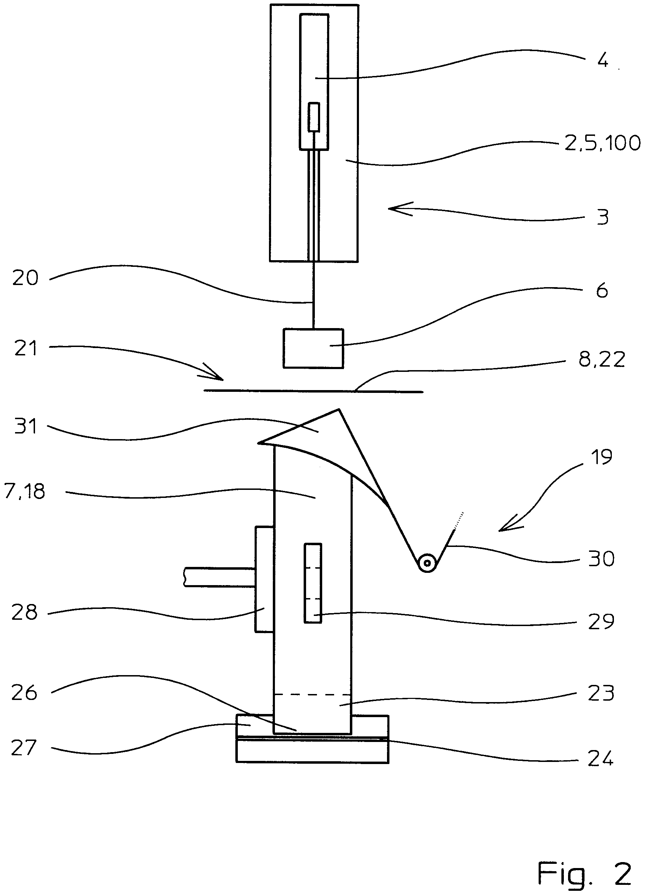

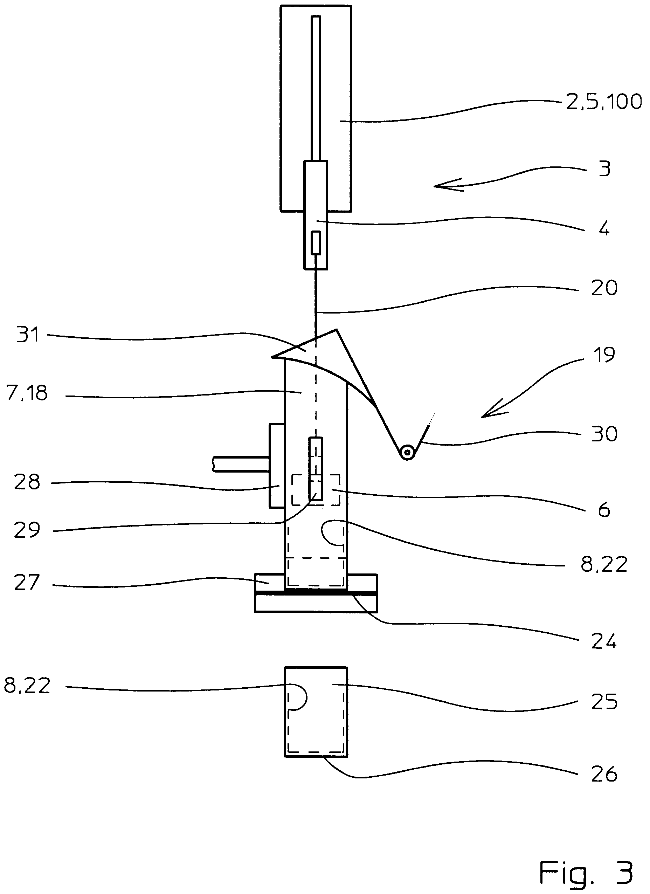

Bei dem Ausführungsbeispiel der Figuren 2 und 3 wirkt der Stempel 6 direkt gegen das zu verpackende Produkt 8. Die Einrichtung 7 zur Führung des bewegten Produkts 8 ist hier das Füllrohr 18 einer vertikalen Schlauchbeutelmaschine 19. Der Stempel 6 ist über eine Stange 20 mit dem beweglichen Teil 3 eines Linearantriebs 3 verbunden und ist somit von oben axial in das Füllrohr 18 bewegbar. Direkt oberhalb des Füllrohres 18 befindet sich eine Ablegestation 21 für einzelne Kartonzuschnitte 22 (Figur 2). Der Stempel 6 nimmt den Kartonzuschnitt 22 mit, drückt ihn mittels Einfaltung in das Füllrohr 18 und setzt ihn bodenseitig in den das Füllrohr 18 umgebenden Folienschlauch 23 (Figur 3). Der Folienschlauch 23 wird mittels eines Stechmessers 24 durchtrennt, so daß offene Beutel 25 mit versteifendem Kartonzuschnitt 22 erzeugt werden. Der Boden 26 der Beutel 25 wird von Quersiegelbacken 27 verschweißt. Die Längsverschweißung des Folienschlauches 23 erfolgt mittels einer Längssiegelbacke 28. Der Folientransport wird von Folienabzügen 29 erreicht. Die Umformung der ebenen Folienbahn 30 zu einem Folienschlauch 23 geschieht mittels einer Formschulter 31.

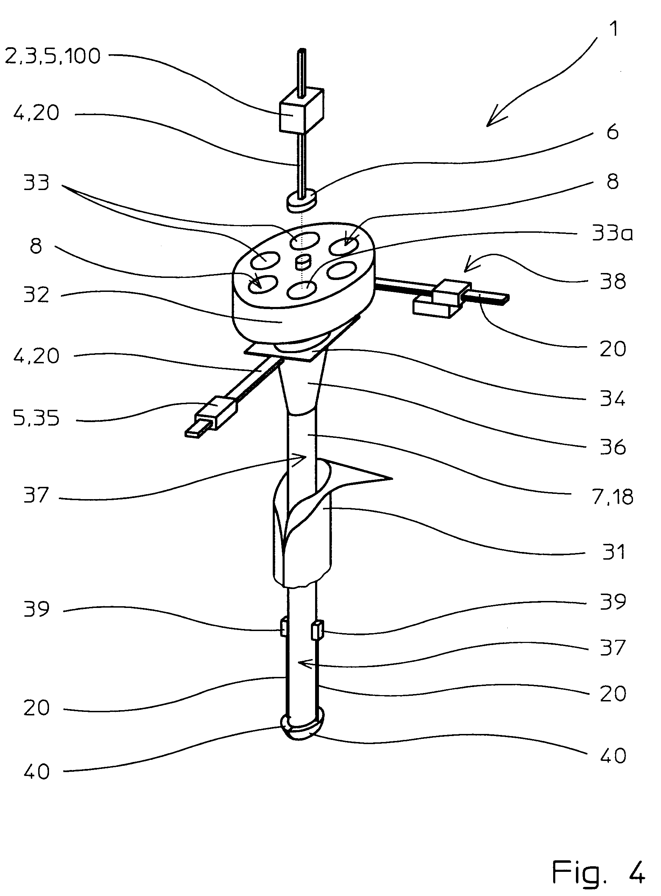

Bei dem Ausführungsbeispiel der Figur 4 ist der Stempel 6 von oben in eine Dosiereinrichtung 32 bewegbar. Der Linearantrieb 3 treibt als bewegliches Teil 4 eine Stange 20 des Stempels 6 an. Die Dosiereinrichtung 33 hat mehrere Dosierkammern 33. Durch das Öffnen einer Einrichtung 34 mittels eines Linearantriebs 35 wird das in der Dosierkammer 33a vorhandene Produkt 8 dem freien Fall ausgesetzt. Das Produkt 8 fällt durch einen Trichter 36 in das Füllrohr 18. Der Stempel 6 wirkt durch die offene Dosierkammer 33a bis in das Füllrohr 18, also im gesamten vom Produkt 8 durchfallenen Raum 37. Weitere Linearantriebe 38, 39 drehen die Dosiereinrichtung 32 taktweise weiter bzw. öffnen und schließen Rückhalteklappen 40 zur Verhinderung eines Nachrieselns von Produkt 8 aus dem Füllrohr 18.

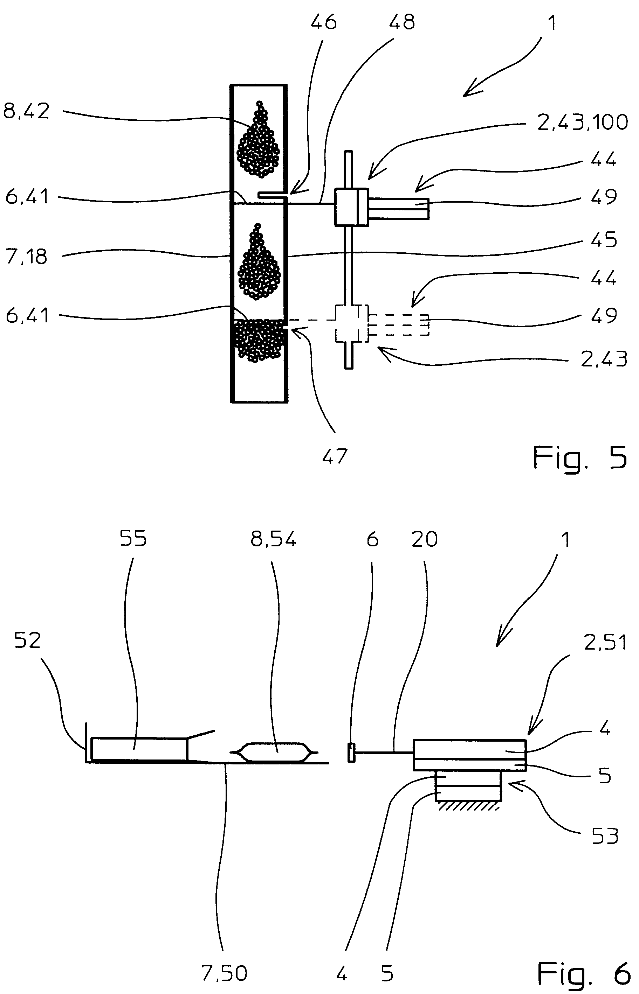

Bei dem Ausführungsbeispiel der Figur 5 wirkt ein als Sieb 41 ausgestalteter Stempel 6 passgenau im Füllrohr 18 einer Verpackungsanlage. Der Stempel 6 komprimiert und beschleunigt Produktschwärme 42 während deren freien Falls. Die Bewegung des Stempels 6 wird dabei mittels zweier elektromagnetischer Linearantriebe 43, 44 realisiert. Ein Linearantrieb 43 ist parallel zum Füllrohr 18 ausgerichtet. Der andere Linearantrieb 44 ist radial zum Füllrohr 18 ausgerichtet. Das Füllrohr 18 weist einen axial verlaufenden Schlitz 45 auf. Am Anfang des Schlitzes 45 und am Ende des Schlitzes 45 ist jeweils eine tangentiale Aussparung 46, 47 im Füllrohr 18 vorgesehen. Der Stempel 6 ist über eine im Schlitz 45 geführte Stange 48 mit dem beweglichen Teil 49 des radial zum Füllrohr 18 ausgerichteten Linearantriebs 44 verbunden. Nach einer Abwärtsbewegung wird der Stempel 6 durch Betrieb des Linearantriebs 44 aus der unteren Aussparung 47 radial aus dem Füllrohr 18 entfernt, durch Betrieb des Linearantriebs 43 nach oben bewegt, und durch Betrieb des Linearantriebs 44 in die obere Aussparung 46 eingeführt, um den nächsten Produktschwarm 42 zu komprimieren und zu beschleunigen. Die Komprimierung der Produktschwärme 42 hat den Vorteil, daß das Produkt schneller und sicherer verpackt werden kann.

Bei dem Ausführungsbeispiel der Figur 6 ist als Einrichtung 7 zur Führung des bewegten Produkts 8 die Oberfläche eines horizontal verlaufenden Transportbandes 50 vorgesehen. Der Stempel 6 ist mittels eines elektromagnetischen Linearantriebs 51 in horizontaler Richtung und quer zur Bewegungsrichtung des Transportbandes 50 bewegbar. Der Stempel 6 wirkt in Richtung auf eine vertikal ausgerichtete Begrenzung 52 des Transportbandes 50. Der Linearantrieb 51 wird mittels eines weiteren Linearantriebs 53 parallel zur Förderrichtung verschoben. Dabei schiebt der vom Linearantrieb 51 angetriebene Stempel 6 das als Schlauchbeutel 54 ausgestaltete Produkt 8 in eine offene Faltschachtel 55 ein. Die Begrenzung 52 dient dabei als Anschlag für die Faltschachtel 55. Der Linearantrieb 53 bewegt den Stempel 6 während des Einschubvorganges mit dem Transportband 50 mit und stellt den Stempel 6 mitsamt dem Linearantrieb 51 für den Einschub des nächsten Schlauchbeutels 54 entgegen der Transportrichtung zurück.

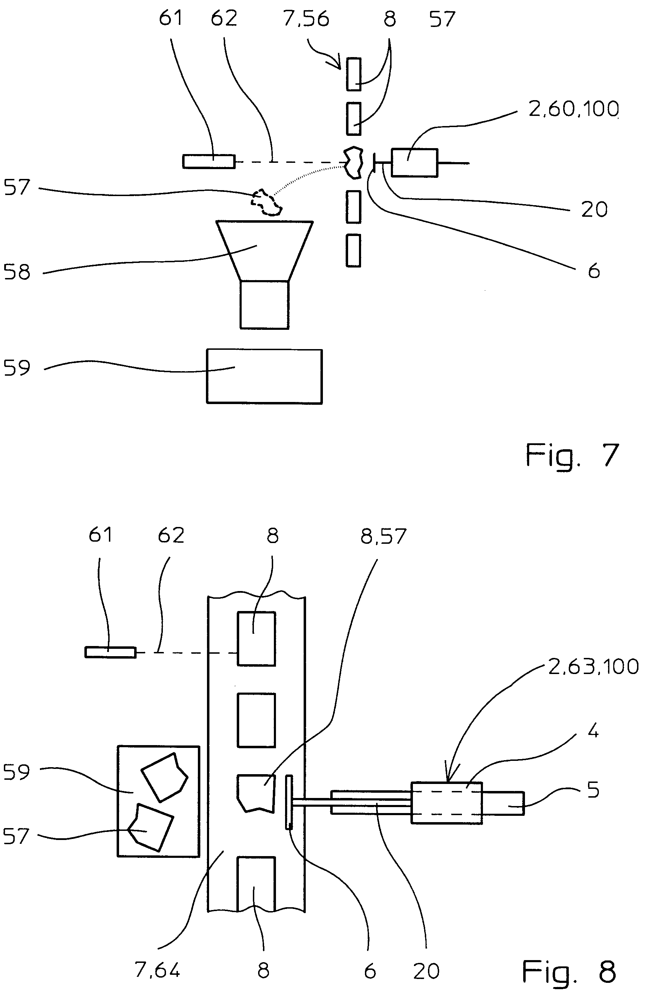

Bei dem Ausführungsbeispiel der Figur 7 ist ein in horizontaler Richtung verschiebbarer Stempel 6 in eine Produktfallstrecke 56 bewegbar und wirft dadurch ein fehlerhaftes Produkt 57 aus einem Strom frei fallender Produkte heraus und in einen Trichter 58 eines Entsorgungsbehälters 59. Der Linearantrieb 60 reagiert auf Impulse eines Sensors 61. Der Sensor 61 detektiert fehlerhaftes Produkt 57 mittels eines Meßstrahls 62. Die Produktfallstrecke ist hierbei die Führung des bewegten und zu verpackenden Produkts 8.

Beim Ausführungsbeispiel der Figur 8 ist ein mittels eines elektromagnetischen Linearantriebs 63 in horizontaler Richtung quer zu einem Transportband 64 verschiebbarer Stempel 6 vorgesehen, um fehlerhaftes Produkt 57 vom Transportband 64 in einen Entsorgungsbehälter 59 zu stoßen. Das fehlerhafte Produkt 57 wird vom Meßstrahl 62 eines Sensors 61 erkannt.

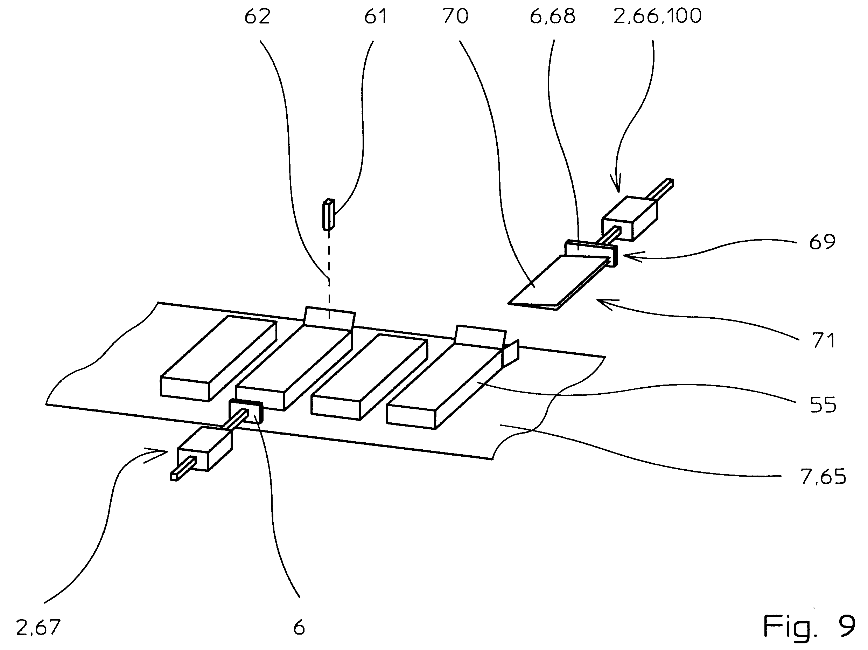

Beim Ausführungsbeispiel der Figur 9 sind zwei quer zu einem Transportband 65 wirkende, horizontal ausgerichtete elektromagnetische Linearantriebe 66, 67 vorgesehen. Der Stempel 6 des einen Linearantriebs 66 ist als Kopf 68 eines Prospekteinschießers 69 ausgestaltet und schießt Prospekte 70, die an einer Prospektablegestelle 71 abgelegt sind, einzeln in offene Faltschachteln 55. Die mit Prospekten 70 versehenen Faltschachteln 55 werden vom Transportband 65 einer Verschließstation (zeichnerisch nicht dargestellt) zugeführt und dort verschlossen. Faltschachteln 55, die die Verschließstation durchlaufen haben und trotzdem unverschlossen blieben, werden vom Meßstrahl 62 eines Sensors 61 erkannt und vom Linearantrieb 67 vom Transportband 65 gestoßen.

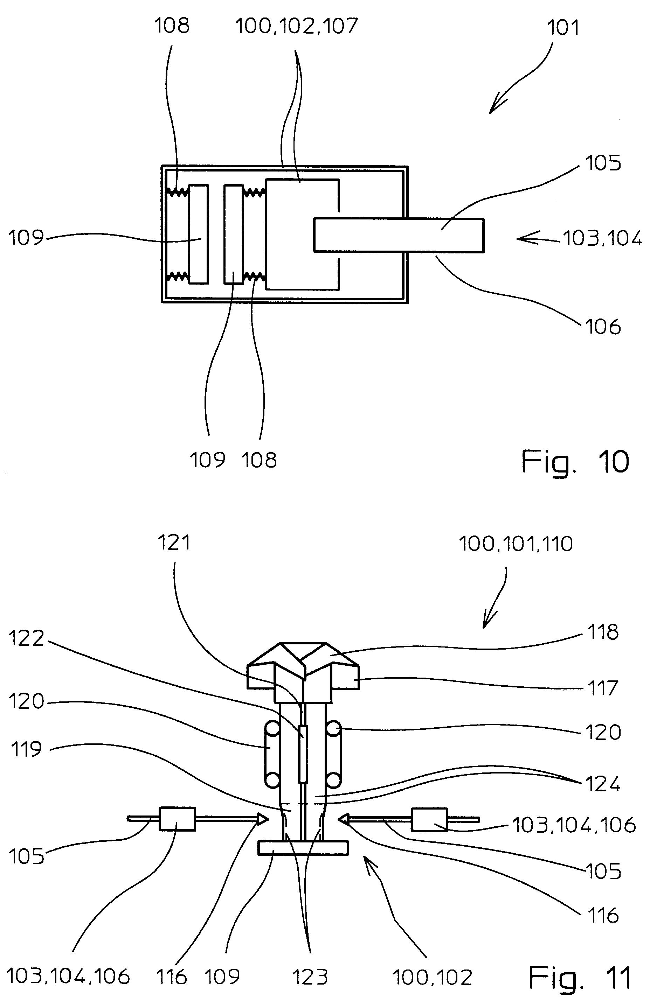

Eine Verschließvorrichtung 101 besteht im wesentlichen aus einem Verschließmechanismus 102 als Einrichtung 100 und einem Antrieb 103 für den Verschließmechanismus 102 (Figur 10). Der Antrieb 103 ist ein elektromagnetischer Linearantrieb 104 mit einem beweglichen Teil 105 und einem das bewegliche Teil 105 antreibendem Teil 106. Der Verschließmechanismus 102 besteht aus einem Gestänge 107 und über Federn 108 mit dem Gestänge 107 verbundenen Querbacken 109. Die Querbacken 109 dienen als Querbackenverschließeinrichtung 110 der Kopf- und Bodennahtverschweißung an einer vertikalen Schlauchbeutelmaschine. Durch die Relativbewegung von antreibendem Teil 106 und beweglichem Teil 105 werden die Querbacken 109 gegeneinander bewegt und wieder zurückgestellt.

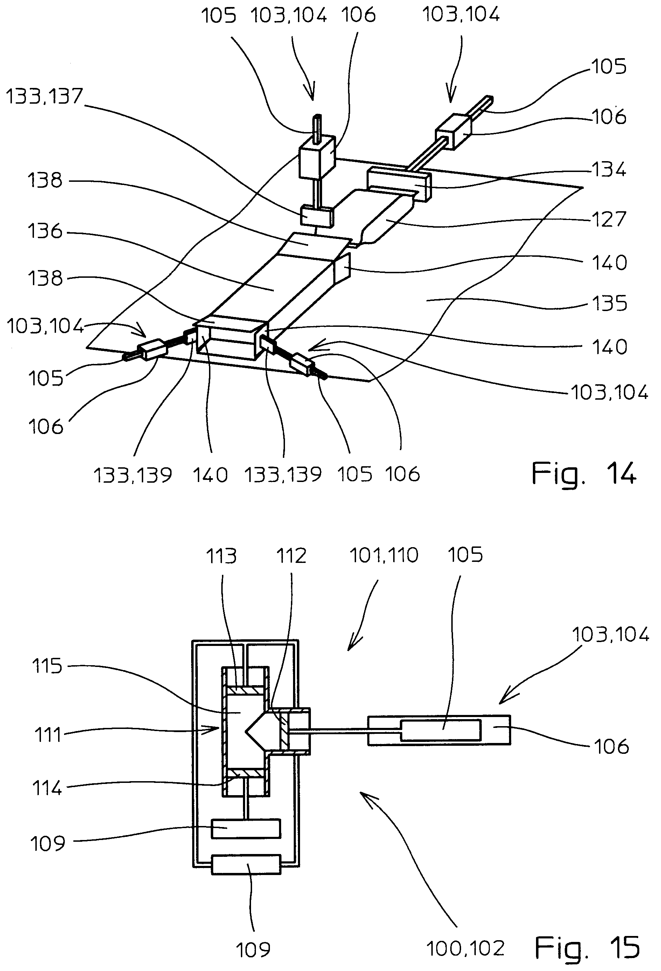

Bei einem anderen Ausführungsbeispiel (Figur 15) ist das bewegliche Teil 105 eines elektromagnetischen Linearantriebs 104 mit einem in einer Drucküberträgungseinrichtung 111 gleitenden Kolben 112 verbunden. Die Querbacken 109 der Querbackenverschließeinrichtung 110 sind mit jeweils einem Kolben 113, 114 verbunden. Auch die Kolben 113, 114 sind in der Drucküberträgungseinrichtung 111 verschiebbar. Die Drucküberträgungseinrichtung 111 ist dicht und enthält ein Gas 115. Durch die Bewegung des vom Linearantrieb 104 angetriebenen Kolbens 112 werden die Kolben 113, 114 vom Gasdruck beschleunigt oder abgebremst, wodurch die Querbacken 109 aufeinander zu bewegt und wieder zurückgestellt werden.

Beim Ausführungsbeispiel der Figur 11 sind an einer Querbackenverschließeinrichtung 110 zwei Seitenfaltenstecher 116 vorgesehen. Jeder Seitenfaltenstecher 116 ist von einem elektromagnetischen Linearantrieb 104 angetrieben. Eine ebene Folienbahn 117 wird an einer Formschulter 118 zu einem Folienschlauch 119 um ein Füllrohr 124 umgeformt, von Folientransporteinrichtungen 120 weitertransportiert und mittels Querbacken 109 quer verschweißt. Die Längsnaht 121 des Folienschlauchs 119 wird von einer Längsschweißeinrichtung 122 verschweißt. Die Seitenfaltenstecher 116 erzeugen Seitenfalten 123 in den herzustellenden Schlauchbeuteln.

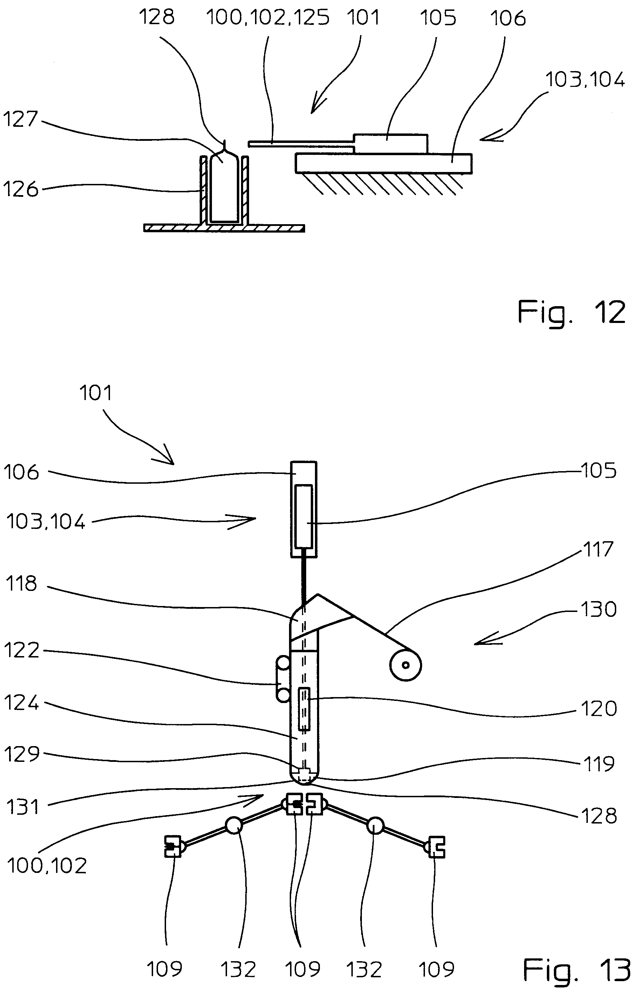

Bei dem Ausführungsbeispiel der Figur 12 ist das bewegliche Teil 105 eines elektromagnetischen Linearantriebs 104 als Beutelfahnenumleger 125 ausgestaltet. Ein Becherband 126 führt Beutel 127 mit endseitiger Fahne 128 an den Beutelfahnenumleger 125 heran. Die Fahne 128 wird durch eine Bewegung des beweglichen Teils 105 relativ zum antreibenden Teil 106 umgelegt.

Bei dem Ausführungsbeispiel der Figur 13 ist das bewegliche Teil 105 eines elektromagnetischen Linearantriebs 104 mit einem Stempel 129 verbunden. Der Stempel 129 ist vertikal in einem Füllrohr 124 einer vertikalen Schlauchbeutelmaschine 130 verschiebbar. Unterhalb des Füllrohres 124 sind Querbacken 109 vorgesehen, die einen mechanischen Widerstand gegen den Stempel 129 bilden. Zwischen zwei Befüllvorgängen wird der Stempel 129 gegen den Boden 131 des Folienschlauchs 119 bewegt. Dabei schweißt eine der um Achsen 132 rotierenden Querbacken 109 die bodenseitige Fahne 128 gegen den Folienschlauch 119.

Bei dem Ausführungsbeispiel der Figur 14 sind drei Laschenschließer 133 und ein Beuteleinschieber 134 mittels jeweils eines elektromagnetischen Linearantriebs 104 angetrieben. Jeweils das bewegliche Teil 105 ist mit einem Laschenschließer 133 bzw. dem Bodeneinschieber 134 verbunden. Ein Transportband 135 ist zur Zuführung offener Faltschachteln 136 zum Laschenschließer 133 vorgesehen. Ein Laschenschließer 133 wirkt als Decklaschenschließer 137 vertikal gegen das Transportband und legt die Decklaschen 138 um. Zwei Laschenschließer 133 wirken als Seitenlaschenschließer 139 parallel zur Oberfläche des Transportbandes 135 zwecks Schließung der Seitenlaschen 140.

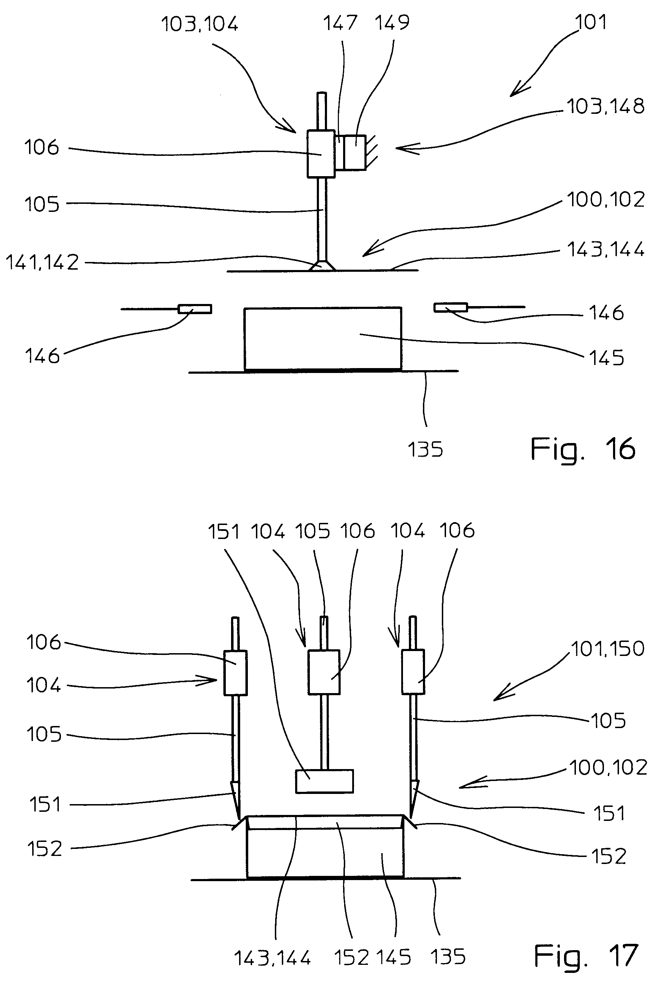

Bei dem Ausführungsbeispiel der Figur 16 ist das bewegliche Teil 105 eines elektromagnetischen Linearantriebs 104 mit einem Greifer 141 verbunden. Der Greifer 141 ist ein Unterdruckgreifer 142 und greift jeweils einen Zuschnitt 143 eines Deckels 144 zur Verdeckung einer oben offenen Schachtel 145. Die Schachtel 145 wird mittels Leimauftragsdüsen 146 oben randseitig mit Leim bespritzt. Das antreibende Teil 106 des Linearantriebs 104 ist vertikal ausgerichtet und mit dem beweglichen Teil 147 eines horizontal ausgerichteten weiteren elektromagnetischen Linearantriebs 148 verbunden. Das antreibende Teil 149 des weiteren Linearantriebs 148 ist ortsfest. Derart kann der eine Linearantrieb 104 vom anderen Linearantrieb 148 parallel in horizontaler Richtung verschoben werden, und der Greifer 141 kann eine zusammengesetzte Bewegung ausüben, bei der er jeweils einen Zuschnitt 143 aus einem Depot (nicht dargestellt) ergreift, den Zuschnitt 143 an eine Schachtel 145 heranträgt, und den Zuschnitt 143 auf die Schachtel 145 setzt.

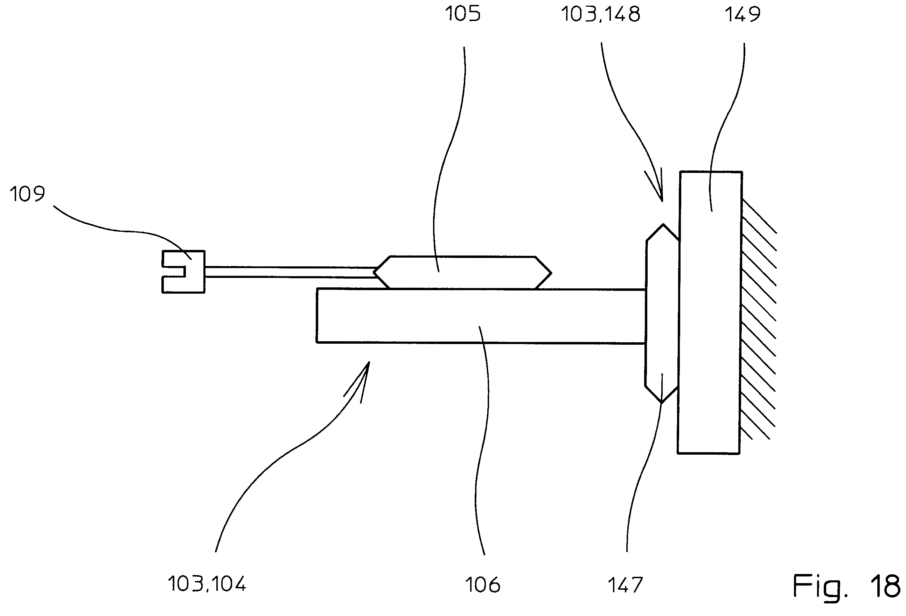

Eine Kombination zweier elektromagnetischer Linearantriebe 104, 148 analog Figur 16 ist in Figur 18 für eine Querbacke 109 dargestellt. Die Querbacke 109 kann dadurch unterschiedlichste Bewegungen im Raum ausführen.

Das Transportband 135 (Figur 16) transportiert die Schachtel 145 mit aufgesetztem Zuschnitt 143 weiter zu einer Verdecklungsstation 150 (Figur 17). An der Verdecklungsstation 150 sind vertikal mittels elektromagnetischer Linearantriebe 104 bewegliche Laschenumleger 141 vorgesehen, um die Laschen 152 des Deckels 144 umzulegen und gegen den beleimten oberen Rand der Schachtel 145 zu drücken.

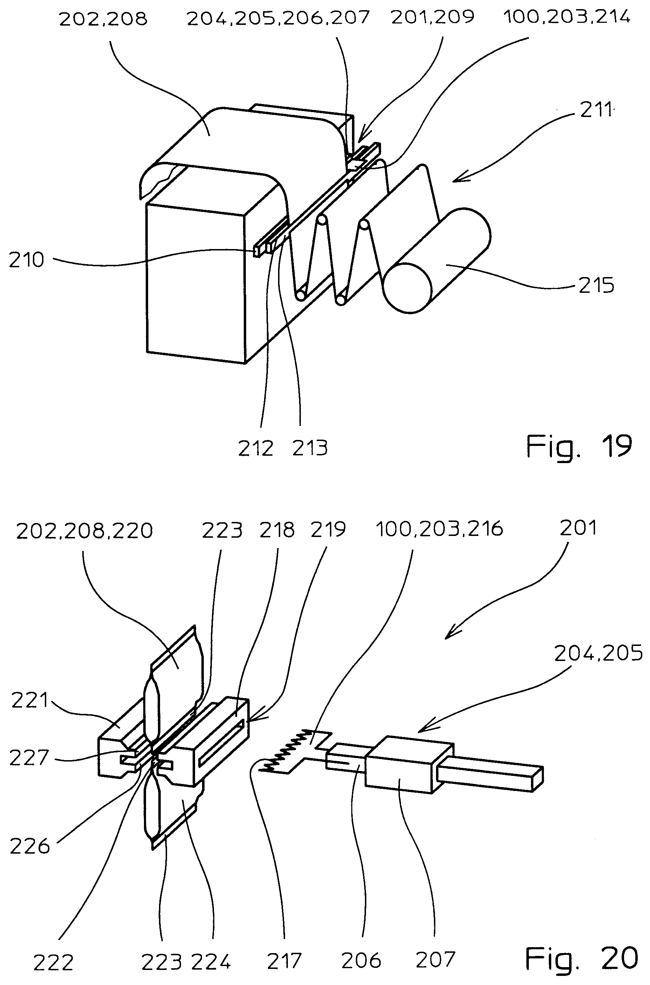

Bei einer Trennvorrichtung 201 als Einrichtung 100 zum Wirken gegen Verpackungsmaterial 202 mit einer Trenneinrichtung 203 und einem Antrieb 204 für die Trenneinrichtung 203 ist als Antrieb 204 ein elektromagnetischer Linearantrieb 205, auch als Linearmotor bezeichenbar, mit einem beweglichen Teil 206 und einem das bewegliche Teil 206 antreibendem Teil 207 vorgesehen (Figur 19). Das bewegliche Teil 206 ist mit der Trenneinrichtung 203 verbunden. Die Trenneinrichtung 203 ist ein tangential, d. h. hier quer zu einer Folienbahn 208 beweglicher Bahnschneider 209.

Der Bahnschneider 209 ist entlang einer geraden Führung 210 geführt. Der Bahnschneider 209 ist an der Folienzuführung 211 einer (zeichnerisch nicht dargestellten) Schlauchbeutelmaschine vorgesehen. Parallel zu der Führung 210 ist eine Knickkante 212 an einer Stange 213 rechteckigen Querschnitts vorgesehen. Die Knickkante 212 dient einem geringfügigen Umknicken der Folienbahn 208. Eine Klinge 214 des Bahnschneiders 209 ist entlang der Knickkante 212 verschiebbar und durchtrennt entlang dieses Wegs die Folienbahn 208. Ein Bahnschneider 209 wird insbesondere beim Austausch von Vorratsrollen 215 eingesetzt.

Beim Ausführungsbeispiel der Figur 20 ist als Trenneinrichtung 203 ein Stechmesser 216 mit einer Zahnung 217 vorgesehen. Die Zahnung 217 ist in Trennrichtung ausgerichtet. Das Stechmesser 216 ist in einer Querbacke 218 einer (zeichnerisch nicht dargestellten) Schlauchbeutelmaschine in einer Aussparung 219 verschiebbar und dient der Durchtrennung eines Folienschlauchs 220. Durch eine Relativbewegung der heißen Querbacke 218 und einer zu dieser Querbacke 218 gegenläufigen Querbacke 221 werden eine Kopfnaht 222 und eine Bodennaht 223 in den Folienschlauch 220 geschweißt. Während dieses Schweißvorganges durchtrennt das Stechmesser 216 den Folienschlauch 220, so daß ein zuvor gefüllter Beutel 224 abgetrennt wird. Das Stechmesser 216 ist mit einem beweglichen Teil 206 eines elektromagnetischen Linearantriebs 205 verbunden. Das bewegliche Teil 206 wird von einem ortsfesten, antreibendem Teil 207 angetrieben.

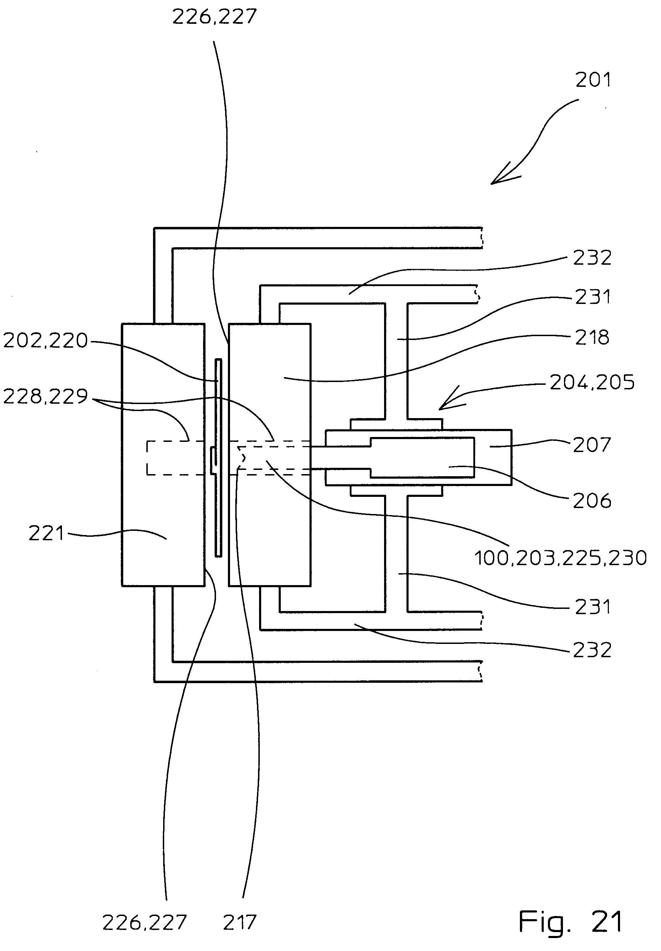

Bei dem Ausführungsbeispiel der Figur 21 ist die Trenneinrichtung 203 eine Lochstanze 225 in einer Querbacke 218 einer (zeichnerisch nicht dargestellten) Schlauchbeutelmaschine. An der Querbacke 218 sind eine Kopfnaht 222 erzeugende Schweißfläche 226 und eine Bodennaht 223 erzeugende Schweißfläche 227 vorgesehen (analog Figur 20). Die Lochstanze 225 ist senkrecht zur Schweißfläche 226 für die Kopfnaht 222 und senkrecht durch diese mittels einer Führung 228 geführt. Beim Durchstanzen des Verpackungsmaterials 202 gelangt die Lochstanze 225 etwas in die weitergehende Führung 228 in der zweiten Querbacke 221. Die Führung 228 ist jeweils eine Aussparung 229, und die Lochstanze 225 ist als Bolzen 230 ausgestaltet. Der Bolzen 230 ist starr mit dem beweglichen Teil 206 eines elektromagnetischen Linearantriebs 205 verbunden. Das bewegliche Teil 206 wird von dem antreibenden Teil 207 angetrieben. Während das antreibende Teil 207 des elektromagnetischen Linearantriebs 205 starr über eine Verbindung 231 mit einem Träger 232 einer Querbacke 218 verbunden ist, ist das bewegliche Teil 206 des Linearantriebs 205 gegenüber dem antreibenden Teil 207 beweglich und starr mit der Lochstanze 225 verbunden. Die Lochstanze 225 ist mittig bzgl. der Länge der Querbacken 218, 221 angeordnet. Die Lochstanze 225 weist eine Zahnung 217 auf.

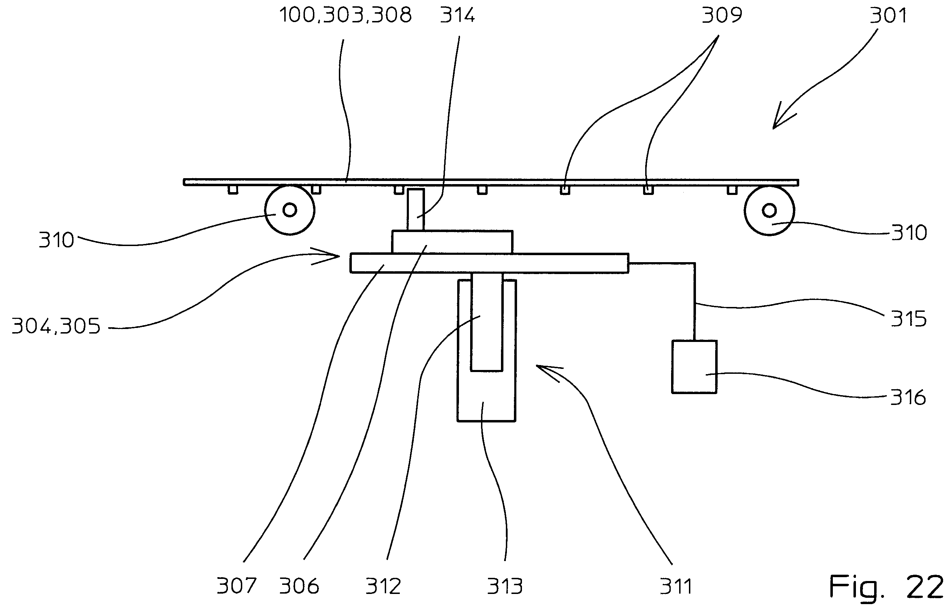

Bei einer Vorrichtung 301 zum Zuführen von Verpackungsmaterial, bestehend aus einer Einrichtung 303 als Einrichtung 100 zum Mitnehmen des Verpackungsmaterials und einer Einrichtung 304 zum Bewegen des mitgenommenen Verpackungsmaterials ist als Einrichtung 304 zum Bewegen ein elektromagnetischer Linearantrieb 305, auch Linearmotor genannt, vorgesehen (Figur 22). Der Linearantrieb 305 besteht im wesentlichen aus einem beweglichen Teil 306 und einem das bewegliche Teil 306 antreibendem Teil 307. Das bewegliche Teil 306 ist mit der Einrichtung 303 zum Mitnehmen verbindbar. Als Einrichtung 303 zum Mitnehmen des Verpackungsmaterials ist ein Transportband 308 vorgesehen. Am Transportband 308 sind Mitnahmeflächen 309 vorgesehen. Das bewegliche Teil 306 des Linearantriebs 305 wirkt gegen eine Mitnahmefläche 309 des Transportbandes 308 in Transportrichtung des Transportbandes 308 und nimmt so auf dem Transportband befindliches Verpackungsmaterial (zeichnerisch nicht dargestellt) mit.

Das Transportband 378 ist von Rollen 310 gestützt. Insgesamt sind zwei elektromagnetische Linearantriebe 305, 311 vorgesehen, wobei das antreibende Teil 307 des einen Linearantriebs 305 starr mit dem beweglichen Teil 312 des anderen Linearantriebs 311 verbunden ist. Die beweglichen Teile 306, 312 der Linearantriebe 305, 311 sind in Richtungen verschiebbar, die in einer Ebene und senkrecht zueinander verlaufen. Durch eine Rückstellung des beweglichen Teils 312 gegen das antreibende Teil 313 des Linearantriebs 311 wird der gesamte Linearantrieb 305 mitsamt dem Mitnehmer 314 abgesenkt. Durch eine anschließende Rückstellung des beweglichen Teils 306 gegenüber dem antreibenden Teil 307 wird der Mitnehmer 314 nach rechts gesetzt. Sodann wird durch Betätigung des Linearantriebs 313 der Mitnehmer 314 nach oben gegen die nächste Mitnahmefläche 309 gesetzt und das Transportband 308 durch eine Betätigung des Linearantriebs 305 um eine Taktstrecke nach links weiterbewegt. Der Linearantrieb 305 ist über eine elektrische Leitung 315 mit einem Rüttelfrequenzgeber 316 verbunden. Der Rüttelfrequenzgeber 316 dient dazu, daß der Linearantrieb 305 stotternd betrieben wird und sorgt somit für eine Verdichtung von verdichtbarem Produkt, welches in Verpackung auf dem Transportband 308 transportiert wird.

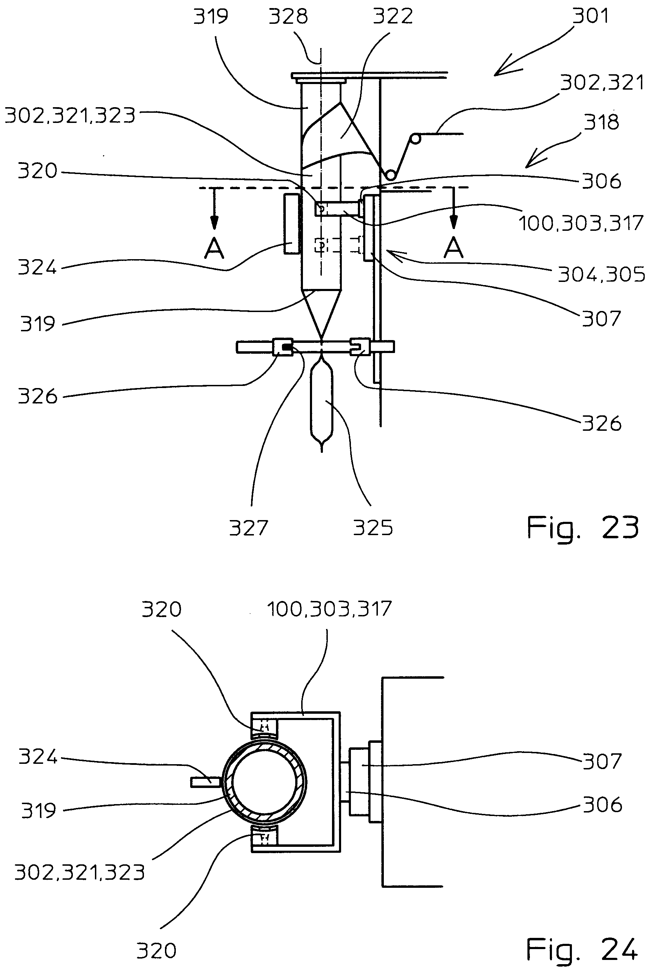

Beim Ausführungsbeispiel der Figuren 23 und 24 ist die Einrichtung 303 zum Mitnehmen des Verpak-

kungsmaterial 302 ein Folienabzug 317 einer vertikalen Schlauchbeutelmaschine 318. Der Folienabzug 317 wirkt gegen das Füllrohr 319. Das bewegliche Teil 306 des Linearantriebs 305 ist parallel zur Mittelachse 328 des Füllrohr 319 bewegbar. Als Einrichtung 303 zum Mitnehmen des Verpackungsmaterials 302 dienen Ansaugdüsen 320 einer (zeichnerisch nicht dargestellten) Vakuumpumpe. Das Verpackungsmaterial 302 ist eine Folienbahn 321, die an einer Formschulter 322 zu einem Folienschlauch 323 umgeformt und mittels einer Längssiegelbacke 324 längs verschweißt wird. Der Folienvorschub geschieht derart, daß der Folienabzug 317 von einer oberen Position (durchgezogene Linien in Figur 23) in eine untere Position (unterbrochene Linien in Figur 23) durch den Linearantrieb 305 verschoben wird. Während dieser Verschiebung halten die Ansaugdüsen 320 den Folienschlauch 323 durch Unterdruck fest und ziehen ihn nach unten. In der unteren Position wird statt Unterdruck Überdruck auf die Ansaugdüsen 320 gegeben, der Folienschlauch 323 somit vom Folienabzug 317 abgestoßen, und anschließend wird der Folienabzug 317 wieder in die obere Position gefahren. Die Höhendifferenz zwischen der oberen und der unteren Position entspricht der Länge eines Schlauchbeutels 325. Die Schlauchbeutelmaschine 318 arbeitet getaktet. Während einer Bewegung des Folienabzugs 317 nach oben erfolgt eine Querverschweißung des Folienschlauches 323 mittels Querbacken 326 und eine Durchtrennung des Folienschlauches 323 mittels eines Stechmessers 327. Die Befüllung der erzeugten Schlauchbeutel 325 erfolgt portionsweise durch das Füllrohr 319.

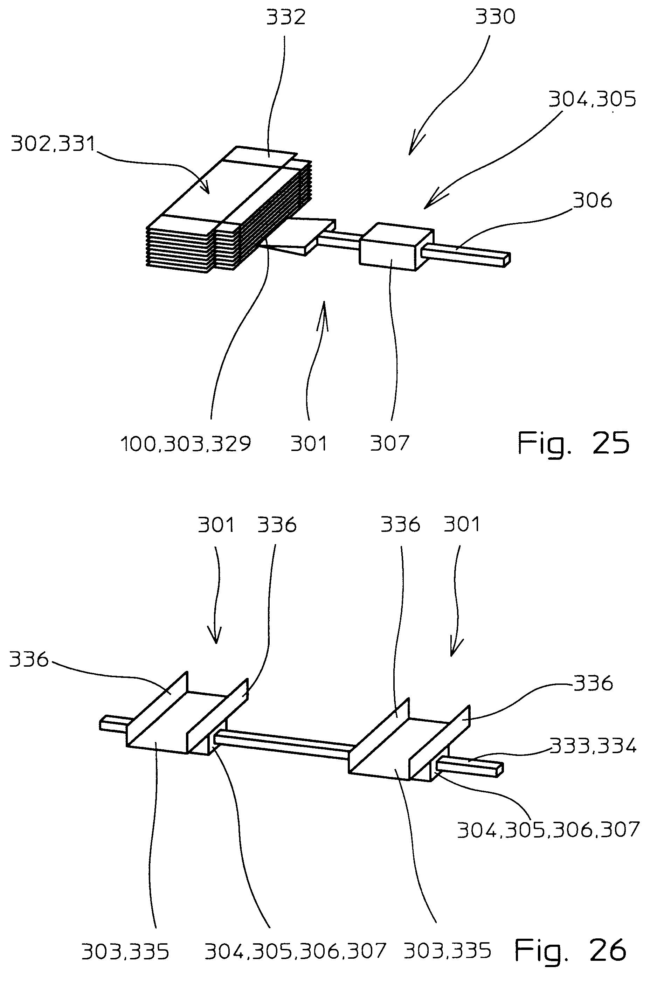

Beim Ausführungsbeispiel der Figur 25 ist als Einrichtung 303 zum Mitnehmen des Verpackungsmaterials 302 die Spitze 329 eines Zuschnittvereinzelners 330 vorgesehen. Die Spitze 329 ist mit dem beweglichen Teil 306 des Linearantriebs 305 mechanisch verbunden. Das antreibende Teil 307 des Linearantriebs 305 bewegt die Spitze 329 gegen einen Stapel 331 eines Magazins (nicht dargestellt) von ebenen Kartonzuschnitten 332 und schiebt bei jeder Bewegung auf den Stapel 331 zu einen Kartonzuschnitt 332 aus dem Stapel 331 heraus.

Beim Ausführungsbeispiel der Figur 26 ist das bewegliche Teil 306 identisch mit dem antreibenden Teil 307 des Linearantriebs 305. Das bewegliche und antreibende Teil 306, 307 schwebt entlang einer Führung 333. Die Führung 333 ist als Stange 334 ausgestaltet. Es befindet sich eine Vielzahl von Linearantrieben 305 entlang der ortsfesten Führung 333. Die antreibenden Teile 307 bzw. die Linearantriebe 305 haben jeweils den gleichen Abstand zueinander. Am beweglichen und antreibenden Teil 306, 307 ist oben als Einrichtung 303 zum Mitnehmen jeweils eine Plattform 335 befestigt. Die Plattformen 335 dienen der Aufnahme von (zeichnerisch nicht dargestelltem) Verpackungsmaterial. Quer zur Bewegungsrichtung und senkrecht zur Plattform 335 sind an jeder Plattform 335 Stützen zur Sicherung des Verpackungsmaterials angebracht.

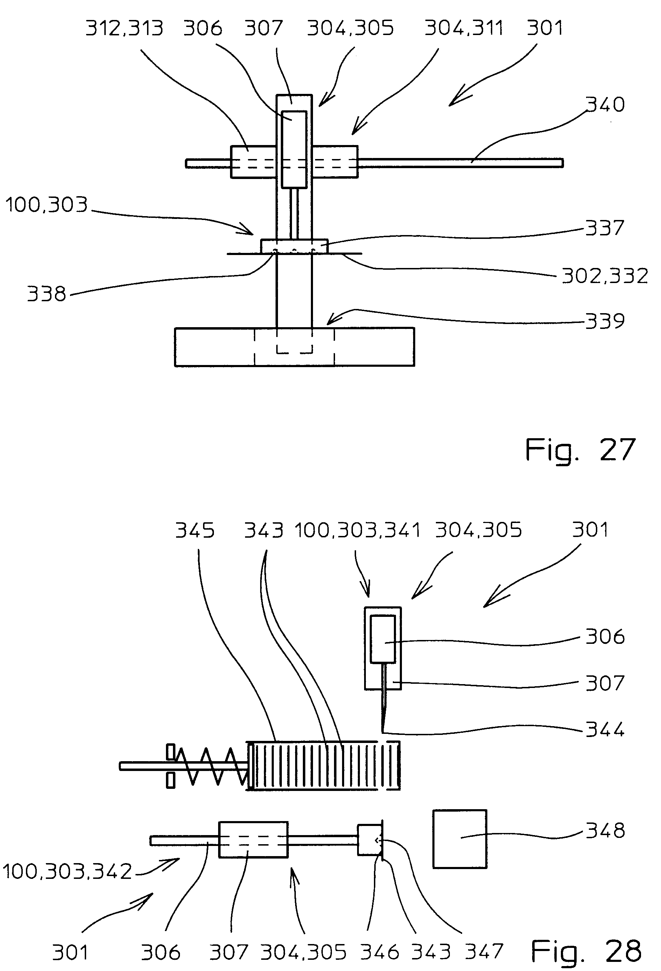

Beim Ausführungsbeispiel der Figur 27 ist als Einrichtung 303 zum Mitnehmen des Verpackungsmaterials 302 ein mit dem beweglichen Teil 306 eines Linearantriebs 305 verbundener Stempel 337 vorgesehen. Am Stempel 337 befinden sich bodenseitig Ansaugdüsen 338 zur Aufnahme und Wiederabgabe von Kartonzuschnitten 332. Der Stempel 337 ist durch Betrieb des antreibenden Teils 307 des Linearantriebs 305 vertikal von oben in einen Formschacht 339 hinein bewegbar. Durch Verschiebung eines weiteren Linearantriebs 311 entlang einer Stange 340 kann die Gesamtheit von Linearantrieb 305 und Stempel 337 horizontal verschoben werden. Der Stempel 337 ergreift zunächst mittels Unterdruck einen beleimten Kartonzuschnitt 332, bringt ihn dann durch eine Horizontalbewegung in die in Figur 27 dargestellte Position und drückt ihn schließlich nach unten durch den Formschacht 339. Während unten aus dem Formschacht 339 ein verleimter Karton herausfällt, wird der Stempel 337 zur Aufnahme eines weiteren Kartonzuschnitts 332 zurückgestellt.

Beim Ausführungsbeispiel der Figur 28 ist als Einrichtung 303 zum Mitnehmen jeweils ein Etikettenmitnehmer 341, 342 vorgesehen, wobei der eine Etikettenmitnehmer 341 die Etiketten 343 an den anderen Etikettenmitnehmer 342 weitergibt. Der eine Etikettenmitnehmer 341 ist etikettenseitig in Form einer Linie 344 ausgestaltet und schiebt jeweils ein Etikett 343 aus einem Magazin 345. Der zweite Etikettenmitnehmer 342 ist etikettenseitig eben und mit einer Anlagefläche 346 zur Weiterführung der Etiketten 343 ausgestaltet. Eine Ansaugdüse 347 einer Vakuumpumpe ist im Etikettenmitnehmer 342 vorgesehen. Die Ansaugdüse 347 mündet in die Anlagefläche 346. Ein Etikett 343 wird an der Anlagefläche 346 mittels Unterdruck festgehalten, gegen eine beleimte Verpackung 348 gedrückt und durch Überdruck aus der Ansaugdüse 347 von der Anlagefläche 346 losgelassen.

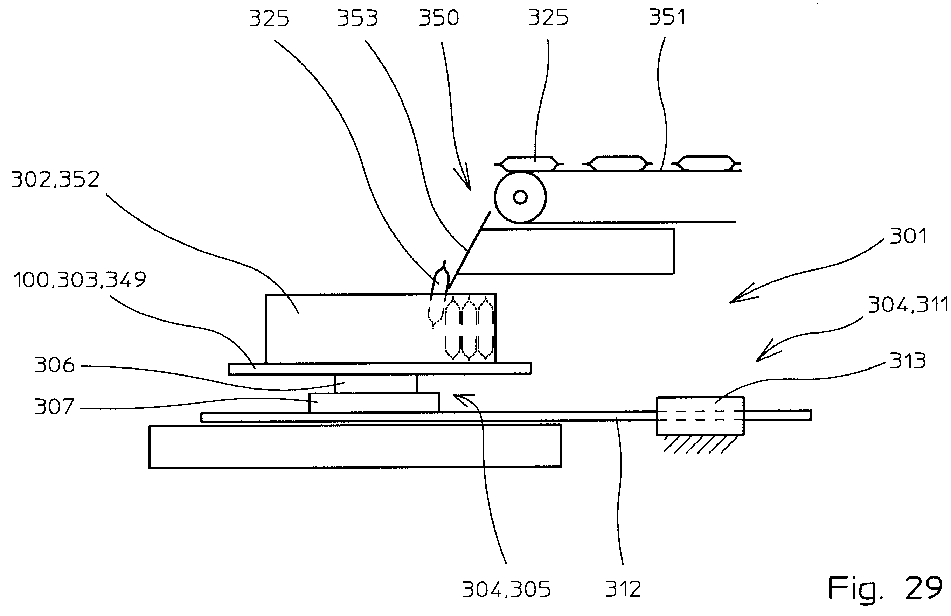

Beim Ausführungsbeispiel der Figur 29 ist die Einrichtung 303 zum Mitnehmen des Verpackungsmaterials 302 eine horizontal verschiebbare Platte 349, über der sich eine Produktabgabestelle 350 befindet. An der Produktabgabestelle 350 werden Schlauchbeutel 325 von einem Förderband 351 über eine Rutsche 353 in einen Sammelbehälter abgegeben. Zur Erzeugung einer ersten Reihe von Schlauchbeuteln 325 wird unmittelbar vor jedem ankommenden Schlauchbeutel 325 die Platte 349 mitsamt dem Sammelbehälter 352 jeweils um eine Beuteldicke nach rechts verschoben. Hierzu dient als Einrichtung 304 zum Bewegen des mitgenommenen Verpackungsmaterials 302 der Linearantrieb 311. Dessen antreibendes Teil 313 treibt ein bewegliches Teil 312 an. Zwischen dem beweglichen Teil 312 und der Platte 349 befindet sich ein Linearantrieb 305. Das antreibende Teil 307 des Linearantriebs 305 ist starr mit dem beweglichen Teil 312 des Linearantriebs 311 verbunden. Ist eine Reihe Schlauchbeutel 325 im Sammelbehälter 352 eingebracht, so verschiebt der Linearantrieb 305 die Platte 349 mitsamt dem Sammelbehälter 352 um eine Beutelbreite parallel zu der ersten Reihe, um eine weitere Reihe Schlauchbeutel 325 zu erzeugen.

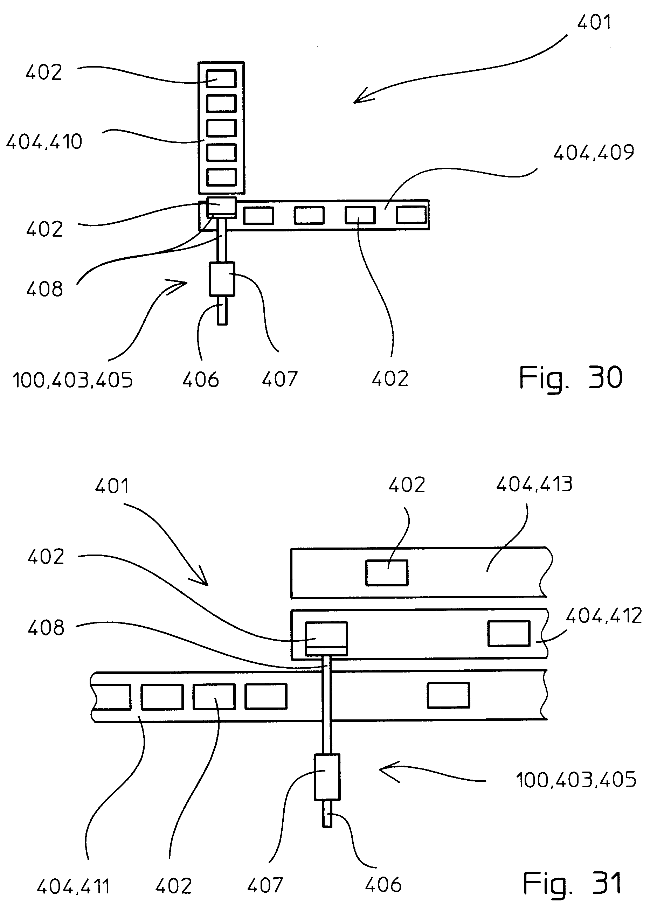

Eine Transportvorrichtung 401 für zu verpackendes Produkt 402 besteht aus einer Einrichtung 403 als Einrichtung 100 zur Bewegung des Produkts 402 und einer Einrichtung 404 zur Führung des bewegten Produkts 402 (Figur 30). Als Einrichtung 403 zur Bewegung ist ein elektromagnetischer Linearantrieb (Linearmotor) mit einem beweglichen Teil 406 und einem das bewegliche Teil 406 antreibendem Teil 407 vorgesehen. Das bewegliche Teil 406 ist an der Einrichtung 404 zur Führung bewegbar. Das bewegliche Teil 406 ist starr mit einem Stempel 408 verbunden. Der Stempel 408 wirkt gegen das Produkt 402. Als Einrichtung 404 zur Führung des bewegten Produkts 402 sind zwei rechtwinklig zueinander angeordnete Transportbänder 409, 410 vorgesehen. Das eine Transportband 409 fördert dem anderen Transportband 410 zu. Der Stempel 408 ist quer zum zufördernden Transportband 409 und auf das abfördernde Transportband 410 zu bewegbar und schiebt jeweils ein ankommendes Produkt 402 extrem schnell vom Transportband 409 auf das Transportband 410. Nach jedem Verschiebevorgang wird der Stempel 408 ebenso schnell in seine Ausgangslage zurückgestellt.

Beim Ausführungsbeispiel der Figur 31 ist ein Stempel 408 quer zu einem Transportband 411 und zwei weiteren parallel zum ersten Transportband 411 verlaufenden Transportbändern bewegbar und verteilt Produkt 402 vom Transportband 411 gleichmäßig.

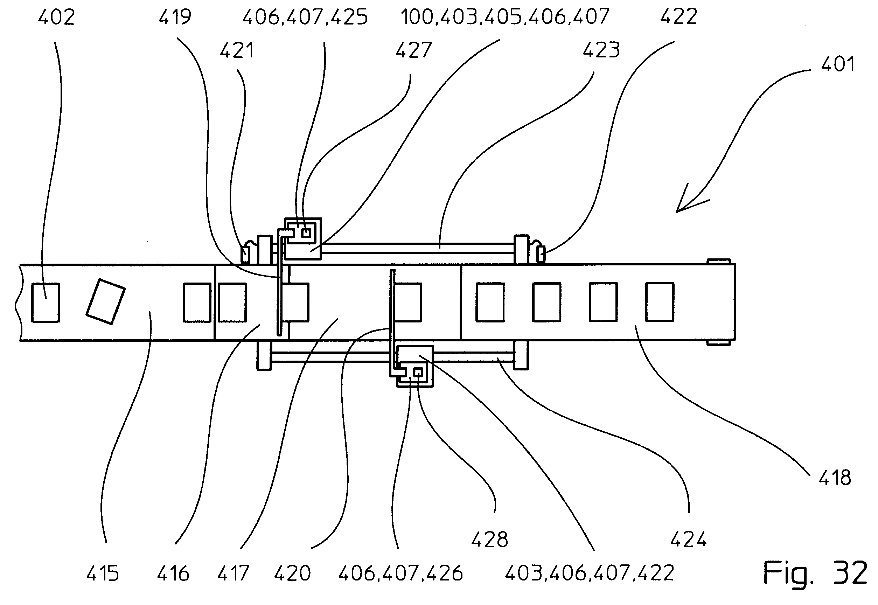

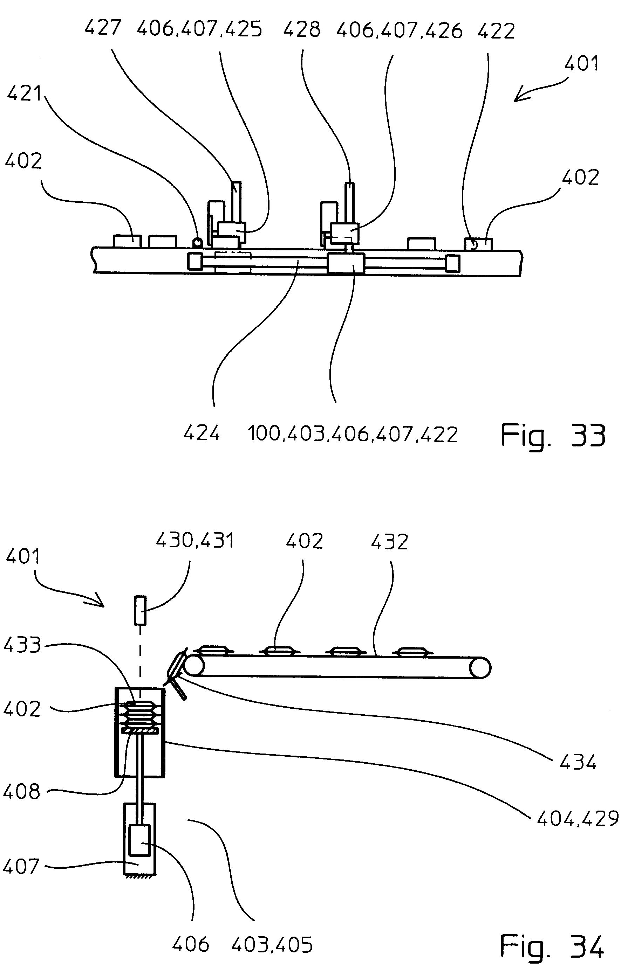

Die Transportvorrichtung 401 kann auch als Produktsynchronisator 414 ausgestaltet sein (Figur 32, Figur 33). Der Produktsynchronisator 414 verschiebt auf Transportbändern 415, 416, 417, 418 geführtes Produkt 402 derart in Förderrichtung, daß zwischen jeweils zwei Produkten 402 ein gleicher Abstand realisiert wird. Zwei Stempel 419, 420 sind parallel zum und am Förderband 417 bewegbar und relativ zum Förderband 417 höhenverstellbar. An der Transportvorrichtung 401 sind Sensoren 421, 422 zur Erkennung der Positionen der Produkte 402 vorgesehen. Die Geschwindigkeit des Transportbandes 417 ist deutlich schneller als die Geschwindigkeit des Transportbandes 416, um den Abstand zwischen den ankommenden Produkten 402 zu vergrößern. Dies ist insbesondere für besonders dicht nebeneinander liegende Produkte 402 wichtig. Das Förderband 417 hat eine gut gleitfähige Oberfläche, entlang der das Produkt 402 mit Hilfe des einen Stempels 419 derart in Förderrichtung verschoben wird, so daß die Produkte 402 auf dem Förderband 418 jeweils gleichen Abstand haben. Die Verschiebung passiert entsprechend der Meßwerte des Sensors 421 und wird über den Sensor 422 kontrolliert. Die Stempel 419, 420 arbeiten abwechselnd. Eine Verschiebung wird derart realisiert, daß ein elektromagnetischer Linearantrieb 405, 422, bei dem der antreibende Teil 407 mit dem beweglichen Teil 406 identisch ist, entlang einer Führungsstange 423, 424 verschoben wird. Nach Beendigung einer Verschiebung wird der Stempel 419, 420 mittels eines elektromagnetischen Linearantriebs 425, 426 nach oben verschoben. Bei diesem Linearantrieb 425, 426 ist ebenfalls das antreibende Teil 407 gleich dem beweglichen Teil 406, und die Verschiebung des beweglichen Teils 407 verläuft entlang einer Führungsstange 427, 428. Der hochgestellte Stempel 419, 420 wird über das Produkt 402 zurück in eine Ausgangsposition gestellt, abgesenkt und verschiebt sodann das nächste Produkt 402.

Bei einer weiteren Ausgestaltung (Figur 34) der erfindungsgemäßen Transportvorrichtung 401 ist ein Stempel 408 mittels eines Linearantriebs 405 in einem Füllschacht 429 höhenverstellbar. Eine Höhenmeßeinrichtung 430 mit einem Ultraschallsensor 431 mißt die Füllhöhe im Füllschacht 429. Oberhalb des Füllschachtes 429 wirft eine umlaufende Produktzuführungeinrichtung 432 Produkt 402 über eine Rutsche 434 in den Füllschacht 429. Die Höhenmeßeinrichtung 430 und der Linearantrieb 405 sorgen für eine stets gleiche Höhe der oberen Oberfläche 433 des obersten Produkts 402 im Füllschacht 429, womit jedes fallende Produkt 402 die gleiche Fallhöhe und somit gleiche Fallzeit erleidet.

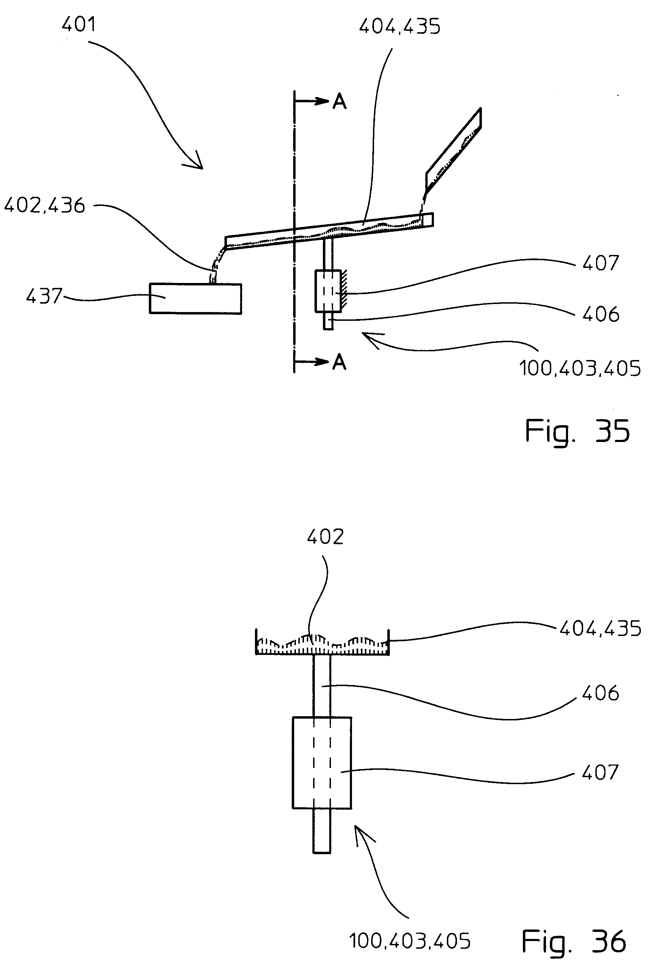

Beim Ausführungsbeispiel der Figuren 35 und 36 ist als Einrichtung 404 zur Führung des bewegten Produkts 402 eine Förderrinne 435 vorgesehen. Das bewegliche Teil 406 eines elektromagnetischen Linearantriebs 405 ist senkrecht zur Förderrichtung bewegbar und starr mit der Einrichtung 404 verbunden. Der Linearantrieb 405 rüttelt die Förderrinne 435 und sorgt für einen gleichmäßigen Produktstrom 436 in einen Behälter 437.

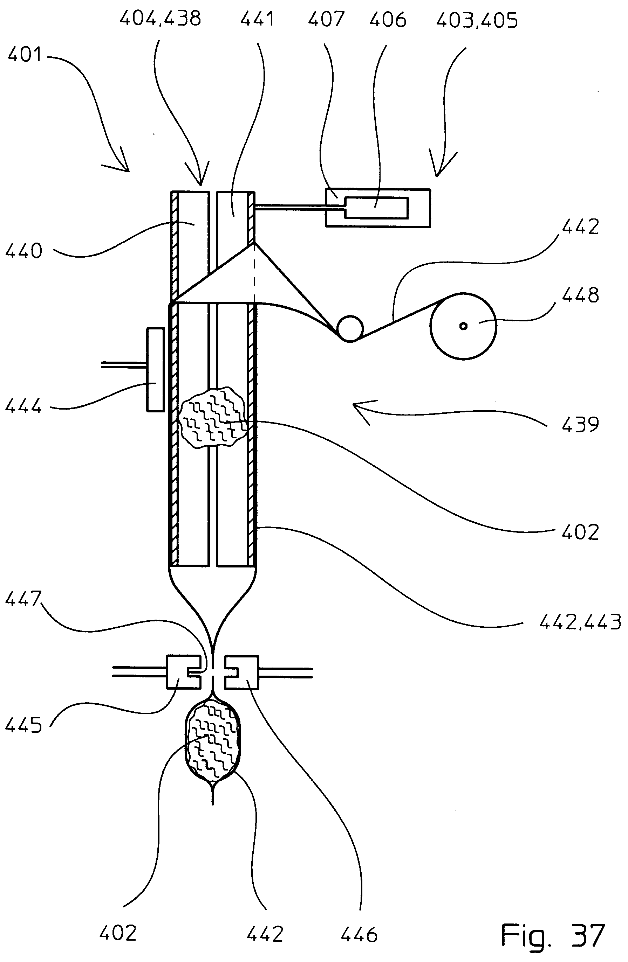

Beim Ausführungsbeispiel der Figur 37 ist als Einrichtung 404 zur Führung des bewegten Produkts 402 ein in vertikaler Richtung zweigeteiltes Füllrohr 438 vorgesehen. Das Füllrohr 438 ist Teil einer vertikalen Schlauchbeutelmaschine 439. Einer der beiden Füllrohrteile 440, 441 ist mittels eines Linearantriebs 405 horizontal verschiebbar. Somit kann selbst relativ großstückiges Produkt 402 in einer Folie 442 eng verpackt werden. Das Füllrohr 438 ist nur während des freien Falls des Produkts 402 erweitert. Nach Beendigung des Fallvorgangs wird das Füllrohrteil 441 wieder gegen das andere Füllrohrteil 440 gesetzt, der Folienschlauch 443 mittels einer Längssiegelbacke 444 längs und mittels Quersiegelbacken 445, 446 quer verschweißt, sowie mit einem Trennmesser 447 getrennt und weiter von einer Folienrolle 448 abgezogen.

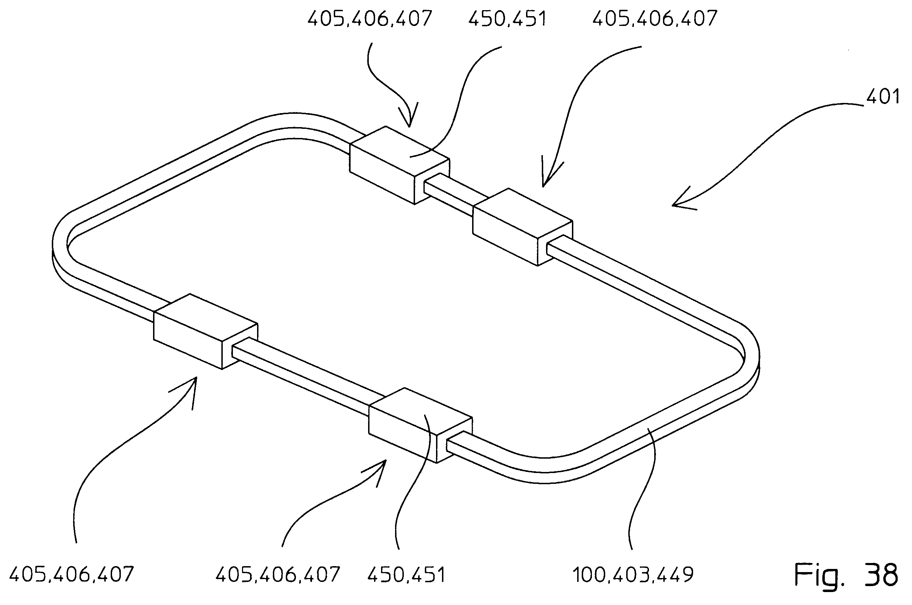

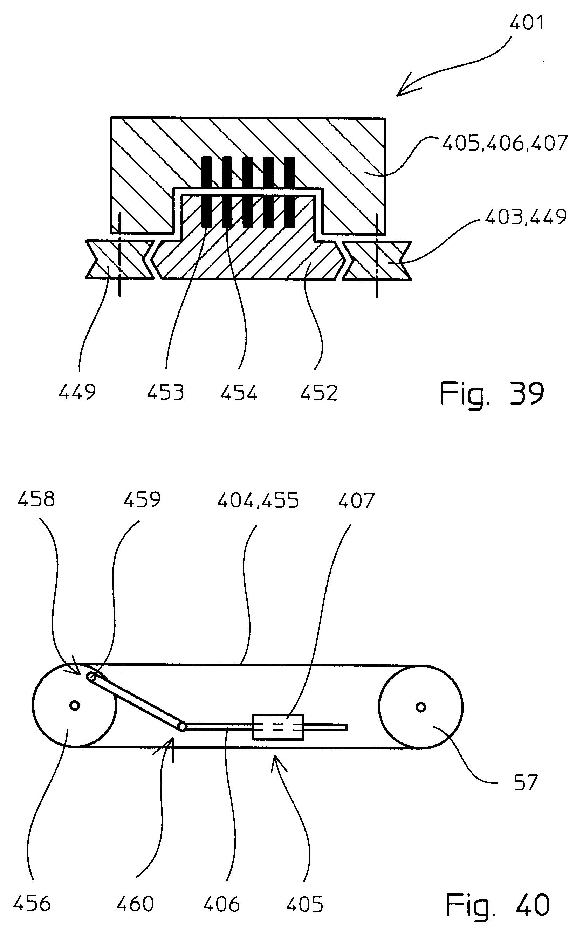

Beim Ausführungsbeispiel der Figur 38 ist das bewegliche Teil 406 stets gleich dem antreibenden Teil 407 des Linearantriebs 405. Als Einrichtung 403 zur Führung ist eine umlaufende Bahn 449 vorgesehen. Der obere Bereich 450 jedes beweglichen Teils 406 ist als Plattform 451 ausgebildet und dient dem Transport von (nicht dargestelltem) Produkt. In einer anderen Ausführungsform (Figur 39) ist in die Bahn 449 eine Leitbahn 452 eingesetzt, die über eine Einzelwagencodierung 453 und eine Polansteuerung 454 dem ortsgenauen Verschieben der beweglichen Teile 406 dient.

Beim Ausführungsbeispiel der Figur 40 läuft ein Transportband 455 um zwei Räder 456, 457 um. Ein Rad 456 ist über ein am Radrand 458 angeordnetes Gelenk 459 und einen Gelenkmechanismus 460 mit dem beweglichen Teil 406 eines elektromagnetischen Linearantriebs 405 verbunden. Der Linearantrieb 405 treibt derart das Transportband 455 an.

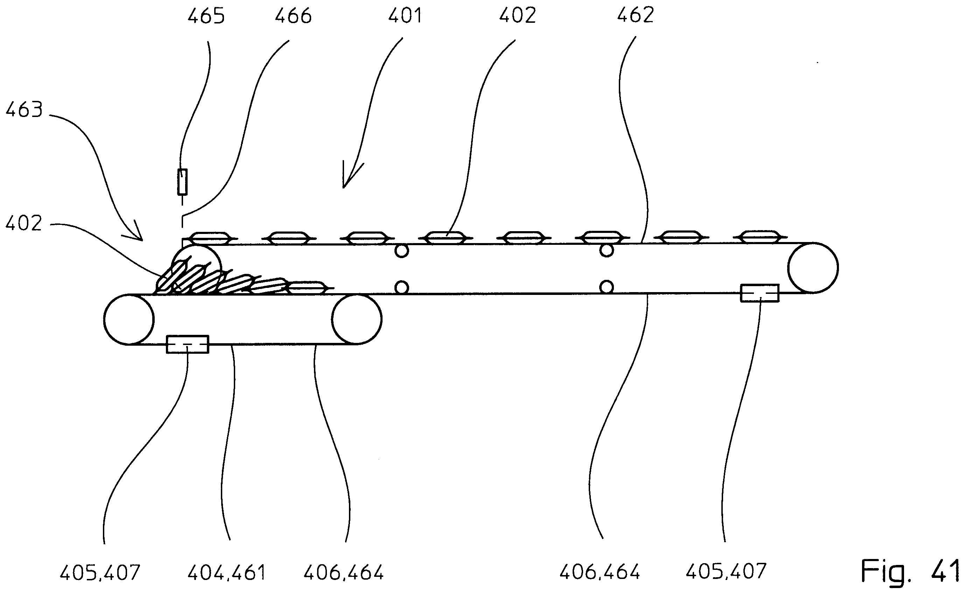

Beim Ausführungsbeispiel der Figur 41 ist als Einrichtung 4 zur Führung des bewegten Produkts 402 ein umlaufendes Transportband 461 vorgesehen. Oberhalb des Transportbandes 461 ist ein weiteres umlaufende Transportband 462 vorgesehen. An einer Übergabestelle 463 erfolgt eine Produktübergabe durch freien Fall vom oberen Transportband 462 auf das untere Transportband 461. Die Umlaufgeschwindigkeit des oberen Transportbandes 462 ist größer als die des unteren Transportbandes 461. Deshalb ergibt sich die geschuppte Anordnung des Produkts 402 auf dem unteren Transportband 461. Der Antrieb der Transportbänder 461, 462 erfolgt jeweils dadurch, daß das bewegliche Teil 406 eines Linearantriebs 405 ein Teil 464 eines umlaufenden Transportbandes 461, 462 ist. Die Transportbänder 461, 462 werden derart angetrieben. Ein Sensor 465 mit seinem Meßstrahl 466 bestimmt die Lage der ankommenden Produkte 402 und dient somit der Abstimmung der Umlaufgeschwindigkeit des unteren Förderbandes 461 mit dem ankommenden Produkt 402.

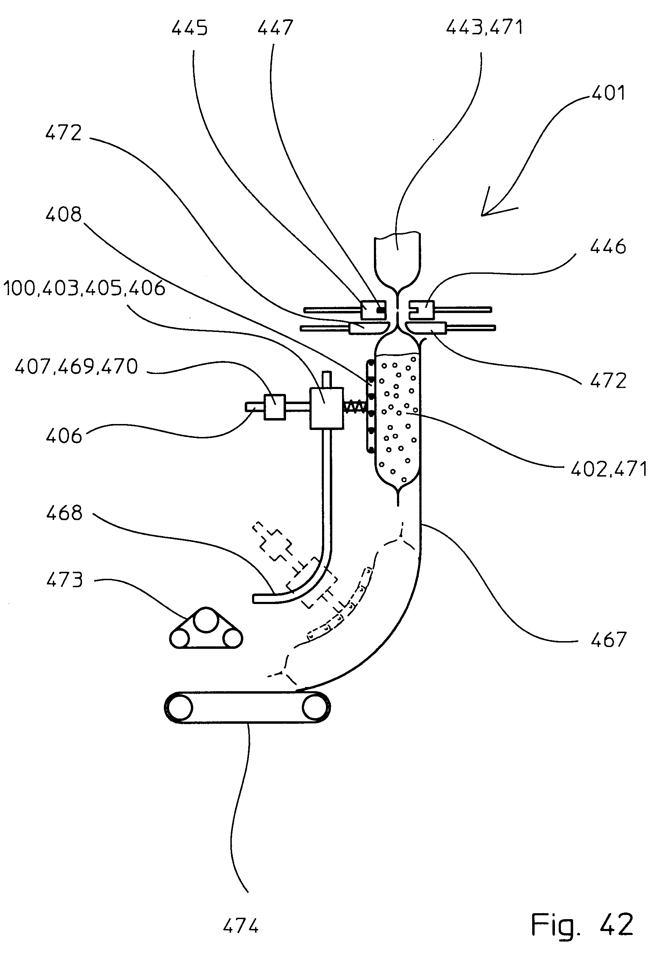

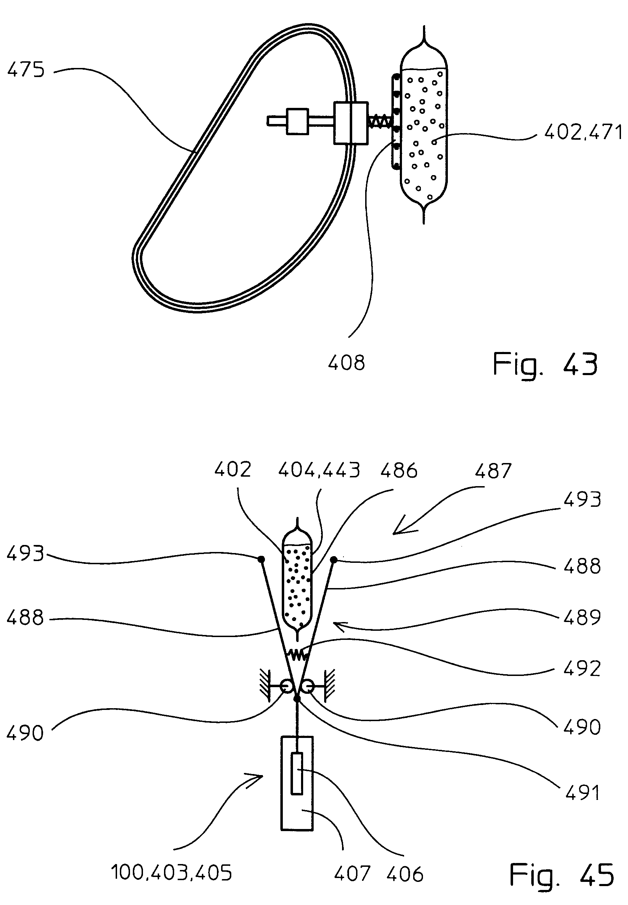

Beim Ausführungsbeispiel der Figur 42 ist das bewegliche Teil 406 eines elektromagnetischen Linearantriebs 405 parallel zu einer Wandung 467 und entlang einer Führung 468 verschiebbar. Das bewegliche Teil 406 weist einen gegen die Wandung 467 gerichteten Stempel 408 auf. Quer zur Verschieberichtung ist eine Druckeinrichtung 469 am beweglichen Teil 406 vorgesehen. Die Druckeinrichtung 469 dient dazu, ein Produkt 402 mit dem Stempel 408 gegen die Wandung 467 einzuklemmen. Als Druckeinrichtung 469 ist ein elektromagnetischer Linearantrieb 470 vorgesehen. Beute 471 einer Schlauchbeutelmaschine werden mittels Luftausdrückern 472 von überflüssiger Luft befreit, mittels Quersiegelbacken 445, 446 verschweißt, von einem Trennmesser 447 von einem Folienschlauch 443 getrennt und zur Verhinderung einer tropfenförmigen Beutelform in flachgedrücktem Zustand entlang der Wandung 467 einem System gegenläufiger Bänder 473, 474 zugeführt (gestrichelt: weitere Position des Stempels 408). Nach einer Beuteldurchschleußung wird der Stempel 408 zur Aufnahme des nächsten Beutels 471 entlang der Führung 468 zurückgestellt. Die Führung 475 kann auch umlaufend sein (Figur 43).

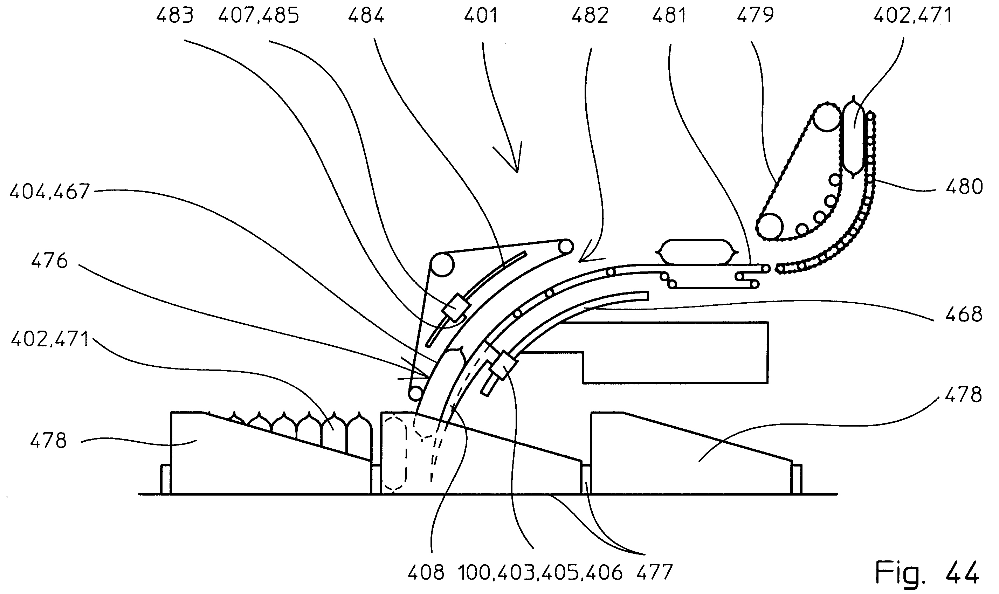

Beim Ausführungsbeispiel der Figur 44 werden die Beutel 471 am Ende 476 einer Wandung 467 in flachem Zustand an einer Zuführeinrichtung 477 für Sammelbehälter 478 in einen vorbeibewegten Sammelbehälter gespendet. Ein Beute 471 gelangt hier über ein System gegenläufiger Ketten 479, 480 über ein Transportband 481 in einen Schacht 482 zwischen eine umlaufende Wandung 467 und einen entlang einer Führung 468 verschiebbaren Stempel 408. Der Druck auf den Beutel 471 im Schacht 482 wird mittels einer Feder 483 eines entlang einer Führung 484 bewegbaren Linearantriebs 485 gegen die umlaufende Wandung 467 erzeugt.

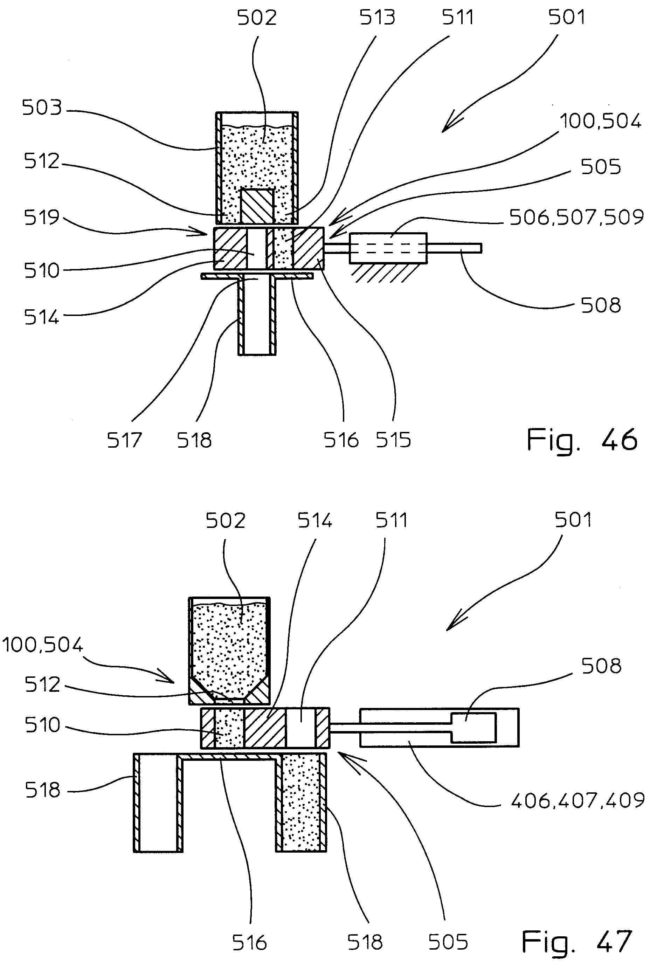

Beim Ausführungsbeispiel der Figur 45 ist als Einrichtung 404 zur Führung des bewegten Produkts 402 das verschweißte Ende 486 eines Folienschlauchs 443 einer vertikalen Schlauchbeutelmaschine (nicht dargestellt) vorgesehen. Ein Produktabstreifer 487 ist mit dem beweglichen Teil 406 eines elektromagnetischen Linearantiebs 405 verbunden. Bei Betrieb des antreibenden Teils 407 des Linearantriebs 405 wird das bewegliche Teil 406 zunächst nach unten bewegt, wodurch die Schenkel 488 des Gestänges 489 durch die ortsfesten Rollen 490 und das Gelenk 491 gegen die Kraft der Feder 492 zusammengedrückt werden. Die Rollen 493 an den Schenkeln 488 bewegen sich aufeinander zu und nach unten und streifen dadurch im Folienschlauch 443 enthaltenes Produkt 402 nach unten. Durch eine Rückstellung des beweglichen Teils 406 gegenüber dem antreibenden Teil 407 nach oben wird der Produktabstreifer 487 für die nächste Produktportion wieder geöffnet und in seine obere Position gebracht.

Bei einer Vorrichtung 501 zur Dosierung fließfähigen Produkts 502, bestehend aus einem Vorratsgefäß 503, einer Volumendosiereinrichtung 504 als Einrichtung 100 und einem Verschiebemechanismus 505 mit Antrieb 506 zur Verschiebung der Volumendosiereinrichtung 504 ist der Antrieb 506 ein elektromagnetischer Linearantrieb 407 mit einem beweglichen Teil 508 und einem das bewegliche Teil 508 antreibendem Teil 509 (Figur 46). Das bewegliche Teil 508 ist starr mit dem Verschiebemechanismus 505 der Volumendosiereinrichtung 504 verbunden. Die Volumendosiereinrichtung 504 enthält zwei Dosierkammern 510, 511, die unterhalb von zwei Auslässen 512, 513 des Vorratsgefäßes 503 mit dem Verschiebemechanismus 505 verschiebbar sind. Die Dosierkammern 510, 511 sind in Verschieberichtung durch die Verschließkörper 514, 515 begrenzt. Jeweils ein Verschließkörper 514, 515 verschließt einen Auslaß 512, 513 während der Befüllung einer Dosierkammer 510, 511. Parallel versetzt zu den Auslässen 512, 513 ist in einem Verschlußteil 516 ein Durchlaß 517 zur Abgabe von Produkt 502 vorgesehen, durch den Produkt 502 nach unten in ein vertikales Füllrohr 518 einer Schlauchbeutelmaschine fällt. Die Dosierkammern 510, 511 und die Verschließkörper 514, 515 bilden ein einziges Bauteil 519. Der Verschließmechanismus 505 ist geradlinig verschiebbar. Während des Befüllens einer Dosierkammer 510, 511 wird stets das Produkt 502 aus der anderen Dosierkammer 510, 511 nach unten in das Füllrohr 518 abgegeben.

Beim Ausführungsbeispiel der Figur 47 ist als Unterschied zu dem Ausführungsbeispiel der Figur 1 lediglich ein bodenseitiger Auslaß 512 im Vorratsgefäß 503 vorgesehen, ist lediglich ein Verschließkörper 514 zum Verschließen des Auslasses 512 vorgesehen, und zwar mittig zwischen den verschiebbaren Dosierkammern 510, 511, und sind zwei Füllrohre 518 am bodenseitigen Verschlußteil 516 für die Dosierkammern 510, 511 vorgesehen. Die beiden Füllrohre 518 werden durch Hin- und Herschieben des Verschiebemechanismusses 505 abwechselnd befüllt.

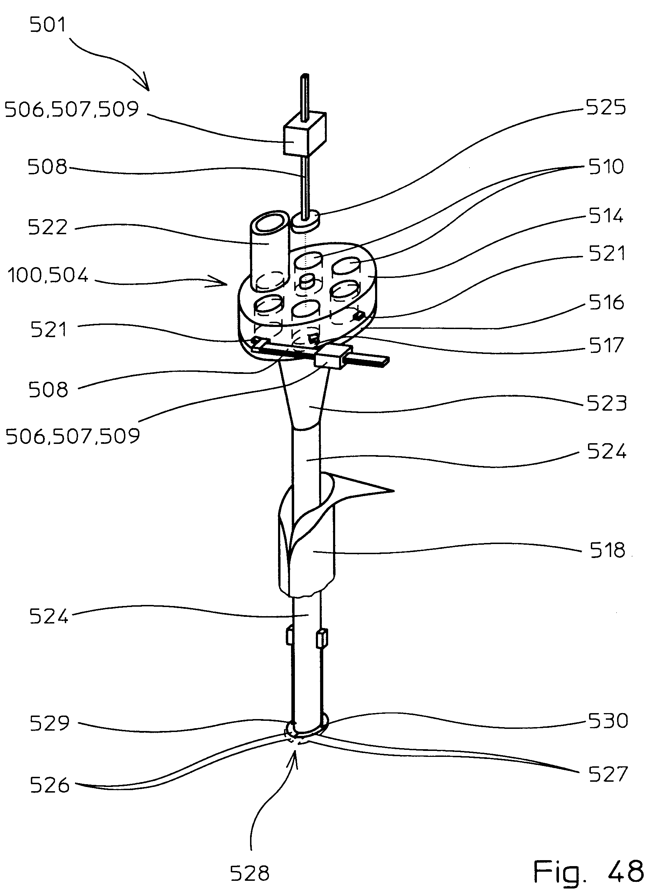

Beim Ausführungsbeispiel der Figur 48 sind die Dosierkammern 510 in einem als Rondell ausgestaltetem Verschiebemechanismus 505 angeordnet. Das Rondell 520 ist kreisförmig verdrehbar. Am Rondell 520 sind radial nach außen weisende Nocken vorgesehen. Jeder Nocken 521 ist radial einer Dosierkammer 510 zugeordnet. Das bewegliche Teil 508 eines elektromagnetischen Linearantriebs 507 stößt durch Hin- und Herbewegung jeweils gegen einen Nocken 521 und verdreht dadurch das Rondell 521 jeweils um einen definierten Winkel. Die Dosierkammern 510 werden an einem mit einem Vorratsgefäß verbundenen Schlauch 522 befüllt, in gefülltem Zustand in zwei Takten über den Durchlaß 517 des Verschlußteils 516 bewegt, und dort wird das dosierte Produkt über einen Trichter 523 und ein Rohr 524 in das Füllrohr 518 einer vertikalen Schlauchbeutelmaschine abgegeben. Ein mit dem beweglichen Teil 508 eines elektromagnetischen Linearantriebs 507 verbundener Stempel 525 ist von oben in die Dosierkammer 510 bewegbar, die sich am Durchlaß 517 befindet und beschleunigt das Produkt in dieser Dosierkammer 510 zusätzlich während dessen freien Falls. Direkt unterhalb des Füllrohres 518 sind zum Verschließen des Füllrohres 518 zwei Rückhalteklappen 526, 527 vorgesehen. Die Rückhalteklappen 526, 527 können gegen die bodenseitige Öffnung 528 des Füllrohres 518 geklappt werden. Die Rückhalteklappen 526, 527 sind jeweils über ein Gelenk 529, 530 mit dem beweglichen Teil 508 eines elektromagnetischen Linearantriebs 507 verbunden. In ihrer Verschlußstellung (durchgezogene Linien) verschließen sie die Öffnung 528 und verhindern so, daß nachrieselndes Produkt die Verschweißung von Beutelquernähten an der Schlauchbeutelmaschine stört. In ihrer Öffnungsstellung (unterbrochene Linien) geben sie die Öffnung 528 frei.

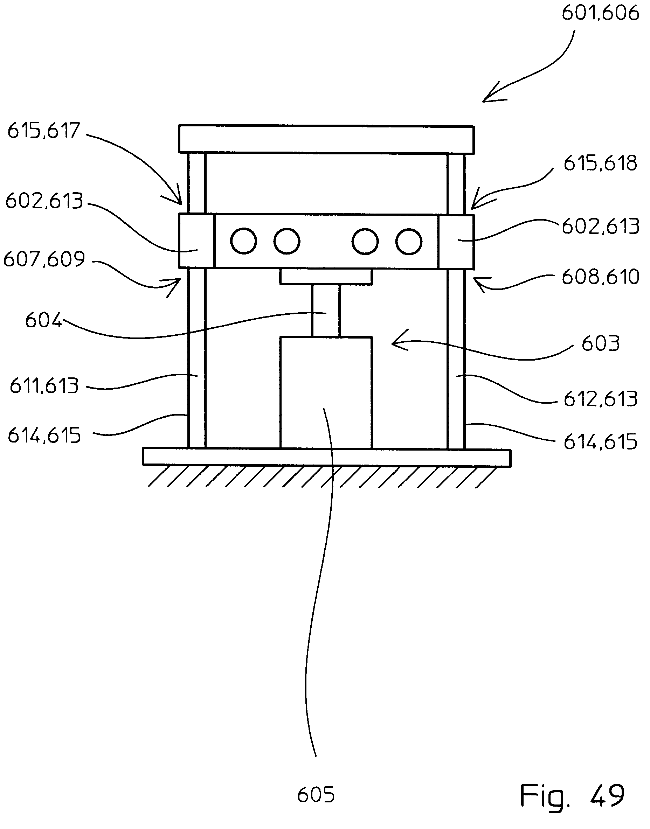

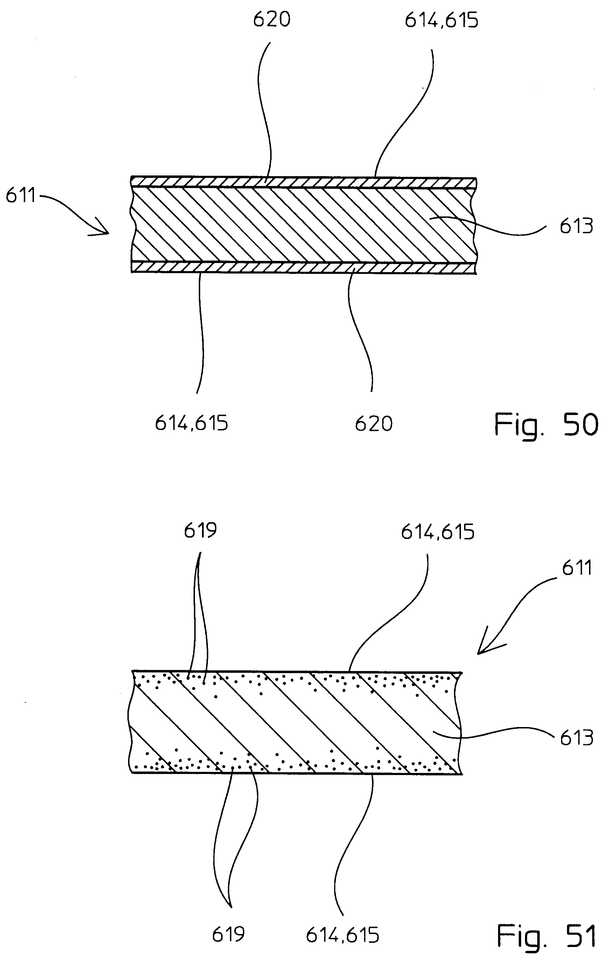

Bei einer Vorrichtung 601 zum Verschieben zweier Elemente 602 mittels eines elektromagnetischen Linearantriebs 603, wird ein mit den Elementen 602 verbundenes, bewegliches Teil 604 des Linearantriebs 603 von einem antreibenden Teil 605 des Linearantriebs 603 angetrieben (Figur 49). Die Vorrichtung 601 ist eine Höhenverstellvorrichtung 606. Es sind zwei Führungen 607, 608 für das bewegliche Teil 604 über die Elemente 602 und einen Steg 616 mit dem beweglichen Teil 604 verbunden. Als Führung 607, 608 dienen Gleitlager 609, 610. Jedes Gleitlager 609, 610 weist eine vertikal verlaufende Stange 611, 612 aus Stahl 613 auf, auf deren Mantel 614 eine abriebsmindernde Gleitfläche 615 vorgesehen ist. Jedes Element 602 besteht aus Stahl 613 und gleitet mit Hilfe eines Durchlasses 617, 618 auf einer Gleitfläche 615 einer Stange 611, 612. Die Innenflächen der Durchlasse 617, 618 weisen ebenfalls abriebsmindernde Gleitflächen 615 auf. Die Abstände zwischen jeweils einer Führung 607, 608 und dem beweglichen Teil 604 sind gleich. An allen Gleitflächen 615 ist eine erhöhte Konzentration an Aluminium 619 vorhanden (Figur 51). Das Aluminium 619 wurde mittels Ionenimplantation in den Stahl 613 eingebracht. Am Mantel 614 der Stangen 611, 612 ist die Aluminiumkonzentration am höchsten. Dort ist auch die reibungsmindernde Eigenschaft des Stahls 613 am größten.

Als Gleitfläche 615 kann auch eine ca. einen Nanometer dicke Schicht diamantartigen Kohlenstoffs 620 auf den Stahl 613 aufgebracht werden (Figur 50). Der diamantartige Kohlenstoff 620 hat außer seiner extremen Abriebsstärke noch den Vorteil, daß sein Reibungskoeffizient einer der niedrigsten Reibungskoeffizienten von Feststoffen ist.

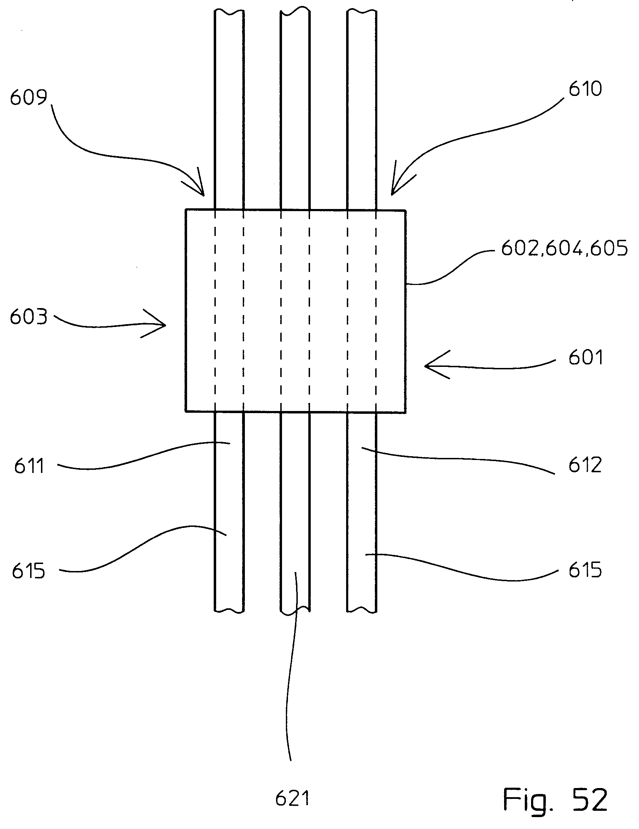

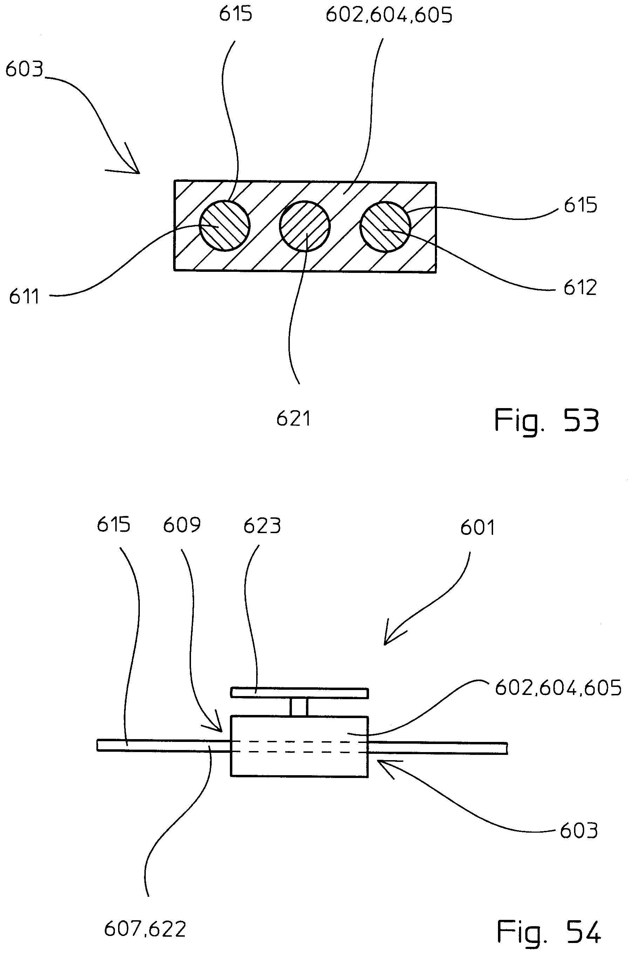

Beim Ausführungsbeispiel der Figuren 52 und 53 ist das bewegliche Teil 604 des elektromagnetischen Linearantriebs 603 gleich dem antreibenden Teil 605 und dem zu verschiebenden Element 602. Das antreibende Teil 605 wirkt gegen eine mittig zwischen den Stangen 611, 612 verlaufende Stange 621. Alle Stangen 611, 612, 621 durchlaufen das Element 602. Während die mittlere Stange 621 dem Antrieb des Elements 602 dient, dienen die äußeren Stangen 611, 612 als Führung 607, 608. Lediglich die äußeren Stangen 611, 612 weisen jeweils eine Gleitfläche 615 auf.

Beim Ausführungsbeispiel der Figur 54 sind keine separaten Führungsstangen vorgesehen. Als Führung 607 dient hier die mittig das Element 602 durchlaufende Stange 622, gegen die auch das antreibende Teil 605 des elektromagnetischen Linearantriebs 603 wirkt. Die Stange 622 hat eine Gleitfläche 615 und hat einen passgenauen Sitz im Element 602. Das bewegliche Teil 604 ist horizontal verschiebbar und weist oben eine mit dem beweglichen Teil 604 starr verbundene Plattform 623 zum Transport (zeichnerisch nicht dargestellt) von Gütern auf. Die Länge des beweglichen Teils 604 in Bewegungsrichtung ist mehr als doppelt so groß wie jede seiner Abmessungen in einer Ebene senkrecht zur Bewegungsrichtung, wodurch das Element 602 besonders gut geführt ist.

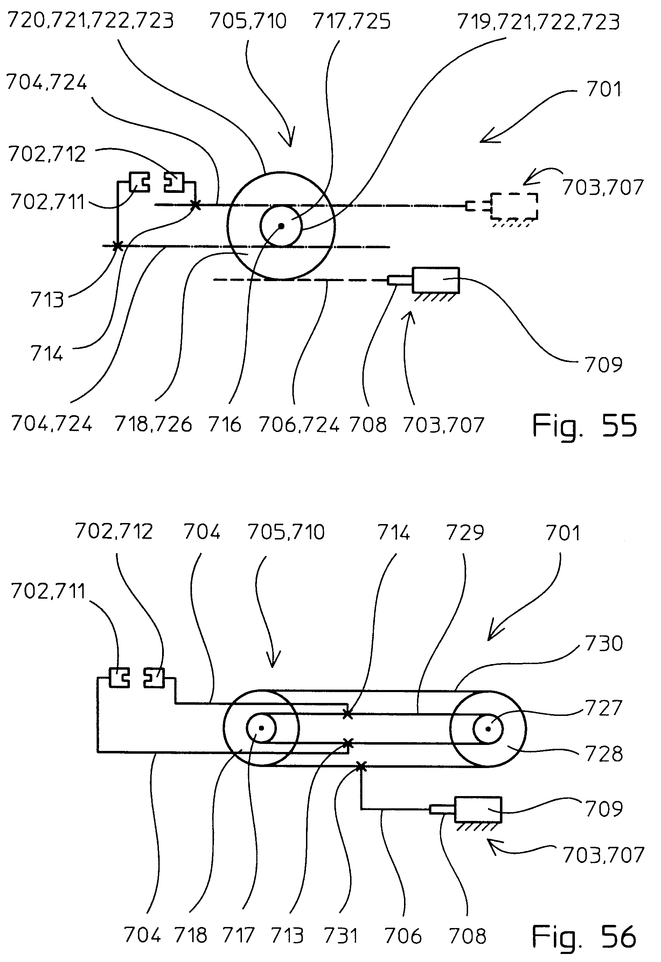

Bei einer Vorrichtung 701 zum Bewegen mindestens eines Bauteils 702, bestehend aus einem Antrieb 703 und einem jeweils über eine Verbindung 704 mit einem Bauteil 702 verbundenen Getriebe 705, sowie einer weiteren Verbindung 706 zwischen dem Getriebe 705 und dem Antrieb 703 ist der Antrieb 703 ein elektromagnetischer Linearantrieb 707 mit einem beweglichen Teil 708 und einem antreibenden Teil 709, und das Getriebe 705 ist ein Untersetzungsgetriebe 710 (Figur 55). Das antreibende Teil 709 ist relativ zu den bewegten Bauteilen 702 ortsfest. Es sind zwei Bauteile 702 vorgesehen, die als Schweißbacken 711, 712 über jeweils eine Befestigung 713, 714 mit dem Getriebe 705 verbunden sind. Der Linearantrieb 707 treibt das Getriebe 705 in einer Untersetzung an, wobei er in einer (gestrichelt eingezeichneten) Position prinzipiell auch ohne Untersetzung verwendet werden könnte. Das Getriebe 705 enthält zwei um die gleiche Achse 716 drehbare, starr miteinander verbundene Scheiben 717, 718 mit unterschiedlichen Durchmessern. Jede Scheibe 717, 718 weist entlang ihres Mantels 719, 720 eine Mitnehmereinrichtung 721 in Form einer als gezahnte Fläche 722 umlaufenden Fläche 723 auf. Die gezahnte Fläche 722 nimmt als Verbindungen 704, 706 dienende Zahnstangen 724 auf. Die Mitnehmereinrichtung 721 der Scheibe 718 mit dem größeren Durchmesser hat Kontakt mit der Verbindung 706 zum Antrieb 703, und die Mitnehmereinrichtung 721 der Scheibe 717 mit dem kleineren Durchmesser hat Kontakt mit den Verbindungen 704 zu den Bauteilen 702. Das Verhältnis der Radien der Scheiben 717, 718 ist das Untersetzungsverhältnis. Es ermöglicht es, einen relativ leistungsarmen und dadurch kostengünstig Linearantrieb 707 mit ausreichender Kraftausbringung einzusetzen. Die Beschleunigung der Schweißbacken 711, 712 ist trotz der Untersetzung noch extrem groß. Die Scheiben 717, 718 sind Zahnräder 725, 726.

Bei dem Getriebe 705 der Figur 56 sind, achsparallel zu den Scheiben 717, 718 versetzt, identisch zwei weitere, starr miteinander verbundene Scheiben 727, 728 vorgesehen. Ein glatter Riemen 729 läuft um die kleinen Scheiben 717, 727 und ein weiterer glatter Riemen 730 läuft um die großen Scheiben 718, 728 um. Die starren Verbindungen 704 sind an den Befestigungen 713, 714 mit dem umlaufenden Riemen 729 verbunden. Die starre Verbindung 706 verbindet das bewegliche Teil 708 des Linearantriebs 707 über die Befestigung 731 mit dem umlaufenden Riemen 730.

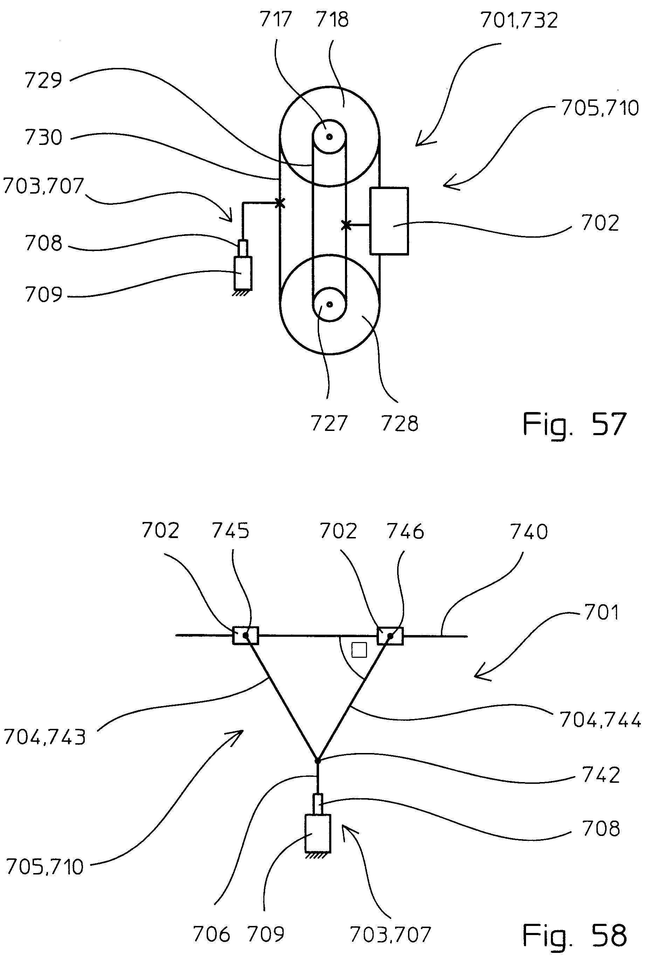

Beim Ausführungsbeispiel der Figur 57 ist die Vorrichtung 701 als Höhenverstellvorrichtung 732 ausgeführt. Das Getriebe 705 ist analog dem Getriebe 705 der Figur 56 ausgestaltet. Die Höhe eines Bauteils 702 wird mittels eines vertikal ausgerichteten elektromagnetischen Linearantriebs 707 verstellt.

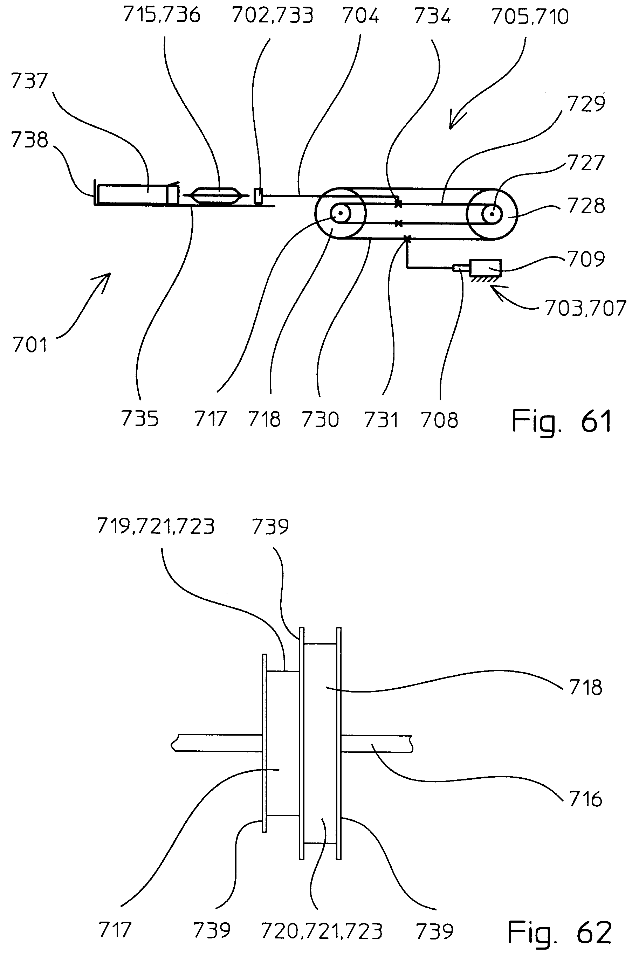

Beim Ausführungsbeispiel der Figur 61 dient ebenfalls ein Getriebe 705 analog Figur 56 dazu, ein Bauteil 702 zu bewegen. Das Bauteil 702 ist hier als Stempel 733 über eine Befestigung 734 mit dem Getriebe 705 verbunden. Der Stempel 733 schiebt einen Gegenstand 715 über eine Unterlage 735. Der Gegenstand ist ein Schlauchbeutel 736.

Der Schlauchbeutel 736 wird in eine offene, liegende Faltschachtel 737 eingeschoben. Die Faltschachtel 737 wird durch eine vertikale Wandung 738 der Unterlage 735 an einem Verrutschen gehindert. Figur 62 zeigt die starr miteinander verbundenen, um die Achse 716 drehbaren Scheiben 717, 718 der Figur 61. Ihre umlaufenden Flächen 723 sind von umlaufenden Begrenzungen 739 zur besseren Führung eines (nicht dargestellten) Riemens begrenzt.

Beim Ausführungsbeispiel der Figur 58 ist das bewegliche Teil 708 eines elektromagnetischen Linearantriebs 707 senkrecht zu einer Führung 740 bewegbar. Entlang der Führung 740 sind zwei Bauteile 702 gegenläufig zueinander verschiebbar. Das bewegliche Teil 708 ist über einen Gelenkmechanismus 741 mit den Bauteilen 702 verbunden. Der Gelenkmechanismus 741 besteht aus einem Gelenk 742, das die Streben 743, 744 mit Gelenken 745, 746 an den Bauteilen 702 verbindet. Insbesondere für kleine Winkel β zwischen der Führung 740 und den Streben 743, 744 sind günstige Kraftübertragungen möglich.

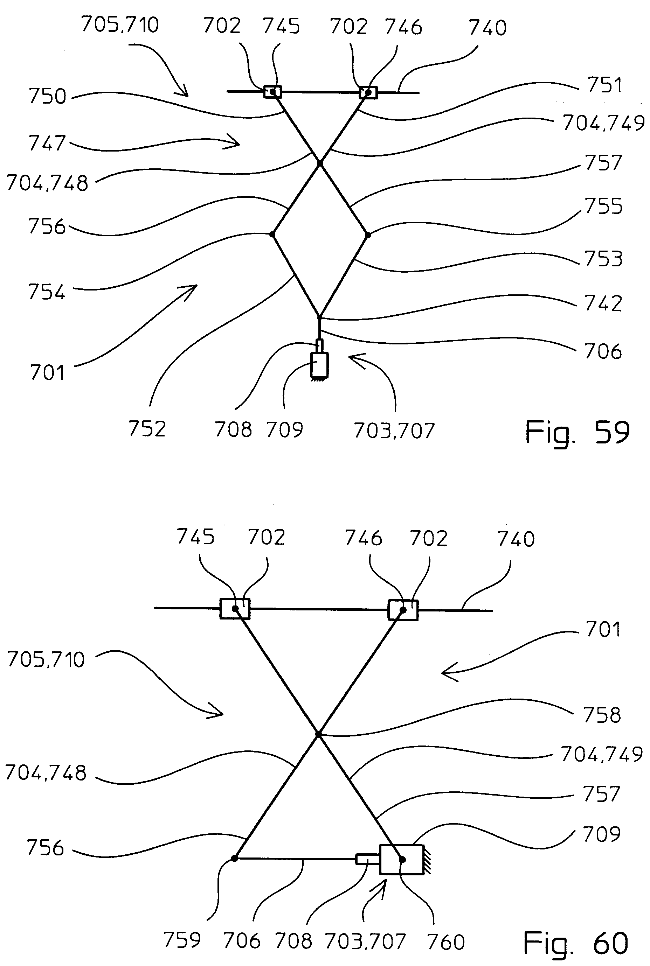

Beim Ausführungsbeispiel der Figur 59 enthält das Getriebe 705 eine Schere 747 mit zwei Scherenbecks 748, 749. Die entlang der Führung 740 verschiebbaren Bauteile 702 sind über Gelenke 745, 746 mit den Scherenspitzen 750, 751 verbunden. Das bewegliche Teil 708 wirkt über das Gelenk 742, die Streben 752, 753 und die Gelenke 754, 755 gegen die Scherenenden 756, 757. Die Gelenke 754, 755 sind zur Abänderung des Untersetzungsverhältnisses entlang der Scherenbecks 748, 749 verstellbar. Die Bewegungsrichtung des beweglichen Teils 708 verläuft senkrecht zur Verschiebungsrichtung der Führung 740.

Beim Ausführungsbeispiel der Figur 60 ist das bewegliche Teil 708 des elektromagnetischen Linearantriebs 707 parallel zur Führung 740 bewegbar. Das antreibende Teil 709 ist ortsveränderbar. Die Scherenbeckes 748, 749 sind über ein Gelenk 758 miteinander verbunden. Während ein Scherenende 756 über ein Gelenk 759 und eine Verbindung 706 mit dem beweglichen Teil 708 verbunden ist, ist das andere Scherenende 757 über ein Gelenk 760 mit dem antreibenden Teil 709 verbunden. Die Vorrichtung 701 ist insbesondere für kleine Verschiebungen der Bauteile 702 geeignet, da hierbei der Linearantrieb 707 nur in geringem Maße vertikal bewegt wird.

**Patentansprüche**

1. Vorrichtung zur Verpackung mit einer Einrichtung zur Wirkung gegen das zu verpackende Produkt, die Verpackung oder einen Teil der Verpackung, dadurch gekennzeichnet, daß ein elektromagnetischer Linearantrieb (3, 44, 51, 60, 63, 66, 67, 104, 205, 305, 405, 507, 603, 707) mit einem beweglichen Teil (4, 105, 206, 306, 406, 508, 604, 708) und einem antreibenden Teil (5, 106, 207, 307, 407, 509, 605, 709) vorgesehen ist, und daß das bewegliche Teil mit der Einrichtung (100) verbunden ist.

2. Vorrichtung zur Verpackung, dadurch gekennzeichnet, daß als Einrichtung (100) eine Einrichtung (2) zur Beschleunigung eines zu verpackendes Produkts vorgesehen ist, daß eine Einrichtung (7) zur Führung des bewegten Produkts vorgesehen ist, und daß das bewegliche Teil (4) des elektromagnetischen Linearantriebs (3, 44, 51, 60, 63, 66, 67) mit einem Stempel (6) verbunden ist.

3. Vorrichtung nach Anspruch 2, dadurch gekennzeichnet, daß der Stempel (6) direkt gegen das Produkt (8) wirkt.

4. Vorrichtung nach Anspruch 2, dadurch gekennzeichnet, daß der Stempel (6) indirekt über die Einrichtung (7) zur Führung des bewegten Produkts (8) auf das Produkt (8) wirkt.

5. Vorrichtung nach Anspruch 2 oder Anspruch 4, dadurch gekennzeichnet, daß die Einrichtung (7) zur Führung des bewegten Produkts (8) das Füllrohr (18) einer vertikalen Schlauchbeutelmaschine (19) ist.

6. Vorrichtung nach Anspruch 1, dadurch gekennzeichnet, daß das bewegliche Teil (105) mit einem Verschließmechanismus (102) als Einrichtung (100) verbunden ist.

7. Vorrichtung nach Anspruch 6, dadurch gekennzeichnet, daß der Verschließmechanismus (102) eine Querbackenverschließeinrichtung (110) mit zwei gegeneinander bewegbaren Querbacken (109) einer vertikalen Schlauchbeutelmaschine ist.

8. Vorrichtung nach Anspruch 7, dadurch gekennzeichnet, daß an der Querbackenverschließeinrichtung (110) zwei Seitenfaltenstecher (116) vorgesehen sind, und daß der Antrieb (103) für die Seitenfaltenstecher (116) mindestens einen elektromagnetischen Linearantrieb (104) enthält.

9. Vorrichtung nach Anspruch 6, dadurch gekennzeichnet, daß das bewegliche Teil (105) des elektromagnetischen Linearantriebs (104) als Beutelfahnenumleger (125) ausgestaltet ist, und daß ein Becherband (126) zur Zuführung von Beuteln (127) mit endseitiger Fahne (128) an den Beutelfahnenumleger (125) vorgesehen ist.

10. Vorrichtung nach Anspruch 6, dadurch gekennzeichnet, daß das bewegliche Teil (105) des elektromagnetischen Linearantriebs (104) mit einem Stempel (129) verbunden ist, daß der Stempel (129) vertikal in einem Füllrohr (124) einer vertikalen Schlauchbeutelmaschine (130) verschiebbar ist, und daß unterhalb des Füllrohres (124) Querbacken (109) vorgesehen sind, die einen mechanischen Widerstand gegen den Stempel (129) bilden.

11. Vorrichtung nach Anspruch 6, dadurch gekennzeichnet, daß das bewegliche Teil (105) des elektromagnetischen Linearantriebs (104) mit einem Laschenschließer (133) verbunden ist, und daß ein Transportband (135) zur Zuführung von offenen Faltschachteln (136) zum Laschenschließer (133) vorgesehen ist.

12. Vorrichtung nach Anspruch 7, dadurch gekennzeichnet, daß das bewegliche Teil (147) eines elektromagnetischen Linearantriebs (148) mit dem antreibenden Teil (106) eines weiteren Linearantriebs (104) verbunden ist, und daß die beweglichen Teile (105, 147) der Linearantriebe (104, 148) in Richtungen verschiebbar sind, die in einer Ebene und senkrecht zueinander verlaufen.

13. Vorrichtung nach Anspruch 6, dadurch gekennzeichnet, daß mindestens eine Leimauftragsdüse (146) entlang eines Transportbandes (135) vorgesehen ist, daß der Leimauftragsdüse (146) in Transportrichtung nachgeordnet eine Verdecklungsstation (150) vorgesehen ist, und daß an der Verdecklungsstation (150) mindestens ein vertikal beweglicher, von einem elektromagnetischen Linearantrieb (104) angetriebener Laschenumleger (151) vorgesehen ist.

14. Vorrichtung nach Anspruch 1, dadurch gekennzeichnet, daß als Einrichtung (100) eine Trenneinrichtung (203) für Verpackungsmaterial vorgesehen ist.

15. Vorrichtung nach Anspruch 14, dadurch gekennzeichnet, daß die Trenneinrichtung (203) ein tangential zu einer Folienbahn (208) beweglicher Bahnschneider (209) ist, und daß der Bahnschneider (209) entlang einer geraden Führung (210) geführt ist.

16. Trennvorrichtung nach Anspruch 14, dadurch gekennzeichnet, daß die Trennenrichtung (203) ein Stechmesser (216) ist, und daß das Stechmesser (216) in einer Querbacke (218) einer Schlauchbeutelmaschine in einer Aussparung (219) verschiebbar ist.

17. Trennvorrichtung nach Anspruch 14, dadurch gekennzeichnet, daß die Trenneinrichtung (203) eine Lochstanze (225) in einer Querbacke (218) einer Schlauchbeutelmaschine ist, daß an der Querbacke (218) eine Kopfnaht (222) erzeugende Schweißfläche (226) und eine Bodennaht (223) erzeugende Schweißfläche (227) vorgesehen sind, und daß die Lochstanze (225) senkrecht zur Schweißfläche (226) für die Kopfnaht (222) und normal durch diese mittels einer Führung (228) geführt ist.

18. Vorrichtung nach Anspruch 1, dadurch gekennzeichnet, daß als Einrichtung (100) eine Einrichtung (303) zum Mitnehmen von Verpackungsmaterial vorgesehen ist.

19. Vorrichtung nach Anspruch 18, dadurch gekennzeichnet, daß zwei Linearantriebe (305, 311) vorgesehen sind, wobei das antreibende Teil (307) des einen Linearantriebs (305) starr mit dem beweglichen Teil (312) des anderen Linearantriebs (311) verbunden ist, und wobei die beweglichen Teile (306, 312) der Linearantriebe (305, 311) in Richtungen verschiebbar sind, die in einer Ebene und senkrecht zueinander verlaufen.

20. Vorrichtung nach Anspruch 18 oder Anspruch 19, dadurch gekennzeichnet, daß als Einrichtung (303) zum Mitnehmen des Verpackungsmaterials ein Transportband (308) vorgesehen ist, daß am Transportband (308) Mitnahmeflächen (309) vorgesehen sind, und daß das bewegliche Teil (306) eines Linearantriebs (305) gegen eine Mitnahmefläche (309) und in Transportrichtung des Transportbandes (308) wirkt.

21. Vorrichtung nach Anspruch 20, dadurch gekennzeichnet, daß der Linearantrieb (305) über eine elektrische Leitung (315) mit einem Rüttelfrequenzgeber (316) verbunden ist.

22. Vorrichtung nach Anspruch 18, dadurch gekennzeichnet, daß die Einrichtung (303) zum Mitnehmen des Verpackungsmaterials (302) ein Folienabzug (317) einer vertikalen Schlauchbeutelmaschine (318) ist, der gegen das Füllrohr (319) wirkt, und daß das bewegliche Teil (306) des Linearantriebs (305) parallel zur Mittelachse (320) des Füllrohrs (319) bewegbar ist.

23. Vorrichtung nach Anspruch 18, dadurch gekennzeichnet, daß als Einrichtung (303) zum Mitnehmen des Verpackungsmaterials (302) die Spitze (329) eines Zuschnittvereinzelners (330) vorgesehen ist, die mit dem beweglichen Teil (306) mechanisch verbunden ist, und daß die Spitze (329) gegen einen Stapel (331) von ebenen Kartonzuschnitten (332) beweglich ist.

24. Vorrichtung nach Anspruch 18, dadurch gekennzeichnet, daß als Einrichtung (303) zum Mitnehmen des Verpackungsmaterials (302) ein Etikettenmitnehmer (341, 342) vorgesehen ist.

25. Vorrichtung nach Anspruch 1, dadurch gekennzeichnet, daß eine Einrichtung (404) zur Führung eines bewegten Produktes (402) vorgesehen ist, daß die Einrichtung (100) eine Einrichtung (403) zur Bewegung des zu verpackenden Produkts (402) ist, und daß das bewegliche Teil (406) an der Einrichtung (404) zur Führung bewegbar ist.

26. Vorrichtung nach Anspruch 25, dadurch gekennzeichnet, daß das bewegliche Teil (406) mit einem Stempel (408, 419, 420) verbunden ist, und der Stempel (408, 419, 420) direkt gegen das Produkt (402) wirkt.

27. Vorrichtung nach Anspruch 25 oder Anspruch 26, dadurch gekennzeichnet, daß die Einrichtung (404) zur Führung des bewegten Produkts (402) ein Transportband (409, 410) ist.

**28.** Vorrichtung nach Anspruch 26 und Anspruch 27, dadurch gekennzeichnet, daß der Stempel (408) quer zum Transportband (411) und zu einer Reihe von parallel zueinander verlaufenden Transportbändern (412, 413) bewegbar ist.

**29.** Vorrichtung nach Anspruch 26 und Anspruch 27, dadurch gekennzeichnet, daß der Stempel (408) in einem Füllschacht (429) höhenverstellbar ist, daß eine Höhenmeßeinrichtung (439) zur Messung der Füllhöhe im Füllschacht (429) vorgesehen ist, und daß eine Produktzuführeinrichtung (432) oberhalb des Füllschachtes (429) und am Füllschacht (429) mündet.

**30.** Vorrichtung nach Anspruch 25, dadurch gekennzeichnet, daß als Einrichtung (404) zur Führung des bewegten Produkts (402) das verschweißte Ende (486) eines Folienschlauchs (443) an einer vertikalen Schlauchbeutelmaschine vorgesehen ist, daß ein Produktabstreifer (487) mit dem beweglichen Teil (406) verbunden ist, und daß die Bewegungsrichtung des Produktabstreifers (487) zumindest teilweise oder komponentenweise am zusammengedrückten Folienschlauch (443) entlang nach unten verläuft.

**31.** Vorrichtung nach Anspruch 1, dadurch gekennzeichnet, daß die Einrichtung (100) eine Volumendosiereinrichtung (504) mit einem Verschiebemechanismus (505) ist.

**32.** Vorrichtung nach Anspruch 31, dadurch gekennzeichnet, daß die Volumendosiereinrichtung (504) mindestens eine Dosierkammer (510, 511) enthält, die unterhalb mindestens eines Auslasses (512, 513) des Vorratsgefässes (503) mit dem Verschiebemechanismus (505) verschiebbar ist, daß die Dosierkammer (510, 511) in Verschieberichtung durch mindestens einen verschiebbaren Verschließkörper (514, 515) begrenzt ist, wobei der Verschließkörper (514, 515) verschiebbar den Auslaß (512, 513) verschließt oder freigibt, und daß unter dem Verschiebemechanismus (505) ein Verschlußteil (516) mit mindestens einem in Verschieberichtung zum Auslaß (512, 513) versetzten Durchlaß (517) vorgesehen ist.

**33.** Vorrichtung nach Anspruch 32, dadurch gekennzeichnet, daß ein mit einem beweglichen Teil (508) eines elektromagnetischen Linearantriebs (507) verbundener Stempel (525) von oben in eine Dosierkammer (510) hinein bewegbar ist.

**34.** Vorrichtung nach Anspruch 1, dadurch gekennzeichnet, daß mindestens eine Führung (607, 608) für das bewegliche Teil (604) mit dem beweglichen Teil (604) verbunden ist, und daß als Führung (607, 608) ein Gleitlager (609, 610) mit mindestens einer beschichteten oder besonders behandelten, abriebsmindernden Gleitfläche (615) an der Führung (607, 608) und/oder am entlang der Führung (607, 608) gleitenden Element (602) vorgesehen ist.

**35.** Vorrichtung nach Anspruch 1, dadurch gekennzeichnet, daß am elektromagnetischen Linearantrieb (707) ein über eine Verbindung (706) mit einem zu bewegenden Bauteil (702) oder Gegenstand (715) verbundenes oder verbindbares Getriebe (705) vorgesehen ist, und daß das Getriebe (705) ein Untersetzungsgetriebe (710) ist.

**36.** Vorrichtung nach Anspruch 35, dadurch gekennzeichnet, daß das Getriebe (705) zwei um die gleiche Achse (716) drehbare, starr miteinander verbundene Scheiben (717, 718) unterschiedlichen Durchmessers enthält, daß jede Scheibe (717, 718) entlang ihres Mantels (719, 720) eine Mitnehmereinrichtung (721) zum Mitnehmen einer zumindest tangential am Mantel (719, 720) anliegenden Verbindung (704, 706) aufweist, daß die Mitnehmereinrichtung (721) der Scheibe (718) mit dem größeren Durchmesser Kontakt mit der Verbindung (706) zum Antrieb (703), und die Mitnehmereinrichtung (721) der Scheibe (717) mit dem kleineren Durchmesser Kontakt mit der Verbindung (704) zum Bauteil (702) oder Gegenstand (715) hat.

**37.** Vorrichtung nach Anspruch 36, dadurch gekennzeichnet, daß die Mitnehmereinrichtung (721) eine umlaufende Fläche (723) ist, daß achsparallel zu den Scheiben (717, 718) versetzt identisch zwei weitere, starr miteinander verbundene Scheiben (727, 728) vorgesehen sind, wobei ein Riemen (729) um die kleinen Scheiben (717, 727) und ein weiterer Riemen (730) um die größeren Scheiben (718, 728) umläuft.

8,13   6   4   2,3,100   1

7,9

10

11

14   12   17   16   15   5

Fig. 1

EP 0 764 584 A2

Fig. 2

Fig. 3

2,3,5,100

4,20

33

8

32

4,20

5,35

37

39

20

40

1

6

8

33a

38

20

34

36

7,18

31

39

37

20

40

Fig. 4

Fig. 5

Fig. 6

Fig. 7

Fig. 8

62   61   70   6,68   2,66,100

69

71

55

7,65

2,67   6

Fig. 9

EP 0 764 584 A2

31

108    100,102,107    101

105

103,104

109    106

109    108

Fig. 10

121    100,101,110

122    118

120    117

119    120

124

105    103,104,106

105

116

103,104,106   116   109   123   100,102    Fig. 11

Fig. 12

Fig. 13

Fig. 14

Fig. 15

Fig. 16

Fig. 17

Fig. 18

202,208    204,205,206,207    201,209    100,203,214

211

210

212  213

Fig. 19

202,208,220    223  218  219    100,203,216    201

204,205

221

227

226

222    223 224    217    206    207

Fig. 20

226,227

201

232

231

218

204,205

202,220

228,229

207

206

221

100,203,225,230

231

232

226,227   217

Fig. 21

Fig. 22

Fig. 23

Fig. 24

332    330

304,305

302,331    306

100,303,329    301    307    Fig. 25

301    336    336    301

336    336

333,334

304,305,306,307

303,335    304,305,306,307    303,335    Fig. 26

312,313   306   307   304,305   304,311   301

340

100,303

337

302,332

338

339

Fig. 27

345   343 100,303,341 304,305   301

306

307

344

100,303,342

348

301   306   307 304,305 346 343 347   Fig. 28

325  353  350  325  351

302,352

100,303,349

301

304,311

306

307

313

304,305  312

Fig. 29

EP 0 764 584 A2

401

402

404,410

404,409

402

408

100,403,405    406    407    402

Fig. 30

401    402    404,413

402

408

404,412

100,403,405

404,411    402    407    406

Fig. 31

Fig. 32

Fig. 33

Fig. 34

401

404,435

402,436

A

437

407

406

100,403,405

Fig. 35

402

404,435

406

407

100,403,405

Fig. 36

Fig. 37

Fig. 38

401

405,406,407

403,449

449    453    454    452

## Fig. 39

458    459    404,455    407

57

456    460    406    405

## Fig. 40

465　466　401　402　462

463

402

405,407　404,461　406,464　406,464　405,407

Fig. 41

EP 0 764 584 A2

51

Fig. 42

475

402,471

408

Fig. 43

402    404,443    486    487

493

493

488

488

489

492

490

490

491

100,403,405    407  406    Fig. 45

483    407,485    484    401    482    481    479    402,471

404,467

476

402,471

478

480

468

478

408   100,403,405,406   477

EP 0 764 584 A2

Fig. 44

502  513  511  501

503

512

519

510

514

100,504

505

506,507,509

508

517  518  516  515

Fig. 46

502  514  511  501

100,504

512

510

508

518

406,407,409

516  518  505

Fig. 47

501

506,507,509

508

522

100,504

521

508

506,507,509

524

529

526

528

525

510

514

521

516

517

523

524

518

530

527

Fig. 48

601,606

615,617

615,618

602,613

602,613

607,609

608,610

604

603

611,613

612,613

614,615

614,615

605

Fig. 49

620    614,615

611

613

614,615    620    Fig. 50

619    614,615

611

613

619    614,615    Fig. 51

609

610

602,604,605

603

601

611

612

615

615

621

Fig. 52

615    602,604,605

603

611    615

612

621    Fig. 53

615    609    623    601

602,604,605

603

607,622    Fig. 54

Fig. 55

Fig. 56

729

717    718                    701,732

705,710

730

703,707

708                                          702

709

727    728                    Fig. 57

702    745    702    746    740

701

704,743

704,744

742

705,710

708

706    709    703,707    Fig. 58

Fig. 59

Fig. 60

715,736   702,733   704   734   705,710

737

738

729

727

728

709

703,707

701

735   717   718   730   731   708

Fig. 61

719,721,723   739

718

716

717   739   720,721,723   739

Fig. 62